(19) Europäisches Patentamt
European Patent Office
Office européen des brevets

(11) EP 1 311 989 B1

(12) EUROPÄISCHE PATENTSCHRIFT

(45) Veröffentlichungstag und Bekanntmachung des Hinweises auf die Patenterteilung:
**13.08.2008 Patentblatt 2008/33**

(21) Anmeldenummer: **01953803.2**

(22) Anmeldetag: **27.06.2001**

(51) Int Cl.:
***G06F 17/30*** *(2006.01)*

(86) Internationale Anmeldenummer:
**PCT/DE2001/002356**

(87) Internationale Veröffentlichungsnummer:
**WO 2002/001407 (03.01.2002 Gazette 2002/01)**

(54) **VERFAHREN ZUR AUTOMATISCHEN RECHERCHE**

AUTOMATIC SEARCH METHOD

PROCEDE DE RECHERCHE AUTOMATIQUE

(84) Benannte Vertragsstaaten:
**DE ES FR GB**

(30) Priorität: **28.06.2000 DE 10031351**

(43) Veröffentlichungstag der Anmeldung:
**21.05.2003 Patentblatt 2003/21**

(73) Patentinhaber: **Guru Technologies GmbH**
**81679 München (DE)**

(72) Erfinder: **LEITERMANN, Thomas**
**81373 München (DE)**

(74) Vertreter: **Beck, Alexander et al**
**Hansmann & Vogeser**
**Patent- und Rechtsanwälte**
**Postfach 1164**
**82301 Starnberg (DE)**

(56) Entgegenhaltungen:
**EP-A- 0 601 759**
**US-A- 5 297 039**
**US-A- 5 893 092**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 311 989 B1

Printed by Jouve, 75001 PARIS (FR)

## Beschreibung

Die vorliegende Erfindung betrifft ein Verfahren zur automatischen Recherche nach Dokumenten, die in einem Datenverarbeitungssystem gespeichert sind, durch einen Benutzer.

Die Entwicklung des Internets erlaubt es erstmals jedermann, auf eine nahezu unermeßliche Menge von Informationen zuzugreifen. Durch die rapide Zunahme der im Internet zur Verfügung gestellten Informationen wird es jedoch für den Benutzer immer schwieriger, die für ihn tatsächlich relevanten Informationen herauszusuchen. Die bisher üblichen Suchmaschinen liefern aufgrund einer Suchanfrage, bei der bestimmte Ausdrücke mit entsprechenden logischen Verknüpfungen verbunden werden, diejenigen Texte, in denen diese Ausdrücke in ihrer entsprechenden logischen Verknüpfung vorhanden sind. Schon beim derzeitigen Informationsumfang des Internet werden bei solchen Trefferlisten jedoch häufig bereits weit über 1000 Treffer angezeigt. Für den Benutzer ist es nahezu unmöglich, die entsprechenden Trefferanzeigen vernünftig zu evaluieren. Hinzu kommt, daß sehr häufig Dubletten oder mehrfache Treffer in der selben Liste angezeigt werden, sei es, weil die Dokumente unter verschiedenen Internetadressen zugänglich sind, sei es weil die Dokumente von der Suchmaschine auf verschiedenen Wegen gefunden werden.

Aufgabe der vorliegenden Erfindung ist es daher, ein Verfahren zur automatischen Recherche nach Dokumenten zu schaffen, die in einem Datenverarbeitungssystem gespeichert sind, wobei auch sehr große Datenmengen für den Benutzer automatisch so vorselektiert werden sollen, daß es dem Benutzer möglich wird, die für ihn tatsächlich relevante Information mit vertretbarem Aufwand zu finden, wobei das System auch "zukunftssicher" sein soll, also auch einem weiteren Wachstum der im Internet vorhandenen Informationen gewachsen sein soll.

Im konventionellen Suchmodell des Information retrieval stellt der Benutzer eine Abfrage, die mit einem Dokument oder dessen Repräsentant (Klasse, Schlagwörter) verglichen wird.
Dieser Ähnlichkeitsvergleich wurde von Systementwicklern bisher auf beiden Seiten zu optimieren versucht. Dabei wurde versucht auf der einen Seite das Dokument und auf der anderen Seite die Anfrage möglichst gut zu repräsentieren, als auch das Vergleichsverfahren zu optimieren.

Der hierzu nächstgelegene Stand der Technik ergibt sich einerseits aus der US-A-5,297,039. Diese offenbart ein Verfahren zur automatischen Verschlagwortung von Texten durch die automatische Herstellung sogenannter "Analysenetzwerke", die Elemente und Beziehungen dieser Elemente aus dem Text umfassen. Gemäß dieser Entgegenhaltung werden diese Analysenetzwerke durch Synonyme, Ähnlichkeiten und einen Thesaurus ergänzt. Auf diese Weise kann zwar eine automatische Verschlagwortung erzielt werden, diese erleichtert dem Rechercheur aber noch lange nicht die schnelle Übersicht über das Recherchenergebnis und erlaubt auch nicht, verschieden umfangreiche beziehungsweise lange Textausschnitte auszuwählen und darzustellen.

Weiterer diesbezüglicher Stand der Technik ergibt sich aus der europäische Patentanmeldung EP-A-0601759. Dieser Stand der Technik erlaubt dem Rechercheur, eine Sammlung von Dokumenten nach einem bestimmten Satz Dokumente zu durchsuchen, ohne, dass er Suchworte eingeben muss. Hierzu dient bei diesem Stand der Technik ein automatischer Abstrahierungsalgorithmus, der wiederum eine automatische Verschlagwortung der Dokumente durchführt und darüber hinaus die Dokumente abhängig von den gefundenen Schlagworten zu bestimmten Gruppen zusammenstellt und diese Gruppen dem Benutzer anhand bestimmter Schlagworte zur Auswahl vorstellt. Auch hier besteht jedoch nicht die Möglichkeit, "intuitiv" zu suchen, das heißt bei der Auswahl der Textdokumente sukzessive von vielen kurzen Textabschnitten zu wenigen längeren Textabschnitten voranzuschreiten.

Mit dem erfindungsgemäßen Verfahren wird demgegenüber ein neuer Ansatz realisiert, der die Vergleichsoperation zwischen Anfrage und Dokument auf den Benutzer überträgt.

Der Benutzer muß keine Suchabfrage formulieren, sondern stöbert im Prinzip in den Dokumenten, indem er ihre Repräsentanten, die ihm vom System dargeboten werden, vergleicht und die passenden auswählt.

Die Repräsentanten der Dokumente sind Suchterme, Textausschnitte oder deren Synonyme. Sie spannen als Knoten ein semantisches Netz auf, die Kanten werden durch vielfältige Relationen (Konkretisierungsrelationen: Verbindung von kürzeren mit längeren Suchtermen, Thesaurusrelationen, Verknüpfungsrelationen) zwischen ihnen realisiert.

Unter semantischem Netz versteht man erfindungsgemäß eine Menge von sprachlichen Konzepten, die in einem Netzwerk organisiert sind, und dort die Knoten bilden. Die sprachlichen Konzepte oder Knoten sind durch Kanten verbunden, die durch inhaltlich-sprachliche Relationen zwischen jenen realisiert werden.

Das semantische Netz ist als Wissensbasis des Systems in einer homogenen Datenbasis abgelegt, wobei die Suchterme oder Knoten die Objekte darstellen, die Kanten oder Relationen durch deren Attribute abgebildet werden.

Bei jeder Bewegung entlang einer Kante des Netzes werden Datenbanken über ein Programm abgefragt und dem Benutzer als Ergebnis der Abfrage ein neuer Knoten in der Ausgabeeinheit des Programms präsentiert.

Die Datenbasis ist so organisiert, daß sich der Benutzer nach mehrmaligen Auswahlschritten einer bestimmten Treffermenge von Suchergebnissen annähert. Dabei bewegt er sich von einem eher allgemeinen Ausgangspunkt zu spezielleren Suchtermen und endet schließlich bei den Dokumentprofilen, den unmittelbarsten Repräsentanten der Dokumente, die eine Verknüpfung mit diesen selbst enthalten.

Eine weitere Besonderheit der Datenbasis ist es, die Einrichtung von Domänen zu unterstützen. Diese stellen personalisierte Ausschnitte aus der gesamten verfügbaren Datenbasis (im folgenden auch externe Daten genannt) dar, die für bestimmte Zugriffspersonen an einem bestimmten Speicher zur Verfügung gestellt werden und im folgenden auch interne Daten genannt werden. Dies geschieht, indem die betreffenden Dokumente zusammen mit ihren Repräsentanten auf den logischen Zielspeicher kopiert werden, auf den die Domain-Berechtigten zugreifen. Dabei wird die gesamte Such-Infrastruktur eines Dokumentes mit übernommen, so daß dieses im Bereich der Domäne genau so suchbar ist, wie in der Gesamtdatenbasis. Ein Beispiel für die Einrichtung von Domänen ist die Archivierung von Dokumenten.

Die vorliegede Erfindung präsentiert dem Benutzer mit Hilfe von Computern und Datenbanksystemen die Dokumentenrepräsentanten in einer suchgerechten Weise und unterstützt die Navigation des Benutzers im semantischen Netz.

Es ist dabei besonders bevorzugt, daß Extrakte der Dokumente, die für verschiedene Dokumente zutreffen, jeweils nur einmal angezeigt werden. Auf diese Weise werden Dubletten und Mehrfachanzeigen in der Trefferliste sicher vermieden.

Es ist dabei weiter bevorzugt, daß diejenigen Extrakte der Dokumente, die für verschiedene Dokumente zutreffen, jeweils mit sämtlichen dieser Dokumente verknüpft sind. Auf diese Weise kann über einen einzigen Treffer auf eine Vielzahl von Dokumenten zugegriffen werden.

Erfindungsgemäß ist es besonders bevorzugt, daß im Verlauf der automatischen Recherche die jeweilige Suchanfrage zunehmend spezifiziert wird, und dadurch weniger Dokumente angezeigt werden, von denen jedoch entsprechend umfangreichere Extrakte dargestellt werden. Auf diese Weise bleibt der Umfang der vom Benutzer zu verarbeitenden Information immer etwa gleich, dennoch wird die Suche zunehmend spezifischer und endet schließlich mit den Informationen, die der Benutzer tatsächlich wünscht.

Weiter ist es bevorzugt, daß die Suchanfrage stets Suchobjekte enthält, die in Form von Suchtermen oder Verzeichnissen in Matrix- oder Netzplanform aufgebaut sind, die mit Dokumentenprofilen und über diese mit den Dokumenten selbst logisch verknüpft sind. Auf diese Weise kann der Benutzer den Zugang zu den Informationen gemäß seinen Präferenzen wählen (kann sichergestellt werden, daß der Benutzer umfassend über die für ihn relevanten Informationen informiert wird.)

Es ist dabei weiter besonders bevorzugt, daß im Lauf der Zeit, beispielsweise bei Aufnahme oder Löschung von Dokumenten in dem Datenverarbeitungssystem, die logischen Verknüpfungen zwischen den Suchobjekten und den Dokumentenprofilen oder Dokumenten geändert werden, während die Suchobjekte unverändert bleiben. Auf diese Weise kann leicht eine regelmäßige Überwachung bestimmter Sachgebiete auf neue Informationen erfolgen, beispielsweise bei einer Patentrecherche in bestimmten Gebieten der Technik kann die Recherche regelmäßig wiederholt werden, und es werden dann stets lediglich die neu hinzugekommenen Dokumente angezeigt.

Vorzugsweise wird die Anzeigefunktionen für das Dokument anhand des Dokumentenprofils ausgeführt, die Extrakte des Dokuments, dokumentencharakteristische Angaben, Systemangaben und eine logische Verknüpfung zu dem Dokument enthalten, und das Dokument selbst nur dann aus dem Datenverarbeitungssystem abgerufen, wenn es tatsächlich vom Benutzer angefordert wird. Auf diese Weise können die zwischen dem Benutzer und dem Datenverarbeitungssystem fließenden Daten optimiert werden.

Weiter ist es bevorzugt, daß die Suchobjekte untereinander hierarchisch verknüpft sind, so daß bei Auswahl oder Anzeige eines Suchobjekts automatisch die zugehörigen, in dem Datenverarbeitungssystem vorhandenen konkreteren Suchobjekte angezeigt werden, so daß der Benutzer aus diesen wiederum ein oder mehrere Suchobjekte auswählen kann, deren untergeordnete, weiter konkretisierte Suchobjekte sodann angezeigt werden.

Es ist dabei weiter besonders bevorzugt, daß die Suchobjekte untereinander verknüpft sind, wenn sie inhaltlich zusammengehören, wobei folgende Verknüpfungen vorgesehen sind: Übergeordnetes, verwandtes und untergeordnetes Suchobjekt. Auf diese Weise kann der Benutzer im Gegensatz zu den Suchverfahren gemäß dem Stand der Technik auch dann eine erfolgreiche Suche durchführen, wenn ihm nicht sämtliche für die Suche erforderliche Fachausdrücke bekannt sind.

Die Suche kann noch weiter erleichtert werden, indem synonyme Begriffe zu einem Suchobjekt zusammengefaßt werden.

Des weiteren wird der Komfort des erfindungsgemäßen Systems weiter verbessert, wenn der Benutzer zusätzliche Nebenbedingungen eingeben kann, durch die die Suche in allen Suchschritten durchgängig eingeschränkt wird. Auf diese Weise kann beispielsweise bei einer Patentrecherche nur vor dem Prioritätstag veröffentlichtes Material ausgewählt werden.

Im folgenden wird ein Ausführungsbeispiel der Erfindung anhand der in der Anlage beigefügten Zeichnungen näher erläutert. Es zeigt:

Fig. 1 ein Modell des erfindungsgemäßen Gesamtsystems;

Fig. 2 die erfindungsgemäßen Teilmengenbeziehungen der Suchobjekte;

Fig. 3 die erfindungsgemäße Eigenschaften der Suchterme beim Übergang von einem Glied einer Kette von durch die Konkretisierungsrelation verbundenen Suchtermen zum anderen;

Fig. 4 eine Detailansicht der erfindungsgemäßen Teilmengenbeziehungen der Suchterme;

Fig. 5 die erfindungsgemäße Teilmengenrelation zwischen zwei Suchtermen in der Einzelansicht;

Fig. 6 die erfindungsgemäße Teilmengenrelation zwischen zwei Suchtermen und den umfassenden Suchobjekten (Dokumentprofil, Dokument);

Fig. 7 die erfindungsgemäße Konkretisierungsrelation zwischen Suchtermen untereinander und des Suchobjekts, als umgekehrte Teilmengenrelation;

Fig. 8 die erfindungsgemäße Gesamtansicht einer Kette nach Fig. 7 mit den zusätzlichen Suchobjekten Dokumentprofil und Dokument zur Demonstration der Funktion und Wirkung der erfindungsgemäßen Textblende;

Fig. 9 die Funktion der erfindungsgemäßen Textblende in der Umsetzung des Ausgabefensters der Benutzeroberfläche am Rechner des Benutzers; der unterschiedliche Konkretisierungsgrad der dargestellten Suchterme wird durch unterschiedliche Einrückungsgrade sowie unterstützend für die Zeichnung durch eingeklammerte Kommentare wiedergegeben;

Fig. 10 die Auswirkung der Selektion einzelner Suchterme durch den Benutzer über Eingabeoptionen am Rechner auf die Repräsentation des semantsichen Suchraumes;

Fig. 11 das erfindungsgemäße Durchlaufen der verschiedenen Konkretisierungsstufen während eines Suchvorgangs, wobei dem Benutzer bei jedem Schritt Suchterme im Ausgabefenster der Benutzeroberfläche präsentiert werden, aus denen er durch Benutzereingaben einzelne auswählt und für den nächsten Konkretisierungsschritt einbezieht, andere dagegen nicht;

Fig. 12 die möglichen Beziehungen zwischen konkretisiertem Suchterm und konkretisierendem Suchterm;

Fig. 13 die Verzweigungsmöglichkeiten durch die erfindungsgemäße Konkretisierungsrelation bezogen auf ein Suchwort;

Fig. 14 einen Vergleich herkömmlicher Suchsysteme mit den erfindungsgemäßen Suchverfahren bezüglich der Anzahl der vom Benutzer jeweils zu evaluierenden Suchergebnisse;

Fig. 15 die erfindungsgemäße Thesaurusrelationen in zur Darstellung der Konkretisierungsrelation in zu Fig. 2 analoger Darstellung;

Fig. 16 die entsprechenden Verknüpfungen bei der erfindungsgemäßen Thesaurusrelation im semantischen Suchraum;

Fig. 17 die Unterschiede zwischen Konkretisierungsrelation und Thesaurusrelation;

Fig. 18 die erfindungsgemäße Einführung unthematischer Nebenbedingungen bei der Suche und ihre Einwirkung auf die Suchstruktur;

Fig. 19 die erfindungsgemäße Einführung thematischer Nebenbedingungen durch die Verknüpfungsrelation bei der Suche und ihre Einwirkung auf die Suchstruktur;

Fig. 20 bis 27 den Ablauf erfindungsgemäßer Suchverfahren unter Verwendung aller erfindungsgemäß zur Verfügung gestellter Nebenbedingungen;

Fig. 28 eine Übersicht über die erfindungsgemäßen Spezialsuchverfahren;

Fig. 29 die erfindungsgemäßen Möglichkeiten zur Änderung der Themenbreite;

Fig. 30 die Funktion der erfindungsgemäßen Verfahren zur Veränderung der Themenbreite;

Fig. 31 ein Anwendungsbeispiel einer erfindungsgemäßen Internet-Suche (Bildschirmdarstellung in Netscape);

Fig. 32 ein Beispiel für eine erfindungsgemäße Problemkette (Produktentwicklung Massen-Gebrauchsgüter);

Fig. 33 eine weitere erfindungsgemäße Problemkette (Vermarktung Massen-Gebrauchsgüter);

Fig. 34 das Modell eines Klassifikationssystems gem. dem Stand der Technik;

Fig. 35 ein Teilmodell der Erfindung zum Vergleich mit einem Klassifikationssystem gem. Fig. 34;

Fig. 36 den Vergleich eines Suchbaums gem. dem Stand der Technik mit einem erfindungsgemäßen Suchbaum;

Fig. 37 das Modell eines Verschlagwortungssystems gem. dem Stand der Technik;

Fig. 38 ein Teilmodell des erfindungsgemäßen Verfahrens zum Vergleich mit einem Verschlagwortungssystem der Fig. 37;

Fig. 39 den Suchweg bei einem Verschlagwortungssystem gem. dem Stand der Technik;

Fig. 40 die möglichen Suchwege mit dem erfindungsgemäßen Verfahren;

Fig. 41 die praktische Anwendung der möglichen Suchwege der Fig. 40;

Fig. 42 ein Beispiel für den Weg zum Suchergebnis gem. der vorliegenden Erfindung;

Fig. 43 die Systemumgebung für ein Ausführungsbeispiel der vorliegenden Erfindung;

Fig. 44 ein Modell für die erfindungsgemäße Konkretisierungsrelation;

Fig. 45 ein Beispiel für eine erfindungsgemäß unzulässige Zuordnung von Verbindungspfaden;

Fig. 46 die korrekte Zuordnung der Verbindungspfade;

Fig. 47 ein Modell für die erfindungsgemäße Spezialisierungsrelation;

Fig. 48 ein Modell für die erfindungsgemäße Erweiterungsrelation;

Fig. 49 ein Modell für die erfindungsgemäße Verallgemeinerungsrelation;

Fig. 50 ein Modell für die erfindungsgemäße Verknüpfungsrelation;

Fig. 51a und b ein Modell der erfindungsgemäßen Attribute der Datenobjekte;

Fig. 52 die Legende zu den Figuren 51a und 51b;

Fig. 53 ein Verzeichnis der erfindungsgemäßen Attribute;

Fig. 54 eine Darstellung in Tabellenform einer erfindungsgemäßen Suchlistendatei.

Fig. 55 eine Darstellung einer erfindungsgemäßen Thesaurusdatenbank/-datei in Tabellenform;

Fig. 56 eine Darstellung einer erfindungsgemäßen Resourcendatenbank/-datei in Tabellenform;

Fig. 57 eine Darstellung einer erfindungsgemäßen Indexdatenbank/-datei in Tabellenform;

Fig. 58 ein Beispiel für ein erfindungsgemäßes Dokumentenprofil;

Fig. 59 ein Beispiel für die erfindungsgemäße Struktur einer Dokumentendatenbank/-datei;

Fig. 60 ein Beispiel für eine erfindungsgemäße Benutzeroberfläche;

Fig. 61 eine erfindungsgemäße Einschränkungsmaske zur Spezifizierung der Suche;

Fig. 62 ein Funktionsmodell für den Grobablauf der erfindungsgemäßen Suche nach externen Informationen;

Fig. 63 ein Funktionsmodell für den Grobablauf für die erfindungsgemäße Suche nach internen Informationen;

Fig. 64 ein Funktionsmodell für den Grobablauf einer Serversuche gemäß dem Stand der Technik;

Fig. 65 zeigt ein Datenflußdiagramm für die erfindungsgemäße Spezifizierung bei der Vorauswahl;

Fig. 66 zeigt ein Datenflußdiagramm für die erfindungsgemäße Spezifizierung bei der Hauptauswahl;

Fig. 67 zeigt ein Datenflußdiagramm für die erfindungsgemäße Spezifizierung bei der Endauswahl;

Fig. 68 ein Datenflußdiagramm für die erfindungsgemäße Archivierung;

Fig. 69 die Legende zu den Figuren 65 bis 68;

Fig. 70 ein Strukturdiagramm einer erfindungsgemäßen Vorauswahl;

Fig. 71 ein Strukturdiagramm der erfindungsgemäßen Prozeßsteuerung in der Hauptauswahl;

Fig. 72 ein Prozeßmodell für die erfindungsgemäße Vorauswahl;

Fig. 73 ein Prozeßmodell für die erfindungsgemäße Datenbankaktualisierung;

Fig. 74 ein Prozeßmodell für die erfindungsgemäße Suchlistenselektion;

Fig. 75 ein Prozeßmodell für die erfindungsgemäße Funktion "Einschränken";

Fig. 76 ein Prozeßmodell für die erfindungsgemäßen Funktionen Verknüpfen, Einschließen und Ausschließen;

Fig. 77 ein Prozeßmodell für die erfindungsgemäße Hauptauswahl;

Fig. 78 ein Prozeßmodell für eine weitere erfindungsgemäße Hauptauswahl;

Fig. 79 ein Prozeßmodell für eine erfindungsgemäße Endauswahl;

Fig. 80 ein Prozeßmodell für die erfindungsgemäße Archivierung;

Fig. 81 die Legende zu den Figuren 73 bis 80;

Fig. 82 ein Schnittstellenmodell für das erfindungsgemäße Voreinschränken.

Das Gesamtsystem, in dem das erfindungsgemäße Verfahren angewendet werden soll, hält für den Benutzer Dokumente vor und stellt sie ihm zur Suche und zum Kopieren umsonst oder gegen Entgelt, auf eigenem oder fremdem Server bereit.

Jedes Dokument verfügt über ein Dokumentprofil, über das auf das Dokument zugegriffen werden kann. Dieses Gesamtsystem ist in Fig. 1 schematisch dargestellt.

Der Zugang zu den Dokumenten und Dokumentprofilen erfolgt über drei verschiedene Zugänge (=Suchmodi) Spezialsuche, Überblicksuche und Problemorientierte Suche. Jeder der drei Suchmodi verfügt über eigene Suchobjekte, die die Suche unterstützen.

Die Spezialsuche arbeitet entweder mit Suchtermen oder erlaubt einen unmittelbaren Zugriff auf Dokumentprofile und Dokumente. Verfahrenstechnisch wird sie durch Datenbankabfragen realisiert, wobei entweder direkt auf die in einer Datenbank abgelegten Dokumentenprofile zugegriffen wird oder indirekt über die ebenfalls in einer Datenbank abgelegten Suchterme, die zur Unterstützung zwischengeschaltet sind.

Die Überblicksuche verwendet Verzeichnisse in Matrixform, die Problemorientierte Suche Verzeichnisse in Netzplanform, die jeweils einen Zugang zu Dokumentprofilen aus der Datenbank und Dokumenten erlauben, wobei die Verzeichnisse mit bestimmten Dokumentprofilen fest verknüpft sind. Es handelt sich dabei um vordefinierte Suchergebnisse zu einem Thema.

Die Suchobjekte Suchterme, Verzeichnisse in Matrixform und Verzeichnisse in Netzplanform sind themenbezogen, wobei Suchterme in der Anzahl und Spezialisierung die Verzeichnisse bei weitem übertreffen. Allen gemeinsam ist ihnen als Charakteristikum die Themenbezogenheit, bei der jeweils ein Suchobjekt mit verschiedenen Dokumentprofilen verknüpft wird, die Dokumente zum gleichen Thema repräsentieren.

Im Vergleich zu den dokumentbezogenen Objekten (Dokumente, Dokumentprofile) haben die Suchobjekte einen statischen Charakter. Mit einer im Zeitablauf relativ konstant bleibenden Anzahl von Suchobjekten werden immer neue Dokumentprofile und Dokumente verknüpft, die inhaltlich zu den Suchobjekten passen. Somit kann der Benutzer Suchroutinen betreiben, d.h. er findet zum selben Suchobjekt immer neue Dokumente, wenn er die Suche nach Ablauf einer bestimmten Zeit wiederholt.

Suche nach neuen, öffentlichen Informationen

Die Suche nach neuen Informationen findet im allgemeinen auf einem (Internet)-Server statt. Dieser Vorgang ist in Fig. 1 schematisch dargestellt.

Suche nach archivierten/ personalisierten, privaten Informationen

Nach der Suche und Anfrage eines Dokumentes wird nicht nur dieses selbst, sondern alle damit verbundenen Objekte mit auf eine dem Client zuordenbare logische Speichereinheit übertragen, also Dokumentprofil und Suchobjekt, durch welche dieses recherchiert wurde (alle übertragenen Komponenten sind mit einem Hochstrich dargestellt). Damit ist die Suche auf dem Client in gleicher Weise reproduzierbar, auf der sie zuvor auf dem Server erfolgt ist.

Neue Dokumente können sowohl vom Serversystem erfaßt werden (öffentliches Dokument), wobei sie danach allen Clients zur Verfügung stehen, als auch von einem Client selbst (privates Dokument), wobei sie nur diesem zur Verfügung stehen. Jeder Client verfügt damit über eine individuelle Domäne und damit über bestimmte Dokumente und die dazugehörigen Suchstrukturen.

Das Gesamtsystem besteht aus drei Komponenten:

1. Dokumentenverwaltungssystem
2. Erfindungsgemäßes System für die automatisierte Recherche
3. E-commerce-System

Das Dokumentenverwaltungssystem nimmt neue Dokumente auf und generiert die übrigen Objekte, die zur Suche notwendig sind.

Um die Suchobjekte auch mit privaten Dokumenten zu nutzen und so öffentliche und private Dokumentenbestände auf dem Client zusammenführen und gemeinsam recherchieren zu können, gibt es für den Client ein Dokumentenverwaltungstool mit einer Schnittstelle zum Serversystem, um dessen Datenressourcen mitzunutzen. Neben Verknüpfungen zu den dort vorhandenen Suchobjekten, die ggf. auf den Clientrechner geladen werden müssen, bzw. dort aktualisiert werden, hat der Benutzer die Möglichkeit, eigene Suchobjekte anzulegen und mit seinen privaten Dokumenten zu verknüpfen.

Das erfindungsgemäße System für die automatische Recherche ist für den Benutzer das Instrument, um auf alle Objekte zuzugreifen. Es ist als Server- und als Clientversion mit den gleichen Funktionen ausgestattet (die Schnittstellen unterscheiden sich jedoch, z.B. aufgrund unterschiedlicher Datenbanksysteme).

Das E-commerce-System wird aktiv, sobald der Benutzer Dokumente bestellt. Es wickelt die Lieferung und Zahlung des Dokuments ab. Es kennt den Benutzer als weiteres in Fig. 1 nicht dargestelltes Objekt und legt zu ihm ein Benutzerprofil an, das personalisierte Suchroutinen, Angaben über Bestand oder Nichtbestand von Dokumenten während der Recherche erlauben. Es ist nur in einer Serverversion vorhanden.

Das Dokument ist ein Informationsprodukt, das in der Größe als kleinstmögliche Verwendungseinheit definiert ist. Es muß somit alle Elemente umfassen, um mit voller Funktionsfähigkeit gebrauchsfähig zu sein.

Beispiele für Dokumente sind abgeschlossene Aufsätze, einzelne Datensätze aus einer Faktendatenbank oder ganze Softwareprogramme.

Die Dokumentprofile sind Repräsentation der Dokumente. Sie werden stellvertretend für das Dokument selbst recherchiert, bilden alle notwendigen Meta-Informationen darüber ab und enthalten eine Verknüpfung mit dem Dokument, das sie repräsentieren, also einen link auf eine Ressource im Internet oder auf einem über ein anderen Netzwerk angebundenen Dokumentenserver für das jeweilige Dokument. Sie sollen dem Benutzer die Wahl hinsichtlich der Bestellung oder dem Download eines Dokumentes ermöglichen.

Dokumentenprofile sagen dem Nutzer, was ein Dokument enthält und dem erfindungsgemäßen System, wie man es findet.

Dazu enthält das Dokumentprofil beispielsweise folgende Angaben:

1. Inhaltliche Angaben z.B. Titel, Zusammenfassung (thematisch, für den Benutzer sichtbar)
2. Dokumentcharakteristische Angaben z.B. Alter, Preis, Autor (unthematisch, für den Benutzer sichtbar)
3. Systemangaben, z.B. Dokumentnummer (unthematisch, für den Benutzer unsichtbar)
4. Eine Verknüpfung mit dem Dokument,

Die ersten beiden Sorten von Angaben sind für den Benutzer suchrelevant, während die letzten beiden nur für das System relevant sind, um die Suche durchzuführen. Die letze dient auch der Nachbereitung der Suche.

Während die Systemangaben für alle Dokumente nach Art und Anzahl identisch sind, unterscheiden sich die inhaltlichen und dokumentcharakteristischen nach Art und Anzahl zwischen den Dokumenttypen und Untertypen.

Die unterschiedlichen Dokumentprofiltypen spiegeln die verschiedenen Dokumenttypen/Informationstypen mit ihrer unterschiedlichen Struktur wieder.

Dazu gehören:

1. Fachbeiträge
2. (Erklärungen, Übersetzungen: ohne Dokumentprofil)
3. Beschreibungen von Aus- und Weiterbildungsangeboten
4. Veranstaltungen
5. Tools, Instrumente, Arbeitsvorlagen
6. Produktinformationen, Märkte
7. Ansprechpartnerprofile, Adressen
8. Vorschriften, Regeln

und deren Untertypen

Suchtext ist ein Extrakt aus einem Textdokument, das für die Suche relevante Texte, die als Suchkriterien dienen können, umfaßt.

Das erfindungsgemäße System soll die Vorgehensweise eines Lesers imitieren und für ihn die wichtigen Textteile eines Dokumentes (mit Hilfe von Suchtermen) automatisch strukturiert darstellen, so daß der Leser schnell und leicht die wichtigen

Teile eines Dokumentes sehen und mit denen anderer Dokumente vergleichen kann. Die inhaltlichen Angaben des Dokuments aus dem Dokumentprofil werden vom Benutzer als "Suchtext" verwendet.

Um so mehr Dokumente es zu einem Thema gibt, um so mehr Suchtext müßte der Benutzer überblicken, um alle Dokumente zu vergleichen. Würde man nur die Kapitelüberschriften von Büchern und Zeitschriften als Suchtext definieren, so müsset der Leser zu vielen Themen schon seitenweise Text durchsuchen, um das Richtige zu finden. Er würde leicht den Überblick verlieren.

Deshalb werden erfindungsgemäße Suchhilfen eingebaut, die Suchtexte von mehreren Dokumenten automatisch zusammenfassen und so übersichtlich organisiert präsentieren, daß sich der Benutzer leichter orientieren kann.

Solche Suchhilfen sind die "Suchterme", unterschiedlich lange Extrakte des Suchtextes, die mit den Dokumentprofilen verknüpft sind. Sie haben den Effekt einer Textblende, die der Benutzer unterschiedlich einstellen kann und damit unterschiedlich große Ausschnitte eines Suchtextes sieht. Suchterme, die in mehreren Dokumenten vorkommen existieren nur einmal. Sie werden dafür durch ihre Themenbezogenheit mit mehreren Dokumenten verknüpft und synonymisiert. Die Struktur der Suchterme ist in Fig. 2 darstellt. Sie enthalten Konzepte und bestehen meist aus Nominalausdrücken.

Es gibt die vier Typen:
Suchwort Bsp.: Auto
Kompositum Bsp.: Autoverschrottung
Suchbegriff Bsp.: Autoverschrottung nach der EU-Richtlinie
Suchsatz Bsp.: Die Autoverschrottung
nach der EU-Richtlinie
läßt Fragen offen
wobei es folgende Grundregeln gibt:

Ein Kompositum muß mind. ein Suchwort enthalten.

Ein Suchbegriff muß mind. ein Suchwort oder ein Kompositum (und damit indirekt ein Suchwort) enthalten. Insgesamt muß Ein Suchbegriff mindestens zwei sprachliche Konzepte enthalten und die Beziehung zwischen ihnen wiedergeben. ein Suchsatz muß mind. ein Suchwort oder ein Kompositum (damit indirekt ein Suchwort) oder einen Suchbegriff (damit indirekt ein Suchwort über ein Kompositum oder direkt) enthalten. Ein Suchsatz kann in einem Dokument erzeugt werden oder wird dort vorgefunden. Er muß unabhängig von sprachlichen Ergänzungen verständlich sein.
Suchterme können nur innerhalb von Suchsätzen gebildet werden.

Insgesamt läßt sich ein zunehmender Spezifizierungsgrad (Konkretisierungsgrad) bezüglich der Abbildung des Suchtextes von Suchwörtern über Komposita hin zu den Begriffen und Suchsätzen ausmachen (siehe auch Fig. 3), wobei die jeweils rechtsstehenden Suchterme die links davon stehenden Suchterme im Kontext spezifizieren.

Einhergehend mit dem steigenden Konkretisierungsgrad sind eine steigende Komplexität und Länge der Suchterme von links nach rechts zu beobachten.

Relevant für die Führung des Benutzers und damit für die Prozesse der Suche ist die Beziehung der Suchterme untereinander. Hierbei gibt es drei Arten: die Konkretisierungsrelation, die Thesaurusrelation und die Verknüpfungsrelation. Die Konkretisierungsrelation wird im Folgenden anhand der Fig. 4 bis 7 erläutert:

Fig. 4 zeigt das Auftreten der erfindungsgemäßen Konkretisierungsrelationen.

Alle Suchterme außer den Suchworten basieren auf anderen, und diese wiederum direkt oder indirekt immer auf einem Suchwort.

Sie sind konzeptionelle Bestandteile, stehen zueinander in substanziellen Teilmengenbeziehungen (senkrechte Pfeile in Fig. 4) und sind ineinander geschachtelt.

Substantielle Teilmengenbeziehungen bestehen immer zwischen einem konkretisierenden und einem konkretisierten Suchterm, bzw. zwischen diesen und einem Dokumentprofil, das wiederum als Bestandteil substantiell in einem Dokument enthalten ist. Es gibt dabei einen Aspekt und natürlichen Suchzugang zum konkretisierten Suchterm wieder.

Die substantielle Teilmengenrelation der Suchterme untereinander ist in Fig. 5 dargestellt.

Die substantielle Teilmengenrelation der Suchterme und des Zielobjektes Dokument(-profil) ist in Fig. 6 gezeigt.

Elemente, die in substantieller Teilmengenbeziehung stehen, werden für die erfindungsgemäße Suche aneinandergekettet und die Verbindung Konkretisierungsrelation genannt, wie in Fig. 7 dargestellt.

Konkretisieren heißt im Bedeutungszusammenhang / Kontext genauer bestimmen.

Ein konkretisierter Suchterm ist dabei in einem konkretisierenden enthalten und wird durch diesen im Kontext genauer bestimmt.(Daneben sind in dem konkretisierenden Suchterm noch weitere bedeutungsspezifizierende Ausdrücke enthalten, die nicht notwendigerweise Suchterme sein müssen.)

Ein Suchwort konkretisiert immer mindestens ein Kompositum, in dem es enthalten ist. Ebenso werden Begriffe durch die Komposita und Suchworte konkretisiert, die in ihnen enthalten sind. Suchsätze enthalten alle anderen Suchterme und konkretisieren alle.

Die Konkretisierungsrelation bewirkt, daß der Benutzer nacheinander verschieden konkrete bzw. verschieden lange Ausschnitte aus dem Suchtext und damit letztendlich aus einem Dokument sieht, wie in Fig. 8 dargestellt (in Fig. 8 steht der konkretisierte Suchterm jeweils links vom konkretisierenden).

Die Möglichkeit, verschieden lange Ausschnitte zu sehen, hat die Wirkung einer Textblende, die der Benutzer unterschiedlich einstellen kann.

Im Verlauf der Suche gelangt er zu immer konkreteren Suchtermen und weitet damit Textblende auf, wie in Fig. 8 dargestellt.

Mit dem Aufweiten der Textblende sieht der Benutzer nicht nur konkretere, sondern auch komplexere und längere Textteile eines Suchtextes und Dokumentes. Die natürliche Folge ist, daß er sich zunehmend auf wenige Suchterme einschränken muß, um nicht von der Textmenge überfordert zu werden.

Hier kann auch ein Vergleich zum optischen Zooming gezogen werden: Beim Heranzoomen erhält der Fotograph eine detailgetreuere 'konkretere' Abbildung eines Objektes, die damit zunehmende Größe der abgebildeten Objekte erzwingt aber aufgrund der konstant bleibenden Projektionsfläche die Konzentration auf weniger Objekte, da sonst nicht alle dargestellt werden können.

Die Suchterme sind analog zu den beim Zoomen erreichten unterschiedlichen geometrischen Vergrößerungsmaßstäben Abbildungen des Objektes Dokument mit unterschiedlichen semantischen Vergrößerungsmaßstäben. Eine um so konkretere Abbildung der Benutzer wählt (d.h. je größer der Zoomfaktor ist), um so weniger Suchterme und damit Dokumente sieht er.

Fig. 9 zeigt die "Projektionsfläche" des Suchsystems, ein Ausgabefenster im Benutzerfrontend.

Im Unterschied zum geometrischen Modell werden mehrere Abbildungen von Dokumenten in mehreren Zoomfaktoren zusammen dargestellt. So ist das hinter dem Suchsatz stehende Dokument relativ stark "vergrößert", also detailliert dargestellt, während Dokumente, die z.B. mit dem Thema Ingenieurgehälter zu tun haben z.T. nur sehr verkürzt, unkonkret, also "klein" dargestellt sind.

Das Ausgabefenster kann zwar gescrollt werden, also analog die Linse geschwenkt werden, und damit können neue Objekte in den sichtbaren Bereich gebracht werden. Der Benutzer wird aber dazu veranlaßt, sich bereits früh auf einige Objekte zu konzentrieren, die ihn besonders interessieren, um nicht scrollen zu müssen. Die anderen Objekte kann er im Ausgabefenster löschen und damit die Suche nach diesen abbrechen. Für die verbleibenden noch interessierenden Objekte steht mehr Platz zur Verfügung, um weitere Konkretisierungen durchzuführen, wie in Fig. 10 dargestellt.

Der Benutzer bekommt im Zuge der Konkretisierung einen Katalog oder eine verzeichnisartige Inhaltsübersicht über die Suchtexte aller Dokumente in Form von Suchtermen dargeboten, deren Verzweigungen schrittweise ausgeklappt werden (sh. Fig. 10).

Die Verästelungen zu ausgewählten Suchtermen werden in das Ausgabefenster geliefert, wo der Benutzer jeweils bestimmte auswählt (schwarze Balken in Fig. 11) und deren Konkretisierungen anfordert.

Der in Fig. 11 skizzierte Verlauf einer erfindungsgemäßen Suche stellt eine Idealisierung dar, in Wirklichkeit gibt es auch "Kurzschlüsse", so kann ein Begriff auch ein Suchwort und kein Kompositum enthalten oder ein Suchsatz ein Kompositum oder Suchwort und keinen Begriff (siehe hierzu auch Fig. 12).

Das System sorgt dafür, daß immer eine bestimmte Konkretisierungsebene / ein Suchtermtyp zugleich aufgerufen wird, und überspringt einen Suchtermtyp, wenn er durch die Relation nicht angefordert wird.

Zwischen dem konkretisierten und dem konkretisierenden Suchterm besteht eine n:m - Beziehung, d.h. ein konkretisierter Suchterm kann immer von mehreren konkretisierenden Suchtermen konkretisiert werden (Fall a) und umgekehrt kann ein konkretisierender Suchterm mehrere konkretisierte Suchterme konkretisieren (Fall b), wie in Fig. 12 dargestellt.

Die entsprechenden Verzweigungsmöglichkeiten durch die Konkretisierungsrelation bezogen auf ein Suchwort sind in Fig. 13 gezeigt.

Die Konkretisierungsrelation bietet folgende Vorteile für die Suche:

Das Herunterbrechen der Auswahl in mehrere sukzessive Einzelschritte mit Hilfe zunehmend konkreter werdender Suchterme hat mehrere Vorteile:

Der Benutzer kann auch nach der Vorgabe eines Suchwortes die Richtung der Suche beeinflussen und die Suche verfeinern. Er muß sich nicht erst das Suchergebnis anzeigen lassen und dieses evaluieren, was im Vergleich zur Evaluation eines Suchterms wesentlich komplexer, unübersichtlicher und zeitaufwendiger ist, um anschließend seine Suchstrategie zu modifizieren, wie es bei herkömmlichen Suchsystemen, die z.B. mit "relevance feedback" arbeiten, der Fall ist.

Der Benutzer muß die Suche nicht formulieren, er muß nur aus den jeweils zur Verfügung stehenden Suchtermen auswählen. Dies ist besonders bei den komplexeren (z.B. Suchbegriffen) eine Erleichterung.

Die in Fig. 13 symbolisierte zunehmende Verästelung über die Suchterme hinweg führt dazu, daß die Anzahl der Dokumente, die mit einem einzigen Suchterm verknüpft sind, mit zunehmender Konkretisierung abnimmt (=Repräsentationsumfang, siehe Fig. 11), da diese Zahl sich auf die konkretisierenden Suchterme aufteilt: Ein allgemeiner Suchterm wie das Suchwort Ingenieur, ist mit allen Dokumenten verknüpft, mit denen auch die konkretisierenden Komposita Maschinenbauingenieur, Elektroingenieur, usw. verknüpft sind, womit auch sein Repräsentationsumfang größer ist, als der der einzelnen Komposita.

Die aus Platz- und Überschaubarkeitsgründen mit zunehmender Konkretisierung veranlaßte Selektion von Suchtermen durch den Benutzer führt dazu, daß diese der Zahl nach ungefähr konstant gehalten werden oder abnehmen. Damit wird aufgrund des abnehmenden Repräsentationsumfangs der konkreteren Suchterme automatisch die Treffermenge (die Menge der verknüpften Dokumente) eingeschränkt.

Fig. 14 verdeutlicht, daß abgesehen von der im Vergleich zu den Dokumenten leichteren Bewertbarkeit der Suchterme bei dem erfindungsgemäßen Verfahren insgesamt weniger Ergebnisse zu beurteilen sind, als bei der herkömmlichen Suche.

Ein herkömmliches Suchsystem, das nach der Definition eines Suchwortes direkt die relevanten Dokumente oder deren Profile liefert und dabei die Zwischenstufen über die konkreteren Suchterme überspringt, konfrontiert den Benutzer gemäß Fig. 15 mit der Beurteilung von 16 Ergebnissen. Bei Anwendung des erfindungsgemäßen Verfahrens muß er bei vergleichbarer Situation und 50 % Auswahlquote nur 12 Ergebnisse vergleichen, von denen die meisten Suchterme, und damit weniger komplex als die Dokumente selbst sind.

Zusätzlich zu den Konkretisierungsrelationen kennt die Spezialsuche die Thesaurusrelationen.

Hierbei werden Suchterme verknüpft, die im Suchtext nebeneinander stehen, also unabhängige Konzepte darstellen inhaltlich aber dennoch zusammengehören (= Thesaurusrelationen). Dies ist in Fig. 15 und 16 dargestellt. Hierzu gehören die Verknüpfungen Über/Unterordnung und Verwandtschaft.

Die in einer Thesaurusrelation verknüpften Suchterme können folgenden Status haben, wie in Fig. 16 erläutert:

BT (broader term = übergeordneter Suchterm)
NT (narrower term = untergeordneter Suchterm) und
RT (Related term = verwandter Suchterm)

Die Thesaurusrelation grenzt sich von der Konkretisierungsrelation folgendermaßen ab:

Bei der Konkretisierungsrelation wird ein Suchterm im Bedeutungszusammenhang / Kontext näher bestimmt und ist substantiell in einem anderen enthalten. Das bedeutet, daß der konkretisierende Suchterm das Konzept des konkretisierten Suchterms oder des Synonyms dazu wieder aufnimmt und diesen sprachlich verschmilzt, wobei die Komplexität und Länge zunimmt, wie in Fig. 3 gezeigt. Damit führt die Konkretisierungsrelation den Benutzer vom Allgemeinen zum Speziellen.

Diese Konzeptabhängigkeit ist bei Thesaurusrelationen nicht gegeben, vielmehr kann man die Relation erfindungsgemäß als inhaltliche Zusammengehörigkeit zweier Suchterme definieren, deren Verhältnis kontextneutral ist, d.h. ist nicht in einem andern substantiell enthalten.

Die Thesaurusrelation zwischen zwei Suchtermen ist unabhängig von der Konkretisierungsrelation, die zusätzlich bestehen kann.

Die BT/NT-Relation zwischen zwei Suchtermen ist wechselseitig, d.h. wenn ein Suchterm einem anderen übergeordnet ist, also dieser den Status BT hat, so ist letzterer diesem untergeordnet und hat den Status NT.

Der NT spezifiziert häufig einzelne Ausprägungen oder Untergruppen des BT.

Im Folgenden werden Konkretisierungsrelation und Thesaurusrelation einander gegenübergestellt:

Ein Ausdruck für die Konkretisierungsrelation ist:

[weniger konkreter Suchterm] - "genauer" →[konkreterer Suchterm]

ein entsprechender Ausdruck für die BT/NT-Relation ist: [NT] — "als Teil von / als Ausprägung/Typ/ Beispiel von"→ [BT]

Diese Unterschiede sind in graphischer Form in Fig. 16 erläutert.

Synonyme sind streng bedeutungsgleiche Suchterme. Die Synonyme werden im Suchsystem miteinander verschmolzen, so daß die Verknüpfungen des einen auch auf den anderen übergehen, so werden z.B. die Suchbegriffe "Energiebilanzen von Solarenergie" und "Wirtschaftliche Lösungen für Sonnenenergie" sowohl mit dem Kompositum "Solarenergie", als auch mit dem Kompositum, "Sonnenenergie" verknüpft, die synonym gebraucht werden. Somit sucht das System bei Auswahl eines Suchterms die Verknüpfungen der Synonyme automatisch mit, ohne die Synonyme selbst jedoch anzuzeigen.

RT sind dagegen bedeutungsnahe, assoziative Suchterme oder Suchterme, die häufig im Zusammenhang mit anderen vorkommen.

Die Relation zwischen einem Suchterm und seine(m/n) RT(s) wird Spezialisierungsrelation genannt.

Die Thesaurusrelationen werden erfindungsgemäß für die Prozesse
Spezialisierung (es werden NT zu einem Suchterm geliefert)
Erweiterung (es werden RT zu einem Suchterm geliefert)
Verallgemeinerung (es werden BT zu einem Suchterm geliefert) verwendet.

Wenn ein Benutzer einen zu speziellen Suchterm gewählt hat und mit einer zu geringen Treffermenge konfrontiert ist, so kann er diesen mit Hilfe der übergeordneten Suchterme verallgemeinern und die relevante Treffermenge erhöhen. Die übergeordneten Suchterme geben einen Überblick und können ihn auf Alternativen führen.

Durch anschließendes Anzeigen der untergeordneten Suchterme eines BT kann er auf einen anderen Teilaspekt des ursprünglichen Suchterms gelangen. So wird er zu neuen Suchen angeregt.

Wenn z.B. ein Benutzer nach "Dünger für Sonnenblumen" sucht, hier aber wenig Treffer erzielt, so kann er sich den übergeordneten Suchterm "Pflanzendünger" anzeigen lassen. Damit wird er zum einen darauf hingewiesen, daß es sich um einem Pflanzendünger handelt und hat einen Ansatz, weiterzusuchen. Anschließend kann er sich nämlich durch Anzeige der untergeordneten Suchterme zu "Pflanzendünger" alle Pflanzendünger durchsehen und schauen, ob einer dabei ist, der sich für Sonnenblumen auch eignet, z.B. einen für Klatschmohn.

Auch die verwandten Suchterme sollen eine weitere Suche nach ähnlichen Aspekten anstoßen, wenn die Suche zu sehr eingeengt wurde.

Das erfindungsgemäße Verfahren sucht standardgemäß die untergeordneten Suchterme mit (implizit, das heißt ohne daß sie dem Benutzer angezeigt werden- erst bei der Lieferung der Suchsätze sieht der Benutzer auch diejenigen, die mit untergeordneten Suchtermen verknüpft waren). Damit wird das Problem umgangen, daß jemand der z.B. nach 'Pflanzendünger' sucht auf keine Dokumente stößt, in denen nur 'Dünger für Sonnenblumen' erwähnt wird.

Es wird also nach dem ganzen Agglomerat von Suchtermen gesucht, die sich unter Pflanzen subsumieren lassen. Manchmal will der Benutzer aber nicht alle Mitglieder dieses Agglomerats. So kann es sein, daß ein Benutzer zwar nach Pflanzendünger im allgemeinen sucht, weil er mehrere Pflanzen hat, aber z.B. nicht nach speziellem Dünger für Sonnenblumen, weil er diese nicht hat. Um diesen Aspekt bei der Suche auszuschließen, muß er sich den NT "Sonnenblumen" in der Abfragemaske anzeigen lassen und herauslöschen.

Einschränkungen erlauben es dem Benutzer erfindungsgemäß, über ein zweites Frontend für die Suche bestimmte unthematische Nebenbedingungen einzuführen und damit die Treffermenge bezüglich des Themas unter diesen Nebenbedingungen zu optimieren, wie in Fig. 17 dargestellt.

Das erfindungsgemäße System sorgt dann während der Suche dafür, daß jeweils nur Suchterme und Dokumentprofile von Dokumenten angezeigt werden, die diese Nebenbedingungen erfüllen.

Sie werden dokumentbezogen formuliert. Durch eine vom Benutzer vorgenommene Auswahl von Dokument (-profilen) schränkt er unmittelbar die Zahl der relevanten Dokument(-profile) und mittelbar die Zahl der damit verknüpften relevanten Suchterme ein.

Unthematische Nebenbedingungen können beispielsweise die in den Dokument(-profil)en erfaßten dokumentcharakteristischen Angaben, der Informations- / Dokumenttyp Merkmale, wie Erscheinungsdatum oder Preis, Sprache oder Quelle, sein.

Die unthematischen Nebenbedingungen können während der Suche wieder aufgehoben werden und damit kann die Zahl der relevanten Dokument(-profil)e und verknüpften Suchterme wieder erhöht werden.

Weiter ist erfindungsgemäß die Funktion "Verknüpfung" mit der entsprechenden Suchtermrelation vorgesehen.

Verknüpfungen definieren Dokument(-profil)e, die entweder eine Kombination von Suchtermen enthalten (einschließende Verknüpfung, die der Boole'schen Verknüpfung "und" entspricht) bzw. einen Suchterm enthalten und einen bestimmten zweiten nicht enthalten (ausschließende Verknüpfung, die der Boole'schen Verknüpfung "und nicht" entspricht). Die Verknüpfung zweier Suchterme geschieht immer über ein Dokument(-profil), wie in Fig. 19 dargestellt.

Verknüpfungen werden suchtermbezogen formuliert. Eine vom Benutzer vorgenommene Auswahl von Suchtermen schränkt mittelbar die Zahl der damit verknüpften relevanten Dokument(-profil)e und die Zahl der wiederum damit verknüpften weiteren Suchterme ein. Mit einer Verknüpfung setzt der Benutzer für die weitere Suche thematische Nebenbedingungen.

Die Verknüpfung läuft in zwei Stufen ab:

Nach Vorgabe (Auswahl) eines Suchterms (Suchterm1) oder einer Suchtermmenge (Suchtermmengel) kann sich der Benutzer alle weiteren Suchterme anzeigen lassen, die mit diesen in mind. einem Dokument gemeinsam vorkommen. (Schritt 1)

Er kann dann einzelne Suchterme auswählen und diese für die weitere Suche einschließen, womit nur noch Dokumente berücksichtigt werden, die neben dem Suchterm1 / der Suchtermmengel auch die eingeschlossenen Suchterme enthalten. (Schritt 2 a)

Der Prozeß gibt dem Benutzer die Möglichkeit, bei seinen gewünschten Dokumenten noch einen zweiten Aspekt zu betonen.

Der Benutzer kann auch einzelne Suchterme auswählen und ausschließen. (Schritt 2b) Damit erreicht er, daß für die folgende Suche nur Dokument(-profil)e berücksichtigt werden, die nicht den ausgeschlossenen Suchterm enthalten, aber Suchterm1 / Suchtermmenge1. Mit Hilfe dieses Prozesses kann der Benutzer einen zweiten ungewünschten Aspekt, der häufig im Zusammenhang mit dem ersten vorkommt, ausschließen.

Anhand der Fig. 20 bis 27 wird diese Funktion des erfindungsgemäßen Verfahrens näher erläutert:

Fig. 20: Suchterm1 soll mit anderen verknüpft werden

Zunächst stellt das System fest, in welchen Dokumenten Suchterm1 enthalten ist / mit welchen er verknüpft ist und welche gleichzeitig den in den Einschränkungen definierten unthematischen Nebenbedingungen genügen (schraffierte Felder, in Fig. 20).

Alle Dokument (profil)e, die mit Suchterm1 verknüpft sind, werden für die Suche gesperrt und sind nicht mehr relevant (weiße, durchgestrichene Dokument(-profil)e in Fig. 19.

Das erfindungsgemäße System behält dabei die einmal festgelegte Verknüpfung als thematische Nebenbedingung bei, die nicht aufgehoben werden kann, wie eine unthematische Verknüpfung. D.h. alle weiteren vom System gelieferten Suchterme und Dokument(profil)e müssen die in der Verknüpfung definierte Nebenbedingung erfüllen. Soll die Nebenbedingung wieder aufgehoben werden, so muß die Suche neu gestartet werden.

Anschließend findet das System heraus, mit welchen Suchtermen die herausgefilterten Dokument(-profil)e außerdem verbunden sind / welche Suchterme neben Suchterm1 darin enthalten sind (gepunktete und schraffierte Elemente) und liefert sie an das Ausgabefenster (gepunktete Elemente), wie in Fig. 20 gezeigt.

Aus der Liste der gelieferten Suchterme der Fig. 20 kann der Benutzer nun Suchterm2 auswählen und schließt ihn damit in die weitere Suche ein. Das System sperrt nun alle Dokument(-profil)e, die nicht mit Suchterm1 und Suchterm2 verknüpft sind, für die weitere Suche, wie in Fig. 20 dargestellt.

Anders formuliert:

Relevante Dokument(-profil)e sind nun schraffierte und gepunktete Elemente aus Fig. 21, die sowohl Suchterm1 als auch Suchterm2 enthalten.

Nur die mit relevanten Dokumenten (auch) verknüpften Dokument(-profil)e sind für die weitere Suche relevant (z.B. nur Dokument(-profil) 3 in Fig. 22).

Alle nur mit nicht relevanten Dokument(-profil)en verknüpften Suchterme sind für die weitere Suche nicht relevant (weiße, durchgestrichene Suchterme in Fig. 22).

Suchterm1 ist mit einem irrelevanten (1) und einem relevanten Dokument(-profil) (3) verknüpft. Er repräsentiert in der weiteren Suche nur das relevante (3), das irrelevante (1) soll nicht an den Benutzer geliefert werden.

Die Fig. 23 und 24 erläutern die Aufgabe, eine Suchtermmenge mit einem Suchterm zu verknüpfen:

Im folgenden Fall will der Benutzer eine Suchermmenge, bestehend aus den Suchtermen 1-3 mit anderen Suchtermen verknüpfen. Die gleichen Schritte wie oben werden nun für mehrere Suchterme statt nur für Suchterm 1 vorgenommen. Die Suchtermmenge1 befindet sich zunächst im Ausgabefenster, wie in Fig. 23 dargestellt.

Dann werden Dokument(-profil)e gesperrt, die nicht mit einem Suchterm der Suchtermmengel verknüpft sind, also in denen nicht mindestens einer der Suchterme 1-3 vorkommt, wie in Fig. 24 gezeigt.

Wählt der Benutzer Suchterm 2 und schließt ihn von der zukünftigen Suche aus, werden alle Dokument(-profil) e für die weitere Suche gesperrt, die Suchterm 2 enthalten oder nicht Suchterm1 enthalten, wie in Fig. 25 dargestellt.

Anders herum formuliert:

Relevante Dokument(-profile) sind nun schraffierte oder schraffierte und gepunktete Elemente, die Suchterm1 und nicht Suchterm 2 enthalten.

Nur die mit relevanten Dokument(-profil)en (auch) verknüpften Suchterme sind für die weitere Suche relevant. Alle nur mit gesperrten Dokument(-profil)en verknüpften Suchterme sind für die weitere Suche irrelevant.

Suchterm1 ist mit einem irrelevanten und einem relevantem Dokument(-profil) verknüpft. Er repräsentiert in der weiteren Suche nur das relevante, das irrelevante darf nicht an den Benutzer geliefert werden.

Anschließend werden vom System wieder die Suchterme ermittelt, die mit mindestens einem Suchterm außerhalb der Suchtermmenge verknüpft sind, also mit diesem gemeinsam in einem Dokument(-profil) vorkommen (die schraffierten und gepunkteten Elemente in Fig. 25). Die Suchterme (gepunktet) werden an das Ausgabefenster geliefert (Fig. 26).

Der Benutzer wählt Suchterm 5 aus, wie in Fig. 26 dargestellt, um ihn in die Suche einzuschließen. Das System sperrt nun alle Dokument(-profile), die nicht mit Suchterm 5 und einem der Suchterme 1-3 verbunden sind. Die schraffierten und gepunkteten Elemente sind nun für die weitere Suche relevant und die mit ihnen verknüpften Suchterme 3, 5 und 6. Die Suchterme 1 und 2, die sich nicht mit Suchterm 5 verknüpfen lassen, sind für die weitere Suche nicht mehr relevant, wie auch Suchterm 4.

Wählt der Benutzer Suchterm 5 aus, um ihn von der Suche auszuschließen, werden wiederum diejenigen Dokument(-profil)e gesperrt, die diesen Suchterm enthalten oder einen Suchterm der Suchtermmenge nicht enthalten. Alle ausschließlich mit gesperrten Dokument(-profil)en verbundenen Suchterme sind für die weitere Suche nicht relevant, wie in Fig. 27 dargestellt. Nur (auch) mit relevanten Dokument(-profil)en verknüpften Suchterme sind relevant.

Verknüpfungen können (wie alle Prozesse der Spezialsuche) wiederholt werden, indem jeweils das im Ausgabefenster befindliche Ergebnis der ersten Prozedur dieser ein zweites Mal unterzogen wird. So können drei- oder mehrgliedrige Boole'sche Verknüpfungen erzeugt werden.

Der gleiche Effekt wird erzielt, indem der Suchterm1 bzw. die Suchtermmengel mit mehreren Suchtermen verknüpft werden. In Fig. 20 bis 27 würde der Benutzer immer mehrere der gepunkteten Suchterme auswählen. Dann müßten weitere Dokument(-profil)e gesperrt werden, in denen diese weiteren Suchterme vorkommen (ausschließen) bzw. nicht vorkommen (einschließen).

Die Prozesse der Spezialsuche laufen in der in Fig. 28 skizzierten Reihenfolge ab. Zunächst werden Einschränkungen der Suchterme vom Benutzer vorgenommen. Danach beginnt die sukzessive Konkretisierung, die von den Prozessen Einschränkung, Erweiterung, Spezialisierung, Verallgemeinerung und Verknüpfungen in beliebiger Reihenfolge unterbrochen werden kann und schließlich nach der Anzeige der Suchsätze und der Auswahl daraus bei der Anzeige der mit den ausgewählten Suchsätzen verknüpften Dokumentprofile endet.

Aus dem Ergebnis des jeweiligen Prozesses, der ins Ausgabefenster geladen wird, wählt der Benutzer wieder Suchterme aus, um mit ihnen irgendeinen Prozess der Spezialsuche zu vollziehen.

Die Dokumentprofile sind in einer Datenbank abgelegt, die erfindungsgemäß indirekt mit Hilfe von Datenbanken, die die Suchterme enthalten, abgefragt wird. Die Suchterme haben die Funktion einer Vorselektion für die Auswahl der Dokumentprofile.

Alternativ zu diesem Gesamtprozess kann die Datenbank der Dokumentprofile auch direkt über ein entsprechendes Frontend abgefragt werden (= Direkte Suche, siehe kleiner Pfeil rechts in Fig. 28).

Der Benutzer bewegt sich innerhalb der Spezialsuche frei im semantischen Raum und kann Zahl und Art der Aspekte (Themenbreite) jederzeit verändern (Erweiterung, Verallgemeinerung, Spezialisierung, Verknüpfung) und diese vertiefen (Konkretisierung), wie in Fig. 28 und 30 dargestellt. Dabei liefert das System dem Benutzer grundsätzlich alle zur Auswahlsituation zur Verfügung stehenden sprachlichen Vorgaben, um eine Artikulationshilfe zu geben und ihn vor frei formulierten Eingaben weitestgehend zu bewahren. Es reicht daher für die Recherche im Fachgebiet ein passives Fachthesauruswissen aus.

Weiter wird von dem in diesem Ausführungsbeispiel beschriebenen System der Modus "Überblicksuche" angeboten.

Die Überblicksuche arbeitet mit hierarchischen Verzeichnissen, die Dokumentprofile enthalten. Vom Konzept entsprechen die Verzeichnisse einem hierarchischen Klassifikationssystem. Die erste Ebene ist in Matrixform dargestellt, die darunterliegenden in eindimensionalen Verzweigungsstrukturen (siehe Fig. 31 es wurde durch Auswählen des Matrixfeldes Arbeitsvorlagen: Arbeitsmarkt, Personalwesen eine dazugehörige Verzeichnisstruktur angezeigt).

Die jeweiligen Klassen oder Verzeichnisse sowie die darin abgelegten Dokumentprofile werden vom Administrator zusammengestellt und sind damit für alle Benutzer standardisiert. Der Client kann so eine vollkommen standardisierte Struktur vom Server erhalten, die aber vom Client danach editiert und manipuliert werden kann.

Wie der Name schon sagt, soll sich der Benutzer hier schnell und übersichtlich, dafür nicht allzu tief / speziell über die verschiedenen Fachgebiete informieren, um sich einmal umzuschauen (z.B. was es Neues auf einem Gebiet gibt). Die Informationsaufnahme ist eher ungezielt, d. h. der Benutzer informiert sich nicht speziell zu einem Thema, sondern will seinen Wissensstand allgemein auffrischen. Dementsprechend sollen Informationen präsentiert werden, die relativ häufig nachgefragt werden, nicht zu speziell sind und den durchschnittlichen Benutzer interessieren. Dieser Suchmodus ist daher mit dem Überfliegen einer Zeitung zu vergleichen und den Benutzern wohl am vertrautesten.

Da die Verzeichnisstrukturen auf Server und Client identisch sind, können diese vom Clientsystem aus aktualisiert werden ("Aktualisieren der Suchergebnisse"). Dabei wird das aktualisierte Verzeichnis mit den neuen Suchergebnissen (Dokumentprofilen) vom Server auf den Client übertragen.

Somit kann der Benutzer über eine Zeit, beispielsweise ein Jahr wiederholt in einer konstanten Struktur suchen.

Die problemorientierte oder Projekt-Suche ist eine Sonderform der Überblicksuche. Gemeinsames Merkmal ist die teilweise hierarchische Anordnung der Suchergebnisse in einer Verzeichnisstruktur und die vom Administrator vorgegebene Struktur. Ein Beispiel für ein hierarchisches Verzeichnis ist "Vertriebs- und Marketingkosten" gemäß Fig. 32, dessen Unterverzeichnis in Fig. 33 zu sehen ist.

Unterscheidungsmerkmal der Problemorientierten Suche ist jedoch, daß Verzeichnisse der gleichen Ebene, die bei der Überblickssuche unverbunden nebeneinander stehen, aber inhaltlich stark zusammenhängen oder sich sogar gegenseitig bedingen oder beeinflussen, zu Problemketten zusammengefaßt und dem Benutzer entsprechend dargeboten werden. Eine solche Struktur ist in Form von Pfeilen und Knoten dargestellt.

Problemketten sind untereinander über Suchterme aus der Spezialsuche oder Verzeichnisse aus der Überblicksuche verknüpft, so beispielsweise die Problemketten in Fig. 32 und 33 über das Verzeichnis Vertriebs-/Marketingkosten der Fig. 32, das auf die Problemkette der Fig. 33 verweist.

Dieser Suchmodus will dem Benutzer eine systematische Struktur eines Problems oder Themas vorgeben und ihn anleiten, bestimmte Aspekte in einer bestimmten Reihenfolge zu beachten. Er bekommt also eine Checkliste oder einen Projektplan (Problemkette) an die Hand, der ihn davor bewahrt, wichtige Punkte zu übersehen oder sich mit ihnen nicht rechtzeitig zu beschäftigen.

Problemketten werden zu komplexeren Themen angeboten, wo es notwendig ist, sich einen systematischen Überblick zu verschaffen, bevor man sich mit einem Aspekt vertiefend beschäftigt.

Sie sind also eine Informationssammlung mit besonderer Leitfaden- und Orientierungsfunktion.

Im Folgenden werden Charakteristika aufgezeigt, die das erfindungsgemäße Verfahren und die Spezialsuche kennzeichnen.

Die Charakteristika ergeben sich aus der Architektur des erfindungsgemäßen Verfahrens (Datenbankdesign, Retrievalschritte) im Zusammenspiel mit den Funktionen des Dokumentenverwaltungssystems.

Dokument, Dokumentprofil und Suchergebnis werden hier synonym gebraucht.

Die grundlegende Idee des erfindungsgemäßen Verfahrens ist das "Blenden-Verfahren", also das schrittweise Hervorzeigen immer größerer Ausschnitte einer größeren Informationseinheit (der Volltext eines Suchergebnisses) mit Hilfe von Textausschnitten des Volltextes (= Suchterme), während der Recherche. (Dabei ist der kleinste Ausschnitt ein Suchwort, der größte ein Suchsatz).

Der Hintergrund ist, daß der Benutzer im Verlauf die Suchrichtung bestimmen kann und so schrittweise die Suche verfeinern kann, ohne bereits das Suchergebnis zu sehen. Dabei schlägt er früher die richtige Richtung ein als bei herkömmlichen Suchsystemen, andererseits erkennt er die Richtung leichter, weil er kürzere Hinweise (Suchterme statt ganzer Dokumente) durchlesen muß.

Durch die dokumentabhängige Abfragestruktur (durchgängige Referenz auf die Rechercheeinheit = das Dokument / das Dokumentprofil) ist es dem System auch möglich, aus dem Gesamtsystem dokumentspezifische Module zu isolieren und auf ein getrenntes System zu übertragen (auf ein Client-System), das nur mit spezifischen Dokumenten und den dazugehörigen Suchtermen arbeitet, aber voll funktionsfähig bleibt.

Es gibt Gemeinsamkeiten mit Suchverzeichnissen / Klassifikationssystemen einerseits und Verschlagwortungssystemen, zu denen auch Internetsuchmaschinen mit vollautomatischer Verschlagwortung zählen, andererseits.

Die Klassen eines Klassifikationssystems (Elemente einer Hierarchie, die Suchergebnisse subsummieren) entsprechen in diesem Modell den Suchtermen der Erfindung, die durch Konkretisierungsrelationen oder BT/NT-Thesaurusrelationen miteinander verknüpft sind. Fig. 34 zeigt ein Modell eines solchen Klassifikationssystems gemäß dem Stand der Technik.

Fig. 35 zeigt ein Teilmodell der Erfindung, das deren Ähnlichkeit zu einem Klassifikationsystem demonstriert.

Es gibt folgende Gemeinsamkeiten zwischen Erfindung und Klassifkationssystemen:

Es gibt eine hierarchische Suchstruktur

Der Benutzer gelangt auf einem Suchpfad von einer Hierarchiestufe zur nächsten; diese sind miteinander verknüpft. Die Suchpfade werden ihm vorgegeben, er erfährt also eine Benutzerführung und braucht die Suche nicht selbst zu formulieren. Dem Benutzer gelingt es auf diese Weise, sein Thema und die Anzahl der Suchergebnisse einzugrenzen

Es bestehen aber folgende Unterschiede zwischen dem erfindungsgemäßen Verfahren (Suchterme) und Klassifikationssystemen (Klassen) :

Bei einem Klassifikationssystem erfolgt die Bezeichnung der Klassen abstrakt von den Suchergebnissen. Erfindungsgemäß werden die Suchterme direkt aus den Suchergebnissen bzw. aus sich selbst extrahiert und bilden sprachlich-substantielle Teilmengenbeziehungen mit ihnen und untereinander (Konkretisierungsrelation).

Die Suchterme der vorliegenden Erfindung werden halb/vollautomatisch gebildet. Die Klassen eines Klassifikationssystems werden intellektuell von einem Administrator gebildet. Parallelen bestehen auch zum information zooming des Topic/Topographic - Systems, auch hier durchwandert der Benutzer eher suchergebnis-abstrakte Projektionen der Suchergebnisse ("Textkondensate oder -surrogate"). Der Vorteil der erfindungsgemäßen Extraktion anstelle der Textkondensierung liegt in der Verbindung von hohem Automatisierungsgrad und Exaktheit der Dokumentenindizierung, d.h. Bildung von Klassen und Zuweisung der Dokumente zu den einzelnen Klassen. Klassifikationssysteme mit vielen Klassen neigen bei automatischer Indizierung zu Fehlern, was entweder durch Erhöhung der Fehlertoleranz (= Reduzierung der Anzahl der Klassen) oder durch manuelle Unterstützung ausgeglichen werden kann. Die erfindungsgemäße Extraktion benötigt bei einem entsprechenden Bestand von Referenzsuchtermen (insbesondere Suchwörter) keine manuellen Eingriffe und klassifiziert sehr fein.

Die Klassen eines Klassifikationssystems bestehen unabhängig von einzelnen Suchergebnissen. Anlegen von Klassen und Zuordnung der Ergebnisse zu den Klassen sind zwei getrennte Schritte (sie können in wechselnder Reihenfolge vollzogen werden). In Bezug auf ein einzelnes Ergebnis sind Klassen suchergebnis-abstrakt. Das heißt, die Verknüpfungen zwischen Klassen und Suchergebnissen sowie zwischen Klassen untereinander sind statisch-fest und unabhängig von der Relevanz einzelner Suchergebnisse, die sich aus gewissen Nebenbedingungen ergibt, d.h. eine Klasse wird dem Benutzer unabhängig davon angezeigt, ob sie für ihn relevante Suchergebnisse enthält.

Die erfindungsgemäße Bildung von Suchtermen dagegen vollzieht sich mit der Zuteilung der Suchergebnisse zu den Suchtermen in einem Schritt. Sie existieren nur in Verbindung mit den Suchergebnissen und sind auch im Bezug auf ein einzelnes Suchergebnis suchergebnis-bezogen. Suchterme werden nur angezeigt, wenn das System dahinterstehende Suchergebnisse findet, die der Suchsituation entsprechen.

Die angezeigten oder relevanten Suchterme der Erfindung sind damit jederzeit eine Funktion der damit verknüpften Suchergebnisse:

$$\mathrm{Suchterm}_{\mathrm{angezeigt}} = f(\mathrm{Suchergebnis}_{\mathrm{verknp\ddot{u}ft}})$$

Die Relevanz der Suchterme hängt also von der Relevanz der mit ihnen verknüpften Suchergebnisse ab. Diese wiederum hängt davon ab, ob sie bestimmte unthematische (durch Einschränkungen definierte) oder thematische (durch Verknüpfungen definierte) Nebenbedingungen erfüllen, die der Benutzer während der Suche formuliert.

Die relevanten Suchterme sind also eine Funktion der Nebenbedingung für die Suchergebnisse:

$$\mathrm{Suchergebnis}_{\mathrm{verkn\ddot{u}pft}} = f(\text{Nebenbedingung für Suchergebnis})$$

Damit sind die angezeigten oder relevanten Suchterme eine Funktion der Nebenbedingungen:

$$\text{Suchterm}_{\text{angezeigt}}=f(\text{Nebenbedingung für Suchergebnis})$$

Entsprechend den Nebenbedingungen werden erfindungsgemäß im Unterschied zu einem Klassifikationssystem aus einer Datenbank eine Menge von bestimmten Suchergebnissen bzw. Suchergebnistypen ermittelt, die für die Suche relevant sind und die damit verknüpften relevanten Suchterme ermittelt, die für den Benutzer sichtbar sind. Verknüpfungen von Suchtermen und Suchergebnissen und Suchtermen untereinander werden also während der Suche dynamisch generiert oder - genauer gesagt - abhängig von Nebenbedingungen aktiviert und sind nicht a priori vorhanden, wie beim Klassifikationssystem. Auf den Verzeichnisbaum übertragen heißt das: Nicht alle Verzeichnisse klappen sich für den Sucher auf, sondern nur diejenigen, die für die Suchbedingung relevant sind, wie in Fig. 36 verdeutlicht.

Im Folgenden wird ein Vergleich zwischen Verschlagwortungssystemen und der Erfindung anhand der Fig. 37 und 38 gezeigt.

Das Modell eines Verschlagwortungsssystems gemäß dem Stand der Technik ist in Fig. 37 dargestellt.

Ein Teilmodell des erfindungsgemäßen Verfahrens, das dessen Ähnlichkeit zu einem Verschlagwortungssystem demonstriert, ist in Fig. 38 gezeigt.

Es bestehen folgende Gemeinsamkeiten zwischen der Erfindung und Verschlagwortungssystemen:

Es werden bei beiden Verfahren Teile des Originaltextes extrahiert (siehe Fig. 37 großer Pfeil), als Objekte in einer Datenbank abgelegt und mit dem Suchergebnis verknüpft (siehe senkrechte, dicke Striche der Fig. 37).

Diese Textteile zeigen jeweils unterschiedlich große Ausschnitte des Volltextes des Suchergebnisses (kleine Ausschnitte bei Schlagworten / Suchworten, große Ausschnitte bei verschlagworteten Phrasen / Suchbegriffen, Suchsätzen)

Folgende Unterschiede zwischen der Erfindung und Verschlagwortungssystemen sind jedoch zu beachten:

Bei Verschlagwortungssystemen bestehen nur Verknüpfungen zwischen Textextrakten und dem Suchergebnis selbst, nicht jedoch zwischen den Textextrakten untereinander (maximal bestehen in einer Hilfsrelation zwischen den einzelnen Textteilen Verknüpfungen in Form von allgemeinen Verweisen, um Hinweise für die Reformulierung oder Erweiterung von Suchanfragen (query extension) zu geben, die jedoch nicht auf bestimmte Suchergebnisse bezogen sind, sondern isoliert von diesen bestehen, siehe Fig. 37 dicke, waagrechte Pfeile).

Als Folge gelangt der Benutzer beim Stand der Technik immer direkt nach Eingabe eines extrahierten Textteils in das Suchsystem zum Suchergebnis. Will er daraufhin die Suchstrategie ändern, muß er die Suche neu beginnen und entsprechend neu formulieren (bei manchen Relevance-feedback-Systemen reformuliert das System anhand der dem Benutzer zusagenden Suchergebnisse selbst die neue Anfrage an das System).

Der Suchweg hat nur einen Anfang (selbstformulierte Suchanfrage) und ein Ziel (Suchergebnis der Anfrage), wie in Fig. 39 dargestellt.

Der Benutzer kann mit einem Golfspieler verglichen werden, der nur einen Schlag hat, um in das Loch zu treffen. Nach dem Abschuß muß er lange suchen, wohin er getroffen hat (metaphorisch für die relativ langen Trefferlisten, die er durchsuchen muß). Hat er das Ziel verpaßt, so muß er sich zurück zur Abschlagstelle bewegen und von neuem beginnen. Ob er dann später trifft, also ob er die richtige Suchstrategie wählt, liegt auch daran, was er aus dem ersten Schlag gelernt hat.

Erfindungsgemäß werden dagegen aus dem Originaltext unterschiedlich lange, ineinander verschachtelte semantische Textteile extrahiert und diese nicht nur mit dem Suchergebnis, sondern auch untereinander verknüpft. Alle Texteile (=Suchterme) werden so in einer Datenbank organisiert, daß sie für den Benutzer eine Kette bilden, in der jeweils ein Textteil an einem oder mehreren anderen hängt, in dem er enthalten ist, wie dies in Fig. 40 erläutert ist.

Es werden auch Verknüpfungen zu vergleichbaren Textteilen anderer Suchergebnisse und diesen selbst hergestellt und an die Kettenglieder angelagert (siehe Fig. 41). Die gemeinsam mit verschiedenen Suchergebnissen verknüpften Suchterme zeigen als deren gemeinsamer Nenner diejenigen Textextrakte, die in beiden Suchergebnissen vorkommen. Damit wird die Komplexität und der Umfang der Inhaltsrepräsentation der Suchergebnisse reduziert.

Der Benutzer gelangt bei der Suche jeweils entlang der Kette von einem Suchterm zum nächsten, bis er schließlich das mit dem letzten Suchterm verknüpfte Suchergebnis selbst sieht (wenn er den Suchpfad nicht vorher abbricht). Dabei sieht er immer größere Ausschnitte der Suchergebnisse.

Er kann auf diese Weise die Suchstrategie während des Suchvorgangs entsprechend dem Wissen ändern, das er aus den Zwischenergebnissen (Zwischengliedern der Kette) erlernt.

Sein Suchweg hat einen Anfang (ausgewählter, kurzer Textausschnitt / Suchterm a), ein Ziel (Suchergebnis) und dazwischen Zwischenergebnisse (verschieden lange Textausschnitte / Suchterme b-c, die sowohl mit dem Suchergebnis als auch mit dem zuerst ausgewählten kurzen Suchterm verknüpft sind), wie dies in Fig. 42 dargestellt ist.

Der Benutzer ist in der Erfindung so gestellt, wie ein Golfspieler in der Realität. Er hat mehrere Schläge und muß nicht mit einem Schlag treffen. Die Richtung seiner Schläge bzw. die Suchrichtung kann er entsprechend den Zwischenergebnissen (verknüpfte Suchterme bzw. Position des Golfballs nach den jeweiligen Zwischenschlägen) anpassen, indem er bestimmte Suchterme auswählt.

Dem Benutzer werden während der gesamten Suche bei allen Suchaktionen Vorgaben in Form von Listen von relevanten Suchtermen (s.o.) gemacht, er muß keine Suchanfrage frei formulieren.

Bei Verschlagwortungssystemen muß der Benutzer immer eine Suchanfrage formulieren.

Im günstigsten Fall bekommt der Benutzer zwar Vorgaben aus einem Thesaurus, diese sind aber auf den ganzen, im System verfügbaren Wortschatz bezogen und nicht auf diejenigen Schlagworte, die mit jeweils relevanten Suchergebnissen und relevanten Zwischenergebnissen / Suchtermen verknüpft sind. So kann es z.B. passieren, daß ein Benutzer zwei Einträge aus dem Thesaurus wählt und mit miteinander verknüpft, obwohl es keine Suchergebnisse gibt, in denen beide in einer entsprechend verknüpften Form auftreten.

Nachdem die Erfindung bisher anhand der theoretischen Struktur erläutert worden ist, soll nun ein praktisches Ausführungsbeispiel der Erfindung dargestellt werden. Die Fig. 43 zeigt zu diesem Zweck die erfindungsgemäße Systemumgebung. Im Prinzip besteht das in Fig. 43 dargestellte Gesamtsystem der Erfindung aus einem Dokumentenverwaltungssystem 100 und dem Recherchesystem 110. In dem Dokumentenverwaltungssystem 100 werden Textdokumente 102 mittels eines Dokumentenverwaltungsprogrammes 104 und mittels Referenzdatenbanken und Referenzdateien 106 automatisch oder halbautomatisch unter Kontrolle eines Administrators 108 in diejenigen Arbeitsdatenbanken und Arbeitsdateien umgesetzt, auf die dann der Benutzer mittels des erfindungsgemäßen Rechercheprogramms und entsprechender Viewerprogramme (beispielsweise Internet-Browser) zugreift. Das Recherchesystem 110 liefert wiederum Referenzen auf die entsprechenden vom Benutzer 118 gewünschten Textdokumente 120.

Das erfindungsgemäße Recherche-System 110 liefert dem Benutzer 118 Textdokumente als Ergebnis in Abhängigkeit von seinen Suchaktionen. Das Dokumentenverwaltungssystem 110 bereitet die Informationen aus Dokumenten 102 in Bezug auf die Suchobjekte auf und generiert daraus Referenzdatenbanken 106, die mit einem Teil ihres Informationsgehaltes als Datenbasis für die persistenten Datenspeicher des erfindungsgemäßen Verfahrens (=Arbeitsdatenbanken/-dateien) 112 fungieren.

Der Benutzer 118 greift dabei mit Hilfe eines erfindungsgemäßen Programms 114 über entsprechende Schnittstellen auf die Datenbanken 112 zu. Unterstützend wirken Viewerpogramme 116 (insbesondere HTML-Browser).

Diese Erfindung kann sowohl in einer dezentralen Stand-alone-(alle Elemente lokal auf dem Rechner des Benutzers) als auch in zentralen Client-Server-Architektur (Recherche-Programm, Viewerprogramme, Schnittstellen: Client, Datenspeicher, Textdokumente: Server) arbeiten und dabei wahlweise interne oder externe Informationen recherchieren.

Im folgenden wird ein Datenmodell eines erfindungsgemäßen Rechercheverfahrens im einzelnen erläutert:

Die Datenobjekte des erfindungsgemäßen Systems sind

1. *Suchterne*

$$\left.\begin{array}{ll} a. & Suchworte(W) \\ b. & Komposita(K) \\ c. & Suchbegriffe(B) \\ d. & Suchsätze(S) \end{array}\right\} Suchobjekte$$

2. *Dokumentprofile*
3. *Dokumente*

Zwischen den Objekten gibt es erfindungsgemäß multiple Verknüpfungen

1. Konkretisierungsrelationen
2. Thesaurusrelationen

    a) Spezialisierungsrelationen
    b) Erweiterungsrelationen
    c) Verallgemeinerungsrelationen

3. Verknüpfungsrelationen

Fig. 44 zeigt ein entsprechendes Entity Relationshipmodell für die erfindungsgemäßen Konkretisierungsrelationen.

Bezüglich der Konkretisierungsrelation gelten zwei Grundregeln:

Es darf zwischen zwei Suchtermen in der Konkretisierungsrelation nur einen Verbindungspfad geben.

Dieser sollte in Bezug auf die beteiligten Suchterme so lang wie möglich sein.

Fig. 45 zeigt ein entsprechendes Beispiel:

Ein Suchwort darf nicht mit einem Suchbegriff direkt und zugleich indirekt über ein Kompositum durch die Konkretisierungsrelation verknüpft sein, so daß zwei Verknüfpungspfade zwischen Suchwort und Suchbegriff entstehen. Die kurze Verbindung wird aufgelöst, so daß zwischen Suchwort und Suchbegriff nur eine Konkretisierungsrelation über das Kompositum besteht, wie in Fig. 46 dargestellt.

Fig. 47 zeigt ein Entity relationship Modell für die erfindungsgemäße Spezialisierungsrelation und Fig. 48 zeigt das entsprechende Entity relationship Modell für die erfindungsgemäße Erweiterungsrelation.

Fig. 49 zeigt das Entity relationship Modell für die erfindungsgemäße Verallgemeinerungsrelation und Fig. 50 zeigt das Entity relationship Modell für die erfindungsgemäße Verknüpfungsrelation. Die Figuren 51a und 51b sind hintereinander angeordnet zu denken und zeigen ein Attributmodell der erfindungsgemäßen Datenobjekte.

Fig. 52 zeigt die Legende zu den Figuren 51a und 51b. Es ist dabei zu beachten, daß ein Attribut jeweils (auch) Primärschlüssel ist.

Fig. 53 zeigt das Verzeichnis der in dem vorliegenden Ausführungsbeispiel der Erfindung verwendeten Attribute.

Im folgenden ist eine Datenorganistion nach dem Muster ST1 + Relation(ST1-ST2) → ST2 ausgeführt, das heißt, die Information über die Verknüpfung (ST1-ST2) ist im Datensatz des Ausgangssuchterms ST1 abgelegt, der als Ausgangspunkt für die Suche nach einem im allgemeinen Sinn verknüpften Suchterm ST2 fungiert.

Alternativ ist auch die Möglichkeit ST1 → + Relation(ST1-ST2) + ST2 möglich, wobei die Information über die Verknüpfung im Datensatz des Zielsuchterms ST2 abgelegt ist, der als Ziel für die Suche nach einem im allgemeinen Sinn verknüpften Suchterm ST2 fungiert.

Das erfindungsgemäße System arbeitet mit verschiedenen Datenspeichern (siehe doppelt umrandete Bereiche in Fig. 51a und 51b). Alle Daten sind in persistenten Datenspeichern abgelegt, wobei diese entweder ein Datenbankformat (Ausnahme Suchlistendatei) oder das Format strukturierte Dateien / Textdateien haben können.

(Anmerkung: im folgenden ist unter Datenspeicher ein persistenter zu verstehen, es sei denn er wird als temporärer bezeichnet).

Größere Systeme mit Multi-user-Zugriff auf zentrale Datenbestände, die in einem Netzwerk als Server fungieren, sind typischerweise als Datenbank ausgeführt, kleinere dezentrale Versionen, die in einem Netzwerk die Rolle eines Client übernehmen, arbeiten tendeziell mit Dateien als Datenspeicher.

In Datenbanken fungieren die Attribute interest_area und Dok_K1 entweder als Attribut für die Datensätze oder als Verteilungsschlüssel.

Das Recherche-Programm kann für die Suche wahlweise auf externe Datenspeicher zugreifen, wenn externe Informationen gesucht werden oder auf die entsprechenden internen Datenspeicher, falls nur archivierte interne Informationen gesucht werden. Interne und externe Datenspeicher können in unterschiedlichen Formaten vorliegen. Das Recherche-Programm wählt die jeweils zu benützenden Datenspeicher anhand eines vom Benutzer vorgegebenen Datenspeicherparameters [Suchstatus] .

Im folgenden wird der Aufbau einer erfindungsgemäßen Suchlistendatei anhand der Fig. 54 näher erläutert. Die Suchlistendatei enthält folgende Objekte: Suchworte und Komposita mit den jeweiligen Synonymen in alphabetischer Reihenfolge. Die Fig. 54 zeigt eine entsprechende Darstellung in Tabellenform.

Für die Fig. 54 bis 59 gilt folgende Legende:

Unterstrichen: Attribute, die als Primärschlüssel in Dateien fungieren
(In Klammern): Attribute, die als Sortierungsschlüssel oder fakultativ als Verteilungsschlüsel in Datenbanken fungieren können

Die Suchliste gem. Fig. 54 enthält Daten, die im Zeitablauf eher gleich bleiben. Für jeden übergeordneten Fachbereich existiert eine Suchlistendatei, die alle Suchworte und Komposita aus diesem Fachbereich enthält. Sie wird lokal auf dem Rechner abgelegt, auf dem die Suche durchgeführt wird. Die externe Suchlistendatei (=für externe, nicht archivierte Informationen) wird vor jeder Suche aktualisiert, die interne Suchlistendatei bei der Archivierung.

Die Suchlistendatei enthält alle Informationen, um mit den Suchobjekten, Suchwörtern und Komposita uneingeschränkt lokal zu arbeiten.

Die Suchlistendatei dient bei der Vorauswahl dem Benutzer als Wortschatzspeicher, den er sich auflisten kann, um in die Suche einzusteigen, ohne diese formulieren zu müssen. Das Einschließen von Synonymen sorgt dafür, das er er alle Möglichkeiten vorfindet und nicht überlegen muß. Synonyme tragen gleiche ST_ID und können daher alternativ gebraucht werden.

Die Suchlistendatei wird vor der Suche aktualisiert.

Für eine erfindungsgemäße Suchlistendatei empfehlen sich folgende Parameter:

Sortierung Datensätze: nach ST_Name
Verteilung Datenspeicher nach interest_area(oblig.)
Format: strukturierte Datei
Anzahl: 1 pro Fachbereich
Persist. Datenspeicher/Benutzeroberfläche: searchview/Suchmaske
Übertragung von Daten auf den Client:
vor der Suche (vor Vorauswahl)

Als nächstes soll der Aufbau einer Thesaurusdatenbank oder -datei für die beschriebene erfindungsgemäße Lösung anhand der Fig. 55 erläutert werden. Eine solche Thesaurusdatenbank oder -datei enthält alle Suchterme ohne Synonyme als Objekte.

Die Thesaurusdatenbank /-datei unterstützt die Hauptauswahl.

Die Thesaurusdatenbank /-datei wird nur in soweit lokal (persistent) vorgehalten, wie lokal vorhandene (archivierte) Dokumente gesucht werden sollen. Die damit verknüpften Suchterme lassen sich dann lokal speichern und aufrufen. Hier besteht ein Unterschied zur Suchlistendatei, die auch Suchterme persistent verfügbar hält, die mit Dokumenten verknüpft sind, die sich nicht im lokalen System befinden.

Im Gegensatz zur Suchlistendatei werden die Datensätze der lokalen Thesaurusdatenbank nicht vor der Suche und unabhängig davon akutalisiert, ob sie später gebraucht werden, sondern erst nach der Suche und dem Download eines entsprechenden Dokumentes durch die Archivierung.

Es werden dafür folgende Parameter empfohlen:

Sortierung Datensätze: nach ST_Name
Verteilung Datenspeicher nach interest_area(oblig.)
Format: strukturierte Datei
Anzahl: 1 pro Fachbereich
Persist. Datenspeicher/Benutzeroberfläche: searchview/Suchmaske
Übertragung von Daten auf den Client:
vor der Suche (vor Vorauswahl)

Weiter wird im Folgenden eine Resourcendatenbank oder -datei für das beschriebene Ausführungsbeispiel der Erfindung anhand der Fig. 56 erläutert. Eine solche Resourcendatenbank oder -datei enthält die Identifikationen (ID's) aller Suchterme und Dokumentenprofile, die sich auf ein Dokument beziehen.

Die Ressourcendatenbank /-datei ist eine Schaltstelle zwischen den andernen Datenbanken und stellt den Bezug zwischen Dokumenten und deren Suchobjekten her.

Sie hat dabei zwei Funktionen:

Einerseits dient sie für den Prozess "Verknüpfung", in dem sich aus ihr in Dokumenten gemeinsam enthaltene Suchterme ermitteln lassen. Andererseits liefert sie die Information an den Server, welche Suchterme er nach dem Download zur Archivierung eines geladenen Dokumentes an den Client schicken muß, damit dort später die Suche mit den gleichen Suchtermen reproduziert werden kann.

Die Ressourcendatenbank enthält die [Dok_K1] des Dokuments als Verteilungsschlüssel. Für die Übertragung von Ressourcendatensätzen auf den Client gilt dasgleiche, wie für die Thesaurusdatenbank/-datei. Sie weist vorzugsweise folgende Parameter auf:

Sortierung Datensätze: nach Dok_K1, innerhalb nach Dok_ID
Verteilung Datenspeicher: nach Suchstatus (oblig.), Dok_K1 (fak.)
Format: nach strukturierte Datei oder Datenbank
Persist. Datenspeicher/Benutzeroberfläche: searchview/ -

Übertragung von Daten auf den Client: bei der Archivierung

Weiter soll im folgenden anhand der Figuren 57 und 58 die Struktur einer Indexdatenbank oder -datei für das dargestellte Ausüfhrungsbeispiel der Erfindung erläutert werden. Eine solche Indexdatenbank oder -datei enthält als Objekte die Dokumentprofile. Fig. 57 zeigt an einem Beispiel für ein Literaturdokument die entsprechende Darstellung in Tabellenform.

Die Indexdatenbank enthält die Dokumentprofile. Diese werden entweder als HTML-Seite in einem HTML-Browser dargestellt, die aus der Indexdatenbank generiert wurde (in diesem Fall können abhängig von den zu konkretisierenden Suchsätzen mehrere Profile in einem Fenster dargestellt werden), oder das Dokument ist in einer Datei in einem Textformat dargestellt. In diesem kann nur ein Profil pro Fenster dargestellt werden.
Fig. 58 zeigt ein Beispiel für ein solches Dokumentprofil.

Die Indexdatenbank oder -datei weist dabei vorzugsweise die folgenden Parameter auf:

Sortierung Datensätze: nach Dok_K1, innerhalb nach Dok__Prof_ID
Verteilung Datenspeicher nach Suchstatus (oblig.), Dok_K1 (fak.)
Format: Textdatei oder Datenbank
Persist. Datenspeicher/Benutzeroberfläche: HTML-Browser oder Texteditor

Übertragung von Daten auf den Client: bei der Archivierung

Das Dokument selbst wird direkt von einem Server geladen oder aus einer Datenbank selektiert. Die entsprechende Dokumentendatenbank oder -datei ist in Fig. 59 erläutert. Für die Dokumentendatenbank oder -datei gelten vorteilhafterweise die folgenden Parameter:

<u>Sortierung Datensätze (DB):</u> nach Dok_K1, innerhalb nach Dok_ID
<u>Verteilung Datenspeicher(DB)</u> nach Suchstatus (oblig.), Dok_K1 (fak.)
<u>Format:</u> Textdatei oder Datenbank
Persist. Datenspeicher/Benutzeroberfläche: HTML-Browser oder Texteditor
Übertragung von Daten auf den Client:

laden: bei der Endauswahl
speichern: bei der Archivierung

Im folgenden werden die Benutzeroberflächen und die temporären Datenspeicher des Rechercheprogramms anhand der Fig. 60 erläutert.

Das Recherche-Programm hält jeweils Auszüge von Objekten (Lieferdatensätze, Leseattribute) in temporären Datenspeichern als sogenannte "Views". Ein View besteht aus einer interaktiven Benutzeroberfläche (Maske), temporären Speichern und den dazugehörigen Schnittstellen.

Die in Fig. 60 dargestellte Suchmaske des Searchview wird für die Vorauswahl und die Hauptauswahl verwendet und enthält ein Eingabefeld, ein Ausgabefeld und Schaltflächen, um die verschiedenen Suchprozesse auszulösen.

Die Ergebnisse jedes Suchprozesses (=Lieferdatensätze, siehe unten) werden aus dem jeweiligen persistenten Datenspeicher über Schnittstellen in der gleichen Anordnung in temporäre Datenspeicher eines View geliefert.

Dabei werden die in Fig. 60 eingerahmten Teile (Anzeigeattribute) dem Benutzer angezeigt.

Der Benutzer kann nun einige Suchterme zeilenweise markieren und in den nächsten Prozess miteinbeziehen (oder einige löschen und den Rest in den nächsten Suchprozess miteinbeziehen).

Die für den Prozess entsprechenden Leseattribute (nicht angezeigt, in Fig. 60 in den gestrichelten Feldern im Ausgabefenster dargestellt), die temporär im serchview gespeichert sind, werden zur Selektion der ihnen entsprechenden Suchobjekte aus dem jeweiligen persistenten Datenspeicher als Selektionskriterium an diesen übergeben.

Mit dem Eingabefeld kann der Benutzer die Position des Sichtausschnittes der angezeigten Suchliste steuern (listbrowsing). Die Position wird vom System immer so gewählt, daß diejenigen Einträge im sichtbaren Bereich sind, die mit der eingegebenen Buchstabenkombination (string) beginnen.

In der in Fig. 61 dargestellten Einschränkungsmaske werden am Anfang jeder Suche (Vorauswahl) der Suchstatus festgelegt ("Gesuchte Informationen") sowie der Fachbereich.

Werden externe Informationen ("neue Informationen") gesucht, führt das System eine Aktualisierung der lokalen Suchlistendatei des gewählten Fachbereichs aus und greift fortan immer auf die als extern definierten persistenten Datenspeicher zu.

Eine Veränderung der Parameter Suchstatus ("Gesuchte Informationen") und Fachbereich zu einem beliebigen Zeitpunkt zur Laufzeit des Programms stößt eine neue Suche an, die wieder mit der Vorauswahl beginnt.

Sind Suchstatus und Fachbereich vom Benutzer festgelegt worden, sind die Felder "Einschränkungen" in Fig. 61 aktiviert und können vom Benutzer ausgewählt werden. Durch Auswählen der Felder definiert der Benutzer die von ihm gewünschte Dok_K1. Die Einschränkungen können sowohl zu Anfang einer Suche bei der Vorauswahl als auch während der Hauptauswahl stattfinden (Prozess, Einschränkung, sh. unten).

Nun wird die Funktion des erfindungsgemäßen Verfahrens anhand eines Funktionsmodells erläutert. Fig. 62 zeigt den Grobablauf bei der Suche nach externen Informationen.

Für die Stufen 1 bis 4 der Fig. 62 (Vorauswahl, Hauptauswahl, Endauswahl und Archivierung) gelten folgende Bedingungen:

1. Vorauswahl:

→ Eingangsbedingung:

- Recherche-Programm gestartet, Beschränkungsmaske geladen
- Definition des relevanten Wortschatzes an Suchwörtern und Komposita über Einschränkungsmaske
- Ausgabe der relevanten Suchwörter und Komposita in Ausgabefeld Suchmaske

← Ausgangsbedingung:

- Liste von relevanten Suchwörtern und Komposita in Ausgabefeld Suchmaske

2. Hauptauswahl:

→ Eingangsbedingung:

- Liste von relevanten Suchwörtern und Komposita in Ausgabefeld Suchmaske
- Sukzessives Filtern der gewünschten Suchterme und Bestimmung relevanter Dokumentprofile über diverse Suchprozesse der Hauptauswahl

← Ausgangsbedingung:

- Gefilterte Dokumentprofile in einem Dokumentprofil-Viewer angezeigt

3. Endauswahl:

→ Eingangsbedingung:

- Gefilterte Dokumentprofile in einem Dokumentprofil-Viewer angezeigt
- Auswahl von Dokumentprofilen und Anzeige des Dokumentes in einem Dokument-Viewer

← Ausgangsbedingung:

- Dokukment geladen

4. Archivierung

→ Eingangsbedingung:

- Dokument geladen, Suche nach externen Informationen
- Im Falle eines Client-Server-Systems, bei dem das Recherche-Programm die externen (serverseitigen) Suchobjekte und Dokumente in den vorhergehenden Schritten nur temporär speicherte, werden diese bei der Archivierung auf den Client übertragen und persistent abgespeichert, wobei ein clientabhängiges Datenformat verwendet wird.

← Ausgangsbedingung:

- Übertragung abgeschlossen

Anhand der Fig. 63 wird der Grobablauf bei der Suche interner Informationen erläutert:

Werden interne Informationen gesucht, entfällt die Archivierung, da alle Dokumente und Suchobjekte bereits lokal verfügbar sind.

Fig. 64 zeigt ein Funktionsmodell des Grobablaufs bei der Server-Suche.

Die Serversuche ist ein Suchverfahren gemäß dem Stand der Technik, das ohne das erfindungsgemäße Programm arbeitet. Dabei greift der Clientrechner direkt auf den Server über servereigene Schnittstellen zu. Die Kommunikation zwischen den Serverdatenbanken erfolgt mit Hilfe einer severseitigen Schnittstelle, die die Benutzeroberflächen während einer Sitzung auf dem Client erzeugt. Aus Ressourcengründen muß hier die Vorauswahl entfallen.

Die Suche beginnt mit dem Prozeß "Einschränken" der Hauptauswahl. Anschließend muß der Benutzer in das Eingabefeld der Suchmaske einen string eingeben, der im Attribut ST_Name der Thesaurusdatenbank/-datei gesucht wird. Falls er gefunden wird, wird der entsprechende Datensatz an den Searchview übertragen und die Hauptauswahl fortgesetzt. Falls er nicht gefunden wird, ergeht eine entsprechende Fahlermeldung an den Benutzer.

Im Folgenden werden die o.g. Schritte der erfindungsgemäßen Recherche anhand von Datenflußdiagrammen (Ablaufspezifikationen) in den Fig. 65 bis 68 erläutert. Die Legende für die Figuren 65 bis 68 ist in der Fig. 69 dargestellt.

Fig. 65 zeigt dabei den ersten Schritt, die Vorauswahl.

Fig. 66 zeigt die zweite Stufe, die Hauptauswahl, Fig. 67 zeigt die Endauswahl und Fig. 68 die Archivierung. Es handelt sich dabei jeweils um Programmablaufpläne. Es gilt dabei die in Fig. 69 dargestellte Legende, wobei im einzelnen Folgendes gilt: Die Übergangsbedingungen von einem Prozess zum nächsten sind dickgedruckt, der Einstieg aus dem Vorprozess bzw. der Programmstart ist durch einen ausgefüllten Kreis gekennzeichnet, der Ausstieg und Wiedereinstieg beim nächsten Prozess ist durch ein auf der Spitze stehendes Quadrat, welches schwarz ausgefüllt ist, dargestellt. Die übrigen Symbole sind in Fig. 69 im einzelnen erläutert, so daß die Darstellungen der Fig. 65 bis 68 mit dieser Legende ohne weiteres verständlich sind.

Zwischenprozesse führen zu keinen neuen Ergebnissen für den Benutzer. Sie finden zwischen zwei Prozessen ohne Benutzereingriff automatisch statt.

Pfeile, die zu einer Gruppe alternativer Prozesse führen (=Gruppenpfeile), gelten für jeden Einzelprozess.

Eingangspfeile, die sich auf Einzelprozesse richten, gelten für diese statt der entsprechenden Gruppeneingangspfeile.

Ausgangspfeile, die von Einzelprozessen ausgehen, gelten für diese statt der entsprechenden Gruppenausgangspfeile.

Datenströme sind mit dünnen durchgezogenen Linien und schwarzen Pfeilen bezeichnet, Kontrollströme sind mit gestrichelten Linien und schwarzen ausgefüllten Pfeilen gekennzeichnet.

Das hier vorgestellte Ausführungsbeispiel der Erfindung arbeitet mit den im Folgenden im einzelnen erläuterten Daten:

Datensatz:

Kompletter Datensatz in einem persistenten Datenspeicher.

Liefersuchlistensätze:

Teile der Datensätze der Suchlistendatei die aus ihr selektiert, an die Programm-Schnittstellen geliefert und im Searchview temporär gespeichert werden.

Sie enthalten die Attribute:
[ST_Name], [context] [ST_ID], [NT], [RT], [BT], [Con_K].

Lieferthesaurussätze:

Teile der Datensätze der ThesaurusDB/-datei die aus ihr selektiert, an die Programm-Schnittstellen gteliefert und im Searchview temporär gespeichert werden.

Sie enthalten die Attribute:
[ST_Name], [context] [ST_ID], [NT], [RT], [BT], [Con_K], [Con_B], [Con_S], [Con_D].

Anzeigesätze:

Teilbereich ([ST_Name], [context]) der Liefersuchlistensätze/Lieferthesaurussätze, die dem Benutzer im Ausgabefenster sichtbar angezeigt werden.

Eingabestring:

Eingabe eines Benutzers in das Eingabefeld der Suchmaske mit dem Ziel, die Position des im Ausgabefenster sichtbaren Bereiches der Anzeigesätze zu steuern.

Leseattribute:

Die für eine Prozess relevanten Attribute der Lieferthesaurussätze von für einen Prozess ausgewählten Suchtermen. Sie werden bei jedem Prozess datensatzweise ausgelesen und die Inhalte an die jeweiligen persistenten Datenspeicher als Selektrionskriterium übergeben. Es werden alle Datensätze selektiert, die die Bedingung erfüllen:

[Leseattribut] des temporären Speichers = [Selektionsattribut] des persistenten Speichers.

Die erfindungsgemäßen Prozesse und ihre Leseattribute sind in der folgenden Tabelle dargestellt:

| Prozess | Leseattribute | Datenspeicher:Selektionsattribut |
|---|---|---|
| Einschränken, Reload | [ST_ID] | TH_DB/-datei:[ST_ID] |
| Spezialisieren | [ST_ID], [NT] | TH_DB/-datei:[ST_ID] |
| Erweitern | [ST_ID], [RT] | TH_DB/-datei:[ST_ID] |
| Verallgemeinern | [ST_ID], [BT] | TH_DB/-datei:[ST_ID] |
| Konkretisieren(Komposita) | [ST_ID], [Con_K] | TH_DB/-datei:[ST_ID] |
| Konkretisieren(Suchbegriffe) | [ST_ID], [Con_B] | TH_DB/-datei:[ST_ID] |
| Konkretisieren(Suchsätze) | [Con_S] | TH_DB/-datei:[ST_ID] |
| Konkretisieren(Dok_Profile) | [Con_D] | IX_DB/-datei:[Dok_Prof_ID] |
| Verknüpfen | [ST_ID](a) [ST_ID](b) | RES_DB/-datei:[ST_ID/Dok_Prof_ID] TH_DB/-datei:[ST_ID] |
| Einschliessen / Ausschliessen | [ST_ID](b) [ST_ID](c) | RES_DB /-datei:[ST_ID/Dok_Prof_ID] TH_DB/-datei: [ST_ID] |

In obiger Tabelle bedeutet:

TH: Thesaurus
IX: Index
RES: Ressourcen

Selektionskriterien für Datensätze:

Fakultativ: Verteilungsschlüssel für Datenspeicher oder Sortierungskriterien
Obligatorisch: Identifizierungskriterien, Primärschlüssel

Programmparameter:

Notation: Daten/Datenspeicher, (Parameter/Parameterwert/Bedingung)
Klammerausdruck spezifiziert relevante(n) Daten/Datenspeicher

Suchstatus:

Parameter(intern/extern): für die Auswahl des persistenten Datenspeichers:

Intern: es wird vom Recherche-Programm jeweils auf den persistenten Datenspeicher zugegriffen, in dem sich interne (archivierte) Suchobjekte und Dokumente befinden.
Extern: es wird vom Recherche-Programm jeweils auf den persistenten Datenspeicher zugegriffen, in dem sich externe Suchobjekte und Dokumente befinden.

Client:

Identifizierungsgröße, die dem Aktualisierungsprozeß einen bestimmten clientabhängigen persistenten Speicher mit einem bestimmten Format als Quell-/Zielspeicher zuweist.
Interest_area:

Siehe Attributmodell (Fig. 51a und 51b)

Dok_K1 :
Siehe Attributmodell (Fig. 51a und 51b)

Create_date:
Erstellungsdatum des Datensatzes

Funktion der Parameter:

Normal: obligatorisches Selektionskriterium oder Parameterdefinition
kursiv: fakultativer Verteilungsschlüssel
unterstrichen: Parameter zur Wahl des persistenten Datenspeichers

Dateien/Datenbanken (persistente Datenspeicher):
Persistente Datenspeicher befinden sich auf dem Arbeitsrechner des Benutzers (stand-alone-System) oder auf einem externen Rechner (=Server) (client-Server-System).

Quellspeicher:
Externes Speichersystem, das die externen persistenten Datenspeicher enthält und bei der Archivierung / beim Download die Daten an die entsprechenden internen persistenten Datenspeicher im Zielspeicher überträgt.

Zielspeicher(Client):
Internes Speichersystem, das die internen persistenten Datenspeicher enthält und bei der Archivierung / beim Download die Daten aus dem Quellspeicher aufnimmt.

Definition der einzelnen Datenspeicher s.o.

Datenquellen/-senken (temporäre Datenspeicher):
Temporäre Datenspeicher befinden sich auf dem Arbeitsrechner des Benutzers.

Bestandteile des Recherche-Programms:

Schnittstelle

Systemeinheiten,die den Datenaustausch zwischen temporären und persistenten Datenspeichern und die temporäre Datenhaltung steuern und unterstützen.

Limitation view:
= Einschränkungsmaske(Benutzeroberfläche) und dazugehörige Schnittstellen siehe oben

Search view:
= Suchmaske(Benutzeroberfläche) und dazugehörige Schnittstellen siehe oben

Programmexterne Bestandteile:

Dok_Profil_Viewer:
Editor für Dokumentprofile, z.B. Texteditor, Textverarbeitungsprogramm, HTML-Browser

Dokumentenviewer:
Editor für Dokumente, z.B. Texteditor, Textverarbeitungsprogramm, HTML-Browser

Im Folgenden wird die Prozess-Spezifikation der einzelnen Rechercheschritte nacheinander wie folgt dargestellt:

1.1 Vorauswahl

→ Eingangsbedingung:
Recherche-Programm gestartet, Limitation view gestartet

Die Limitationsdaten werden über die Einschränkungsmaske eingegeben.

← Ausgangsbedingung (Suchstatus= intern):
Suchstatus, Interest_Area, Dok_Kl definiert, Benutzerkommando "Suche starten/fortführen" abgesetzt.
← Ausgangsbedingung (Suchstatus= extern):
Suchstatus, Interest_Area, Dok_Kl definiert, Suchlistenaktualisierung abgeschlossen, Benutzerkommando "Suche starten/fortführen" abgesetzt.

1.2 Suchlistenaktualisierung

→ Eingangsbedingung:
Suchstatus = externe Suche, interest_area definiert.

Die Suchlistendatei(extern, interest_area) wird mit Datensätzen aus einer Aktualisierungssuchlistendatei (extern, interest_area) aktualisiert.

← Ausgangsbedingung:
Suchliste aktualisiert.

1.3 Suchlistenselektion

→ Eingangsbedingung (Suchstatus= intern Suche):

Suchstatus, Interest_Area, Dok_K1 definiert, Benutzerkommando "Suche starten/fortführen" abgesetzt.

→ Eingangsbedingung (Suchstatus= extern):
Suchstatus, Interest_Area, Dok_Kl definiert, Suchlistenaktualisierung abgeschlossen, Benutzerkommando "Suche starten/fortführen" abgesetzt.
Der Search view wird gestartet. Die Suchterme werden aus der Suchlistendatei (interest_area,Suchstatus) selektiert (Dok_Kl als Selektionskriterium). Die Liefersuchlistensätze werden an den Search View geliefert und die Anzeigesätze in der Ausgabemaske angezeigt.

← Ausgangsbedingung: Liefersuchlistensätze an Search View geliefert, Anzeigesätze im Ausgabefenster der Suchmaske angezeigt.

2. Hauptauswahl

2.0 Auswahl

→ Eingangsbedingung:

Anzeigesätze in Ausgabefenster der Suchmaske angezeigt.
Der Benutzer wählt im Ausgabefenster der Suchmaske Suchterme aus, mit denen der nächste Prozess vollzogen werden soll. Dazu markiert er die Suchterme zeilenweise. Es können auch Einträge gelöscht werden und die übrigen in die Auswahl einbezogen werden. Falls nichts markiert ist, gelten die übrigen angezeigten Suchterme als ausgewählt.

← Ausgangsbedingung:

Suchterme ausgewählt

Grundsuchprozess der Hauptauswahl

→ Eingangsbedingung:

Suchterme ausgewählt, Benutzerkommando(Prozess) abgesetzt, kein Leseattribut(Prozess) leer
Das Recherche-System liest aus dem searchview die Leseattribute(Prozess) der ausgewählten Suchterme aus, selektiert aus der Thesaurusdatenbank/-datei (Suchstatus) die gesuchten Suchterme (Selektionskriterien: Leseattribute, [Dok_Kl] (= obligatorisch), [interest_area] (= fakulativ)) lädt die Lieferthesaurussätze in den Searchview und zeigt im Ausgabefenster der Suchmaske die Anzeigesätze an.

← Ausgangsbedingung:

Liefersuchlistensätze an Search View geliefert, Anzeigesätze im Ausgabefenster der Suchmaske angezeigt.

2.1 Einschränken = Neudefinition Dok_K1 + Grundprozeß

Der Benutzer gibt in die Einschränkungsmaske neue Werte für die Dok_Kl ein.
Anschließend wird der Grundprozeß ausgeführt.
Benutzerkommando(Prozess): "Suche starten/fortführen"
Leseattribut (Prozess) = [ST_ID]

Anmerkung: Über eine Änderung von interest_area und Suchstatus wird die Suche von vorne begonnen → 1.1 Vorauswahl.

2.2.0 Verknüpfen

→ Eingangsbedingung:

Suchterme ausgewählt, Benutzerkommando: "verknüpfen" abgesetzt
Nebenbedingung:
alle anderen Prozesse deaktiviert

Die Leseattribute(a) werden aus dem searchview ausgelesen und aus der Ressourcendatenbank/-datei die Dok_IDs der Dokumente ermittelt, in denen die ausgewählten Suchterme enthalten sind. Es werden die ST_IDs derjenigen Suchwörter und Komposita (W, K) an den searchview geliefert, die derselben Dok_ID zugeordnet sind, und als Leseattribute(b) definiert.

Das Recherche-System liest aus dem searchview die Leseattribute [ST_ID] (b) aus, selektiert aus der Thesaurusdatenbank/-datei (Suchstatus) die gesuchten Suchterme (Selektionskriterien: Leseattribute(b), [Dok_Kl] (= obligatorisch), [interest_area] (= fakulativ)) lädt die Lieferthesaurussätze in den Searchview und zeigt im Ausgabefenster der Suchmaske die Anzeigesätze an.

← Ausgangsbedingung:

Liefersuchlistensätze an search view geliefert, Anzeigesätze im Ausgabefenster der Suchmaske angezeigt

2.2.1 Einschliessen

→ Eingangsbedingung:

2.2.0 ausgeführt, Suchterme ausgewählt(Leseattribut = [ST_ID] (b), Benutzerkommando: "einschliessen" abgesetzt Nebenbedingung:
alle anderen Prozesse deaktiviert

Die Leseattribute[ST_ID] (b) werden aus dem searchview ausgelesen und aus der Ressourcendatenbank/-datei die zugehörigen Dok_IDs der Dokumente ermittelt, in denen die ausgewählten Suchterme enthalten sind. Es werden die ST_IDs derjenigen Suchsätze (S) an den Searchview geliefert, die derselben Dok_ID zugeordnet sind, wie die Leseattribute(a) und (b), und als Leseattribute(c) definiert.

Das Recherche-System liest aus dem searchview die Leseattribute(c) aus, selektiert aus der Thesaurusdatenbank/-datei (Suchstatus) die gesuchten Suchterme (Selektionskriterien: Leseattribute(c), Dok_Kl (= obligatorisch), interest_area (= fakulativ)), lädt die Lieferthesaurussätze in den Searchview und zeigt im Ausgabefenster der Suchmaske die Anzeigesätze an.

← Ausgangsbedingung:

Liefersuchlistensätze an search view geliefert, Anzeigesätze im Ausgabefenster der Suchmaske angezeigt

2.2.2 Ausschliessen

→ Eingangsbedingung:

2.2.0 ausgeführt, Suchterme ausgewählt(zugehörige Leseattribute = [ST_ID](b)), Benutzerkommando: "ausschliessen" abgesetzt
Nebenbedingung:
alle anderen Prozesse deaktiviert

Die Leseattribute [ST_ID] (b) werden aus dem searchview ausgelesen und aus der Ressourcendatenbank/-datei die zugehörigen Dok_IDs der Dokumente ermittelt, in denen die ausgewählten Suchterme enthalten sind. Es werden die ST_IDs derjenigen Suchsätze (S) an den Searchview geliefert, die derselben Dok_ID zugeordnet sind, wie die Leseattribute[ST_ID] (a) aber nicht (b), und als Leseattribute[ST_ID] (c) definiert.

Das Recherche-System liest aus dem searchview die Leseattribute [ST_ID] (c) aus, selektiert aus der Thesaurusdatenbank/-datei (Suchstatus) die gesuchten Suchterme (Selektionskriterien: Leseattribute(c), [Dok_Kl] (= obligatorisch), [interest_area] (= fakulativ)), lädt die Lieferthesaurussätze in den Searchview und zeigt im Ausgabefenster der Suchmaske die Anzeigesätze an.

← Ausgangsbedingung:

Liefersuchlistensätze an Search View geliefert, Anzeigesätze im Ausgabefenster der Suchmaske angezeigt

2.3 Spezialisieren = Grundsuchprozess

Benutzerkommando(Prozess): "spezialisieren"
Leseattribute(Prozess) = [ST_ID], [NT]

2.4 Erweitern = Grundsuchprozess

Benutzerkommando(Prozess): "erweitern"
Leseattribute (Prozess) = [ST_ID], [RT]

2.5 Verallgemeinern = Grundsuchprozess

Benutzerkommando(Prozess): "verallgemeinern"
Leseattribute (Prozess) = [ST_ID], [BT]

2.6 Konkretisieren (Komposita) = Grundsuchprozess

Benutzerkommando(Prozess): "konkretisieren"
Leseattribute (Prozess) = [ST_ID], [Con_K]

2.7 Reload = Grundsuchprozess

Benutzerkommando(Prozess): "konkretisieren"
Leseattribut(Prozess) = [ST_ID]
→ zusätzliche Eingangsbedingung:
Leseattribut [Con_B] nicht definiert

2.8 Konkretisieren (Suchbegriffe) = Grundsuchprozess

Benutzerkommando(Prozess): "konkretisieren"
Leseattribute(Prozess) = [ST_ID], [Con_B]
→ zusätzliche Eingangsbedingung:
Leseattribut [Con_B] definiert,
Leseattribut [Con_K] leer

2.9 Konkretisieren (Suchsätze) = Grundsuchprozess

Benutzerkommando(Prozess): "konkretisieren"
Leseattribut(Prozess) = [Con_S]
→ zusätzliche Eingangsbedingung:
Leseattribut [Con_S] definiert,
Leseattribut [Con_K], Leseattribut [Con_B] definiert und leer

2.10 Konkretisieren (Dok_Profile)

→ Eingangsbedingung:
Suchterme ausgewählt, Benutzerkommando: "konkretisieren" abgesetzt,
Leseattribut [Con_D] definiert und nicht leer
Leseattribut [Con_K], Leseattribut [Con_B], Leseattribut [Con_S] definiert und leer

Das Recherche-System liest aus dem searchview das Leseattribut [Con_D] der ausgewählten Suchsätze aus, selektiert aus der Indexdatenbank die gesuchten Dok_Profile (Selektionkriterien [Con_D] (=obligatorisch), [Dok_Kl] (=fakultativ)) und lädt sie in den Dok_Profil_Viewer/ öffnet die Indexdateien der gesuchten Dok_Profile im Dok_Profil_ Viewer.

← Ausgangsbedingung:

Indexdatensätze im Dok_Profil_Viewer geladen / Indexdatei(en) im Dok_Profil_viewer geöffnet.

3. Endauswahl

Konkretisieren(Dokumente)

→ Eingangsbedingung:
Indexdatensätze im Dokumentviewer geladen

Der Benutzer wählt im Dok_Profil_Viewer Dokumentprofile und klickt darin jeweils die Schaltfläche Dok_V an. Die Dokumentdatei wird aus einem Verzeichnis in den Dokumentviewer geladen / aus einer Dokumentendatenbank selektiert und dann in einem Dokumentviewer geöffnet.

← Ausgangsbedingung
Dokument im Dokumentviewer geöffnet

4. Archivierung

→ Eingangsbedingung:
Suchstatus = externe Suche, 3 ausgeführt

Es wird die [Dok_ID] an eine clientbezogene externe RessourcenDB/ -datei (client) des Quellspeichers übergeben und die ST_IDs und Dok_Prof_IDs der Suchterme und Dokumentprofile selektiert, die in dem Dokument enthalten sind. Diese werden aus den jeweiligen externen Datenspeicher(client) selektiert.

Selektionskriterien:

Thesaurusdatenbank/-datei: [ST_ID] (=obligatorisch), [Dok_K1] (=fakultativ)
Indexdatenbank/-datei: [Dok_Prof_ID] (=obligatorisch), [Dok_Kl] (=fakultativ)
Dokumentdatenbank/-datei: [Dok_ ID] (=obligatorisch), [Dok_Kl] (=fakultativ))

und zusammen mit dem selektierten Ressourcendatensatz an den entsprechenden internen Datenspeichern(client) im Zielspeicher(client) übertragen.

← Ausgangsbedingung:
Übertragung abgeschlossen.

Im Folgenden wird die Steuerstruktur der Prozesse des vorliegenden Ausführungsbeispiels anhand der Figuren 70 und 71 näher erläutert. Fig. 70 zeigt ein Strukturdiagramm für den Prozess-Schritt der Vorauswahl. Für das gezeigte Beispiel gelten folgende Parameter:

Ausoptionen:

1 Suchstatus = intern

2 Suchstatus = extern

Prozesse:

1.1.1 Definition Suchstatus,interest_area
1.1.2. Definition Suchstatus, interest_area
1.2 Suchlistenaktualisierung
1.3 Suchlistenslektion

Fig. 71 zeigt ein Strukturdiagramm für die Prozess-Steuerung der Hauptauswahl in dem dargeestellten Ausführungsbeispiel. Die einzelnen Bezugszeichen für die Prozesse, Bedingungen und Prozesswahloptionen sind dabei wie folgt definiert:

Prozesse

2.1 Einschränken
2.2 Verknüpfen
2.3 Spezialisieren
2.4 Erweitern
2.5 Verallgemeinern
2.6 Konkretisieren (Komposita)
2.7 Reload
2.8 Konkretisieren (Suchbegriffe)
2.9 Konkretisieren (Suchsätze)
2.10 Konkrestisieren (Dok_Profile)

Bedingungen

1: Leseattribut [Con_K]
2: Leseattribut [Con_B]
3: Leseattribut [Con_S]
4: Leseattribut [Con_D]

Prozesswahloptionen:

1 Einschränken

2 Verknüpfen

3 Spezialisieren

4 Erweitern

5 Verallgemeinern

6 Konkretisieren

7 Einschliessen

8 Ausschliessen

Anhand der Figuren 72 bis 80 werden detaillierte Prozessmodelle für das vorliegende Ausführungsbeispiel der Erfindung erläutert.

Fig. 72 zeigt dabei das Prozessmodell der Vorauswahl, Fig. 73 das Prozessmodell für die Datenaktualisierung, Fig. 74 das Prozessmodell für die Suchlistenselektion, Fig. 75 das Prozessmodell für die Funktion "Einschränken", Fig. 76 das Prozessmodell für die Funktionen "Verknüpfen", "Einschließen" und "Ausschließen", Fig. 77 das Prozessmodell für die Hauptauswahl (dies entspricht den Schritten 2.3 bis 2.9 in der Übersichtsdarstellung der Fig. 71), Fig. 78 zeigt die Hauptauswahl entsprechend 2.10 in Fig. 71, Fig. 79 zeigt die Endauswahl und Fig. 80 die Archivierung.

Zum Verständnis dieser Figuren wird auf die Fig. 81 verwiesen, welche als Legende für die benutzten Bezeichnungen dient.

Gestrichelte Elemente beziehen sich auf die Suche nach externen Informationen. Beim Übertragen des Dokumentes wird von der Schnittstelle des Systems die Dok_ID erfaßt. Diese dient bei der Archivierung dazu, die Suchobjekte auf den internen persistenten Datenspeicher abzubilden.

Im Folgenden wird die Prozess-Spezifikation noch detaillierter dargestellt, wobei hier die Aktionen des Systems mit S::, und die Aktionen des Benutzers mit B:: bezeichnet sind.

1.1 Vorauswahl

1.1.1 B::definiert Suchstatus, interest_area in Einschränkungsmaske

S::Anstoßen Suchlistenaktualisierung, falls Suchstatus = externe Suche

1.1.2 B::Definition Dok_K1 in Suchmaske

1.2 Suchlistenaktualisierung

1.2.1 S::Selektieren von Datensätzen (create_date(extern) > create_date(intern) aus Aktualisierungssuchlistendatei(interest area)
1.2.2 Übertragung Datensätze an Suchlistendatei (interest_area)

Anstatt der einzelnen Datensätze kann auch eine Aktualisierungsdatei mit für bestimmte Aktualisierungszeiträume zu aktualisierenden Datensätzen übertragen werden.

1.3 Suchlistenselektion

1.3.1 S::Lädt Suchmaske, Lädt Suchlistendatei (Suchstatus, interest_area), Selektion Datensätze (Selektionskriterium: [Dok_Kl]) aus Suchlistendatei (interest_area)
1.3.2 Überträgt Liefersuchlistensätze an searchview, zeigt Anzeigesätze zeilenweise im Ausgabefenster der Suchmaske an
1.3.3 B:: gibt String ein,

S:: Scrollt Anzeigesätze, bis gegebener String = [ST_Name]

Grundsuchprozeß der Hauptauswahl

x.1 S:: Liest Leseattribute aller im Search View angezeigten Suchterme zeilenweise aus, selektiert aus Thesaurusdatenbank/-datei (Suchstatus) Datensätze Selektionskriterien: Leseattribute, [Dok_K1] Verteilungsschlüssel: [interest_area] (=fakultatives Selektionskriterium).
x.2 Löscht Inhalt Ausgabefenster Suchmaske, überträgt Lieferdatensätze in Lesereihenfolge der Leseattribute an search view, zeigt die Anzeigesätze in Lesereihenfolge zeilenweise im Ausgabefenster der Suchmaske an; Löscht Leseattribute, außer [ST_ID]

2.1 Einschränken

2.2.1 B::Definiert neue Werte für die Dok_Kl in Einschränkungsmaske.
2.2.2 = x.1
2.2.4 = x.2

2.2*

2.2.0 Verknüpfen

2.2.0.1 S:: Liest Leseattribute [ST_ID] (a) der ausgewählten Suchterme zeilenweise aus, selektiert aus Ressourcendatenbank/-datei (Suchstatus) Datensätze Selektionskriterien: Leseattribute [ST_ID] (a), [Dok_K1]
2.2.0.2 Sucht innerhalb der selektierten Datensätze ST_IDs von Suchworten (W) und Komposita (K), definiert gefundene ST_IDs = Leseattribut [ST_ID] (b) und überträgt ST_IDs an search view
2.2.0.3 Liest Leseattribute[ST_ID] (b) aller Suchterme aus
selektiert aus Thesaurusdatenbank/-datei (Suchstatus) Datensätze
Selektionskriterien: Leseattribute [ST_ID] (b), Dok_K1
2.2.0.4 Löscht Inhalt Ausgabefenster Suchmaske, überträgt Lieferdatensätze in Lesereihenfolge der Leseattribute an search view, zeigt die Anzeigesätze in Lesereihenfolge der Leseattribute zeilenweise im Ausgabefenster der Suchmaske an.

2.2.1 einschliessen

2.2.1.1 S:: Liest Leseattribute [ST_ID] (b) der ausgewählten Suchterme zeilenweise aus, selektiert aus Ressourcendatenbank/-datei (Suchstatus) Datensätze Selektionskriterien: mindestens 1 der Leseattribute [ST_ID] (a) und alle Leseattribute [ST_ID] (b) gemeinsam, [Dok_K1]
2.2.1.2 Sucht innerhalb der selektierten Datensätze ST_IDs von Suchsätzen, definiert gefundene ST_IDs = Leseattribut [ST_ID] (c) und überträgt ST_IDs an search view
2.2.1.3 Liest Leseattribute [ST_ID] (c) aller Suchterme aus
selektiert aus Thesaurusdatenbank/-datei (Suchstatus) Datensätze
Selektionskriterien: Leseattribute [ST_ID] (c), [Dok_Kl]
2.2.1.4 Löscht Inhalt Ausgabefenster Suchmaske, liefert Lieferdatensätze in Lesereihenfolge der Leseattribute an search view, zeigt die Anzeigesätze in Lesereihenfolge der Leseattribute zeilenweise im Ausgabefenster der Suchmaske an.

2.2.1 Einschliessen

2.2.2.1 S:: Liest Leseattribute[ST_ID] (b) der ausgewähl ten Suchterme zeilenweise aus, selektiert aus Ressourcendatenbank/-datei(Suchstatus) Datensätze Selektionskriterien: mindestens 1 der Leseattri bute [ST_ID] (a) und keines der Leseattribute [ST_ID] (b) gemeinsam, [Dok_K1]

2.2.2.2 Sucht innerhalb der selektierten Datensätze ST_IDs von Suchsätzen, definiert gefundene ST_Ids = Leseattribut [ST_ID] (c) und überträgt ST_IDs an search view

2.2.2.3 Liest Leseattribute [ST_ID] (c) aller Suchterme aus selektiert aus Thesaurusdatenbank/-datei (Suchstatus) Datensätze
Selektionskriterien: Leseattribute [ST_ID] (c), [Dok_Kl]

2.2.2.4 Löscht Inhalt Ausgabefenster Suchmaske, liefert Lieferdatensätze in Lesereihenfolge der Leseattribute an search view, zeigt die Anzeigesätze in Lesereihenfolge der Leseattribute zeilenweise im Ausgabefenster der Suchmaske an.

2.3 Spezialisieren = Grundprozess

2.3.1 = x.1
2.3.2 = x.2

2.4 Erweitern = Grundprozess

2.4.1 = x.1
2.4.2 = x.2

2.5 Verallgemeinern = Grundprozess

2.5.1 = x.1
2.5.2 = x.2

2.6 Konkretisieren (Komposita) = Grundprozess

2.6.1 = x.1
2.6.2 = x.2

2.7 Reload = Grundprozess

2.7.1 = x.1
2.7.2 = x.2

2.8 Konkretisieren = Grundprozess

2.8.1 = x.1
2.8.2 = x.2

2.9 Konkretisieren (Suchsätze) = Grundprozess

2.9.1 = x.1
2.9.2 = x.2

2.10 Konkretisieren (Dok_Profile)

2.10.1 S:: Liest Leseattribute aller ausgewählten Suchterme zeilenweise aus, selektiert aus Indexdatenbank (Suchstatus) Datensätze (Selektionskriterium Leseattribut) / lädt Indexdatei
2.10.2 öffnet Dok_Profil_Viewer, lädt Indexdatensätze in den Dok_Profil_Viewer/ öffnet die Indexdateien der gesuchten Dok_Profile im Dok_Profil_Viewer.

3. Endauswahl
Konkretisieren(Dokumente)

3.1 B:: wählt im Dok_Profil_Viewer Dokumentprofile und klickt darin jeweils die Schaltfläche Dok_V an.

3.2 S:: selektiert die Dokumentdatei aus einer Dokumentendatenbank(Suchstatus) / lädt die Dokumentdatei aus einem Verzeichnis öffnet Dokumentdatei im Dokumentenviewer

4. Archivierung

4.0 S:: selektiert aus RessourcenDB/-datei (extern.client), [ST_DB], [Dok_Prof_ID] (Selektionskriterien [Dok_ID] (obligatorisch) [Dok_Kl] (=fakultativ).
4.1 Überträgt die Ressourcendatensätze über eine Schnittstelle an RessourcenDB/-datei (intern).
4.2 Selektiert Suchlistendatensätze aus AktualisierungsSuchlistendatei (interest_area) (Selektionskriterien [ST_ID], [interest_area] (= obligatorisch).
4.3 Überträgt die Suchlistendatensätze über eine Schnittstelle an Suchlistendatei (intern, interest_ area).
4.4 Selektiert Thesaurusdatensätze aus ThesaurusDB/-datei (extern, client) Selektionskriterien [ST_ID] (=obligatorisch), [interest_area] (=fakultativ))
4.5 Überträgt die Thesaurusdatensätze über eine Schnittstelle an Thesaurusdatenbank/-datei (intern).
4.6 Selektiert Indexdatensätze IndexDB/-datei (extern.client) (Selektionskriterien [Dok_Prof_ID] (= obligatorisch), [Dok_Kl] (=fakultativ)) / lädt Indexdateien aus externem clientbezogenem Ressourcenverzeichnis
4.7 Überträgt/kopiert die Indexdatensätze/-datei über eine Schnittstelle an Indexdatenbank(intern)/ an das interne clientbezogene Indexverzeichnis.
4.8 Selektiert Dokumente aus DokumentDB (extern.client) mit Dok_ID (Selektionskriterien [Dok_Prof_ID] (=obligatorisch), [Dok_K1] (=fakultativ)) / lädt Dokumentdatei (extern,client)
4.9 Überträgt/kopiert die Dokumentdatensätze/-datei über eine Schnittstelle an Dokumentdatenbank (intern)/ an das interne clientbezogene Dokumentverzeichnis.

Abschließend soll als Beispiel für die Schnittstellen des vorstehend erläuterten Ausführungsbeispiels in Fig. 82 ein Schnittstellenmodell für die Funktion "Voreinschränken" angegeben werden.

**Patentansprüche**

1. Verfahren zur verzeichnisartigen Inhaltsübersicht einer durch indizierte Dokumentenprofile repräsentierten Menge von Dokumenten auf einer Anzeigeeinheit zum Zwecke der Auswahl eines Dokuments, **dadurch gekennzeichnet, dass** zu jedem Dokument jeweils verschieden lange, einander umschließende und auf diese Weise verschachtelte Textausschnitte, die aus dem Dokument entnommen sind oder deren Synonyme, als Datenobjekte in natürlichsprachiger Form in einem persistentem Datenspeicher, als Repräsentanten der Dokumente in einer Datenbank abgelegt werden, und die Repräsentanten durch Konkretisierungsrelationen verbunden sind, die eine Verbindung zwischen kürzeren und längeren Textausschnitten realisieren, und die als Attribute der Objekte realisiert werden, in denen Referenzen auf längere, umschließende Textausschnitte oder kürzere, eingeschlossene Textausschnitte hinterlegt sind, und die Repräsentanten als Knoten und die Konkretisierungsrelationen als Kanten ein semantisches Netz aufspannen, so dass Ketten von Textausschnitten entstehen, die mit Stichwörtern aus Dokumenten beginnen und mit Dokumentüberschriften enden können, wobei jedes Glied der Kette, d. h. jeder semantische Textteil, einer bestimmten Längenklasse von Textausschnitten angehört, und jeweils beim Abfragen des Datenspeichers durch einen Computer nach der Auswahl eines Textabschnittes, die auf der Anzeigeeinheit durch den Benutzer ausgelöst wird, zu dem vom Nutzer ausgewählten Textausschnitt mindestens ein Textausschnitt einer größeren Längenklasse aus der Datenbank selektiert wird, indem die Datenobjekte im Datenspeicher selektiert und ausgelesen werden, die die entsprechende Bedingung an die Attribute erfüllen und so stufenweise ein immer größerer Ausschnitt eines Dokumentes offengelegt wird.

2. Verfahren nach Anspruch 1, **dadurch gekennzeichnet, dass** die Konkretisierungsrelation zu Textausschnitten jeder Längenklasse durch ein jeweils eigenes, längenklassenspezifisches Datenattribut abgebildet wird, und das bei einem Abfragedurchlauf nach Auswahl von Repräsentanten der Dokumente durch den Benutzer immer nur die verfügbaren Einträge des Attributs der kürzesten Längenklasse ausgelesen und die zugehörigen, referenzierten Textausschnittsobjekte aus dem persistenten Datenspeicher selektiert und auf der Anzeigeeinheit anzeigt werden, so dass sich alle Suchstränge jederzeit bei der gleichen Längenklasse der Textausschnitte befinden, wodurch immer alle Dokumente in äquivalentem inhaltlichen Detaillierungsgrad präsentiert werden und damit nach mehreren Abfragedurchläufen automatisch in allen Suchsträngen zugleich Textausschnitte der längsten Klasse erreicht werden.

3. Verfahren nach Anspruch 1, **dadurch gekennzeichnet, dass** zwischen den Textausschnitten neben den Konkretisierungsrelationen auch Thesaurusrelationen, die Verbindungen mit übergeordneten, verwandten und untergeordneten Textausschnitten realisieren, und Verknüpfungsrelationen, die Verbindungen mit Textausschnitten, die im gleichen Dokument vorkommen, realisieren, bestehen, die als Referenzen in jeweils eigenen Attributen der Datenobjekte abgebildet werden und die bei der Abfrage dort ausgelesen werden.

4. Verfahren nach Anspruch 1 oder 2, **dadurch gekennzeichnet, dass** das letzte und längste Glied in der Kette der Textausschnitte durch eine Verknüpfung jeweils mit einem oder mehreren Dokumentprofilen, die eine Verknüpfung mit den Dokumenten enthalten, verbunden ist, indem das Datenobjekt in einem Attribut eine Referenz darauf enthält und somit jeder Textausschnitt direkt oder indirekt über einen zugehörigen Textausschnitt der längsten Klasse über ein Dokumentprofil einem Dokument zugeordnet ist.

5. Verfahren nach Anspruch 3, **dadurch gekennzeichnet, dass** sich die Aktionen des Benutzers auf Auswählen von Textausschnitten und Funktionen in der Anzeigeeinheit beschränken, und die entsprechenden Datenbankabfragen automatisch generiert werden, wobei zu einem oder mehreren ausgewählten Textausschnitten durch Wahl einer Funktion diejenigen Textausschnitte aus dem externen Speicher selektiert werden, die mit den ausgewählten in einer nach Anspruch 1 bis 3 definierten, der Funktion entsprechenden Relation stehen.

6. Verfahren nach einem der Ansprüche 1 bis 5, **dadurch gekennzeichnet, dass** gleiche Textausschnitte oder deren Synonyme, die in mehreren Dokumenten vorkommen, nur einmal angezeigt werden.

7. Verfahren nach Anspruch 1 bis 6, **dadurch gekennzeichnet, dass** die Textausschnitte in inhaltlich sinnvoller Gliederung wiedergegeben werden können, indem die durch die Konkretisierungsrelation zusammengehörigen Textausschnitte in unmittelbarer räumlicher Nähe in der listenförmigen Anzeige wiedergegeben werden.

8. Verfahren nach einem der Ansprüche 1 bis 4, **dadurch gekennzeichnet, dass** die Dokumente in Dokumentklassen gruppiert werden, die logisch mit den Datenobjekten verknüpft werden, so dass eine Verknüpfung eines Datenobjektes mit einer Dokumentklasse einer logischen Verknüpfung mit den in ihr enthaltenen Dokumenten entspricht, in dem Dokumentprofile der Dokumente der jeweiligen Dokumentklasse als Datenobjekte eines oder mehrere zugeordnete entsprechende Datenattribute enthalten.

**9.** Verfahren nach einem der Ansprüche 1 bis 8, **dadurch gekennzeichnet, dass** die Relationen zwischen den Datenobjekten abhängig von den mit ihnen verknüpften Dokumentklassen in globale und lokale Relationen unterschieden werden, wobei globale Relationen für den gesamten Dokumentenbestand gelten, lokale nur für diejenige Dokumentmenge, die durch die Dokumentklasse definiert wird und jeweils nur diejenigen Textausschnitte angezeigt werden, die durch eine Relation geliefert werden, die die voreingestellte Dokumentklasse erlaubt.

**10.** Verfahren nach Anspruch 1 bis 8, **dadurch gekennzeichnet, dass** Teile des Dokumentbestandes zusammen mit den logisch verknüpften Datenobjekten auf andere logische und physische Speicher übertragen werden können.

**11.** Verfahren nach einem der Ansprüche 1 bis 10, **dadurch gekennzeichnet, dass** das Dokument selbst nur dann aus dem Datenverarbeitungssystem abgerufen wird, wenn es tatsächlich vom Benutzer angefordert wird.

## Claims

**1.** Method for display of content of indexed text profiles representing an amount of documents by directories for the sake of selection of one document, **characterized in that** for each document encapsulated text extracts of various length taken from the documents or synonyms as representatives of the documents are stored in a persistent data store in form of natural language as data objects connected by detailing relations defining a relation between a shorter and a longer text extract realized as data attributes containing references to longer encapsulating or shorter encapsulated text extracts, so that the said representatives functioning as nodes and the detailing relation functioning as edges in a semantic network produce chains of text extracts starting with key words taken from documents and ending with headlines of documents whereas each chain link that is each semantic text chunk belongs to a certain longitudinal class of text extracts and at each request from the data stores by a computer activated by a user choosing a text extract displayed at a viewing device at least one text extract of a longer longitudinal class is selected and read from the date store fulfilling the conditions of the corresponding attributes and thus revealing gradually an increasing excerpt of the document.

**2.** Method of claim 1 wherein the detailing relations to text extracts belonging to a certain longitudinal class are represented by certain data attributes which are each specific for the longitudinal class, so that at each request cycle started by a user choosing a representative of a document only available items of the attribute of the shortest longitudinal class are read and referenced text extracts are selected from the persistent data store and displayed at the viewing device, so that all search threads always proceed to the same longitudinal class thus representing all documents equivalently to the same degree of detail enabling the procedure to reach the end of all search threads automatically at the same time after a couple of queries.

**3.** Method of claim 1 wherein besides of the said detailing relations also thesaurus relations, realizing connections with superordinated, associated and subordinated text extracts and combining relations, realizing connections with text extracts appearing in the same document are mapped as references each by a specific attribute of the data objects and read from there in case of a request.

**4.** Method of claim 1 or 2 wherein an attribute of the data object mapping a relation between the last and longest link of the said chain of text extracts and one or more documents or document profiles so that every text extract is assigned to a document or document profile directly or indirectly via a text extract of the longest longitudinal class.

**5.** Method of claim 3 wherein the user does not need to formulate the query but only has to choose text extracts and actions on the viewing device and the underlying data base queries are generated automatically corresponding to the chosen action rendering text extracts from the external data store connected with the chosen text extracts by any relation defined in claim 1 to 3.

**6.** Method of claim 1 to 5 wherein the same text extracts or their synonyms appearing in various documents are only once displayed.

**7.** Method of claim 1 to 6 displaying text extracts connected by the detailing relation in form of a list close together resulting in an ergonomically perceivable arrangemant of the text extracts.

**8.** Method of claim 1 to 4 wherein the documents are grouped by document classes logically connected to the data objects so that a connection of a data object to a document class corresponds to a logical relation to the documents comprised by the document class mapped by one or more data attributes included in the document profile functioning as data object.

**9.** Method of claim 1 to 8 wherein the relations between the data objects can either be local or global depending on the assigned document classes; global relations are valid for all documents, whereas local relations are only applied to documents assigned to a certain document class so that only those text extracts are displayed at a query which are connected with a chosen text extract by a relation available for the defined document class.

**10.** Method of claim 1 to 9 wherein parts of the retrieved document sets together with the connected data objects can be transferred to other logical or physical data storages.

**11.** Method of claim 1 to 10 wherein the document itself is only loaded in the computer if individually required by the user.

**Revendications**

**1.** Procédé pour l'aperçu du contenu du type d'un répertoire d'une quantité de documents représentée par des profils de documents indexés sur une unité d'affichage pour la vocation du choix d'un document, **caractérisé en ce que** pour chaque document sont sauvegardés des extraits de texte de chaque fois une longueur différente, s'entourant les uns les autres et imbriqués de cette manière, qui sont prélevés dans le document ou dont les synonymes sont sauvegardés dans une banque de données en tant qu'objets de données sous forme de parole naturelle dans une mémoire de données persistante, en tant que représentants des documents et les représentants sont reliés par des relations de concrétisation, réalisant une liaison entre des extraits de texte plus courts et plus longs et qui sont réalisés en tant qu'attributs des objets, dans lesquels des références sont enregistrées sur des extraits de texte globaux plus longs et les représentants en tant que noeuds et les relations de concrétisation en tant qu'arêtes formant un réseau sémantique, pour donner naissance à des chaînes d'extraits de texte, pouvant commencer par des mots clés de documents et se terminer par des titres de documents, chaque maillon de la chaîne, c'est à dire chaque partie de texte sémantique appartenant à une certaine classe de longueur d'extraits de texte et chaque fois à l'interrogation de la mémoire de données, après le choix d'un extrait de texte, qui sur l'unité d'affichage est déclenché par l'utilisateur, au moins un extrait de texte d'une classe de longueur plus longue étant sélectionné dans la banque de données par un ordinateur, **en ce que** les objets de données satisfaisant à la condition correspondante des attributs sont sélectionnés et lus dans la mémoire de données, pour que de cette manière, un extrait de plus en plus grand d'un document soit divulgué.

**2.** Procédé selon la revendication 1, **caractérisé en ce que** la relation de concrétisation pour des extraits de texte de chaque classe de longueur est reproduite par un attribut de données chaque fois propre, spécifique à chaque classe de longueur, et **en ce que** par la suite, lors d'un cycle d'interrogation, après le choix de représentants des documents par l'utilisateur, seulement les inscriptions disponibles de l'attribut de la plus courte classe de données sont lues et les objets d'extraits de texte référencés correspondants sont sélectionnés dans la mémoire de données persistante et affichés sur l'unité d'affichage, pour que tous les faisceaux de recherche se trouvent à tout moment près de la même classe de longueur des extraits de texte, suite à quoi tous les documents sont toujours présentés avec un taux de détails de contenu équivalent et de ce fait, après plusieurs cycles d'interrogation, des extraits de texte de la classe la plus longue sont obtenus simultanément dans tous les faisceaux de recherche.

**3.** Procédé selon la revendication 1, **caractérisé en ce qu'**entre les extraits de texte, parallèlement aux relations de concrétisation, il existe aussi des relations de thesaurus, réalisant des liaisons avec des extraits de texte supérieurs, apparentés et inférieurs et des relations d'enchaînement, réalisant des liaisons avec des extraits de texte se produisant dans le même document, qui sont reproduites en tant que références dans chaque fois des attributs propres des objets de données et qui y sont lues lors de l'interrogation.

**4.** Procédé selon la revendication 1 ou 2, **caractérisé en ce que** le dernier et plus long maillon dans la chaîne des extraits de texte est relié par un enchaînement chaque fois avec un ou plusieurs profils de documents, contenant un enchaînement avec les documents, **en ce que** l'objet de données contient dans un attribut une référence à ces derniers et de ce fait chaque extrait de texte est associé directement ou indirectement à un document, via un extrait de texte correspondant à la classe la plus longue via un profil de document.

5. Procédé selon la revendication 3, **caractérisé en ce que** les actions de l'utilisateur se restreignent au choix d'extraits de texte et à des fonctions dans l'unité d'affichage et **en ce que** les interrogations correspondantes de la banque de données sont générées automatiquement, par choix d'une fonction, les extraits de texte qui sont en relations sélectionnées, correspondant à la fonction, définies dans l'une quelconque des relations 1 à 3 étant sélectionnés dans la mémoire externe.

6. Procédé selon l'une quelconque des revendications 1 à 5, **caractérisé en ce que** de mêmes extraits de texte ou leurs synonymes qui se produisent dans plusieurs documents ne sont affichés qu'une seule fois.

7. Procédé selon la revendication 1 ou 6, **caractérisé en ce que** les extraits de texte sont susceptibles d'être reproduits dans une structure de teneur significative, **en ce que** les extraits de texte correspondants par la relation de concrétisation sont reproduits à proximité physique immédiate dans l'affichage en forme de liste.

8. Procédé selon l'une quelconque des revendications 1 à 4, **caractérisé en ce que** les documents sont groupés dans des classes de documents, qui sont logiquement enchaînées avec des objets de données, pour qu'un enchaînement d'un objet de données corresponde avec une classe de documents d'un enchaînement logique avec les documents qu'elle contient, **en ce que** des profils de documents des documents de la classe de documents concernée contiennent en tant qu'objets de données un ou plusieurs attributs de données correspondants associés.

9. Procédé selon l'une quelconque des revendications 1 à 8, **caractérisé en ce que** les relations entre les objets de données sont distinguées, en fonction des classes de documents enchaînées avec elles en relations globales et locales, des relations globales s'appliquant pour l'ensemble des documents en portefeuille et des globales uniquement pour la quantité de documents qui est définie par la classe de documents et **en ce que** chaque fois ne sont affichés que les extraits de texte qui sont fournis par une relation qui permet la classe de documents préréglée.

10. Procédé selon la revendication 1 à 8, **caractérisé en ce que** des parties du portefeuille de documents, en association avec les objets de données logiquement enchaînés sont susceptibles d'être transmises sur d'autres mémoires logiques et physiques.

11. Procédé selon l'une quelconque des revendications 1 à 10, **caractérisé en ce que** le document lui-même n'est interrogé dans le système de traitement des données que s'il est effectivement demandé par l'utilisateur.

Fig. 1

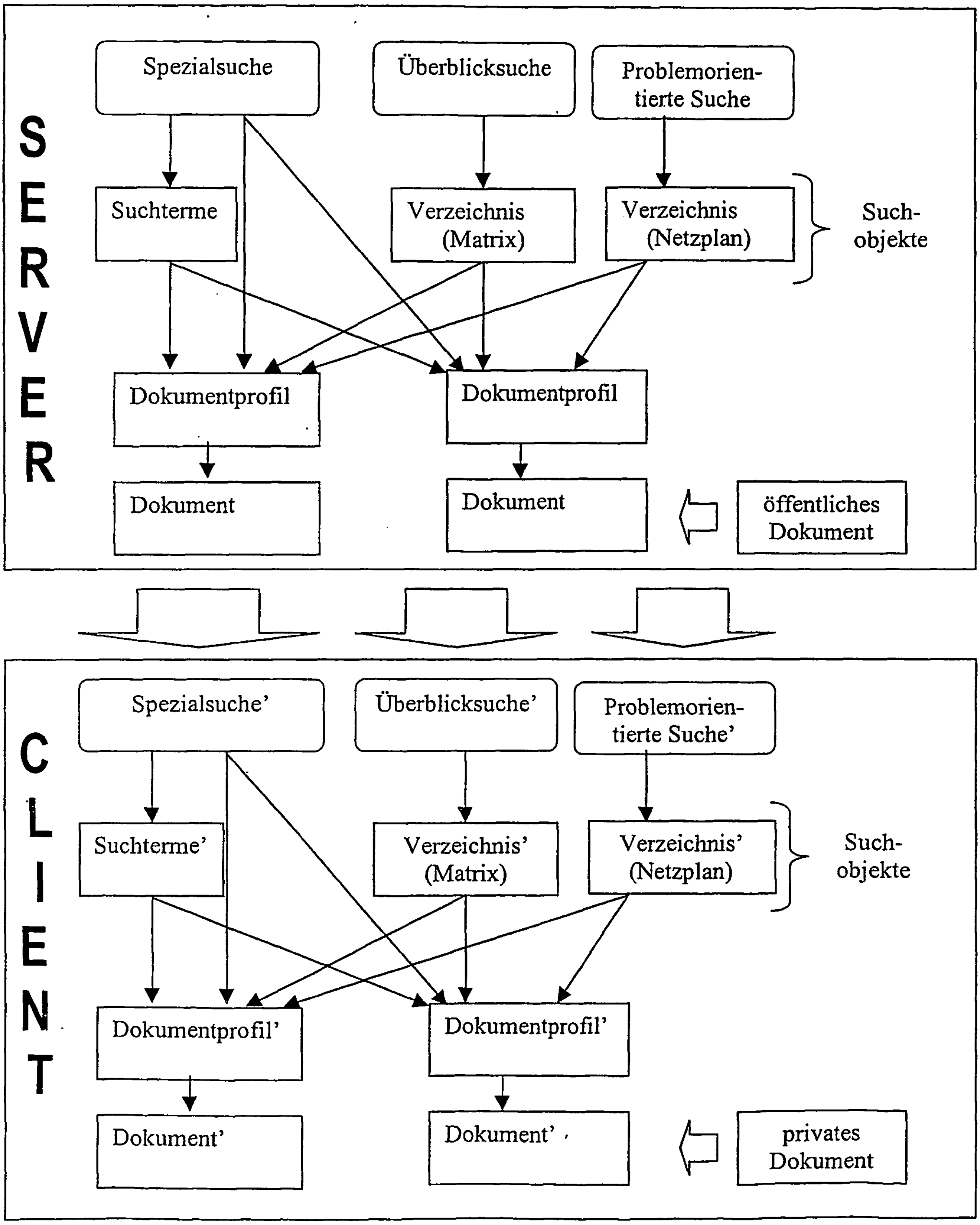
SERVER
Spezialsuche
Überblicksuche
Problemorientierte Suche
Suchterme
Verzeichnis (Matrix)
Verzeichnis (Netzplan)
Such-objekte
Dokumentprofil
Dokumentprofil
Dokument
Dokument
öffentliches Dokument
CLIENT
Spezialsuche'
Überblicksuche'
Problemorientierte Suche'
Suchterme'
Verzeichnis' (Matrix)
Verzeichnis' (Netzplan)
Such-objekte
Dokumentprofil'
Dokumentprofil'
Dokument'
Dokument'
privates Dokument

Fig. 2

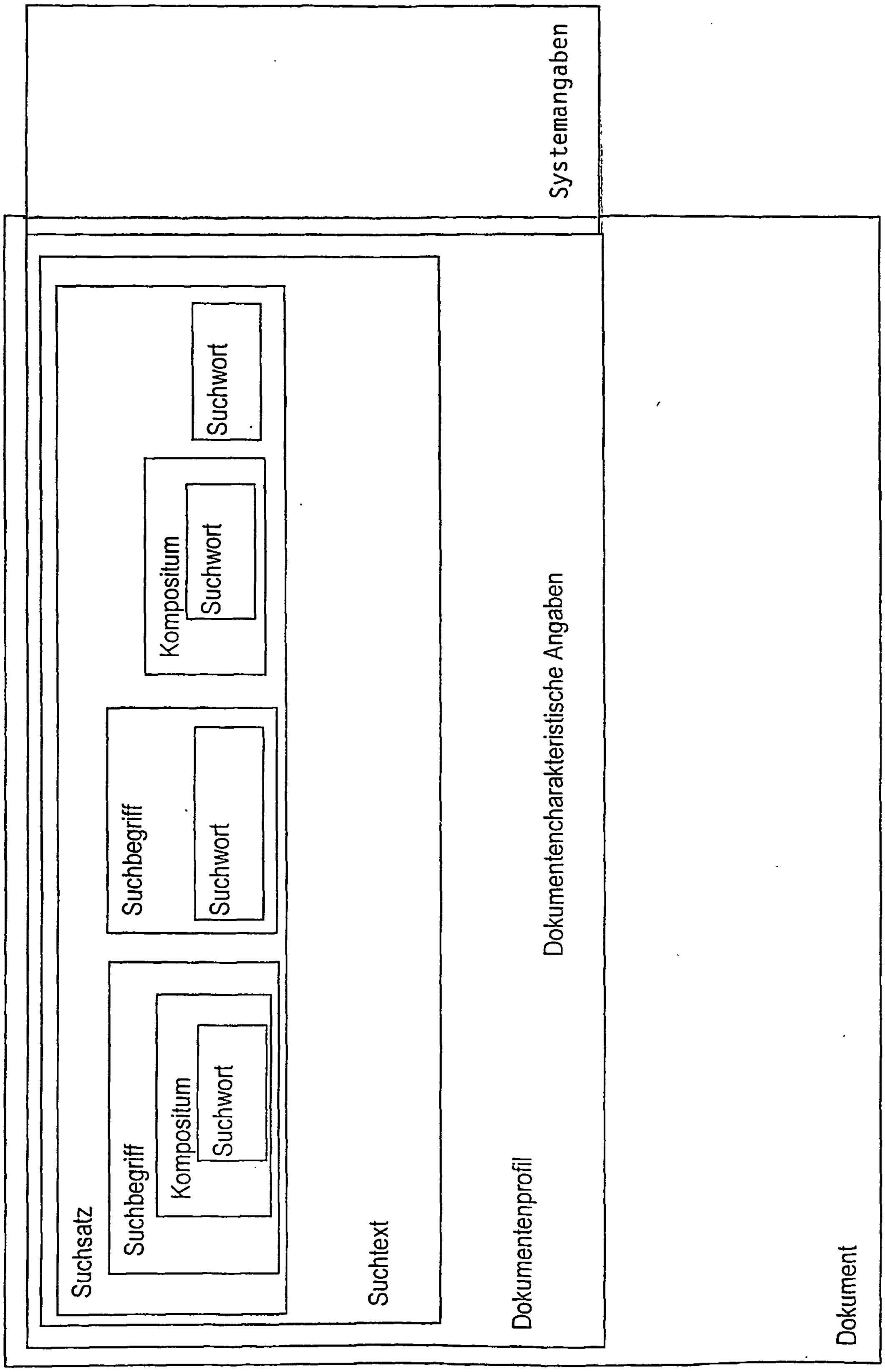
Systemangaben
Suchwort
Kompositum
Suchwort
Suchbegriff
Suchwort
Suchsatz
Suchbegriff
Kompositum
Suchwort
Suchtext
Dokumentencharakteristische Angaben
Dokumentenprofil
Dokument

Fig.3

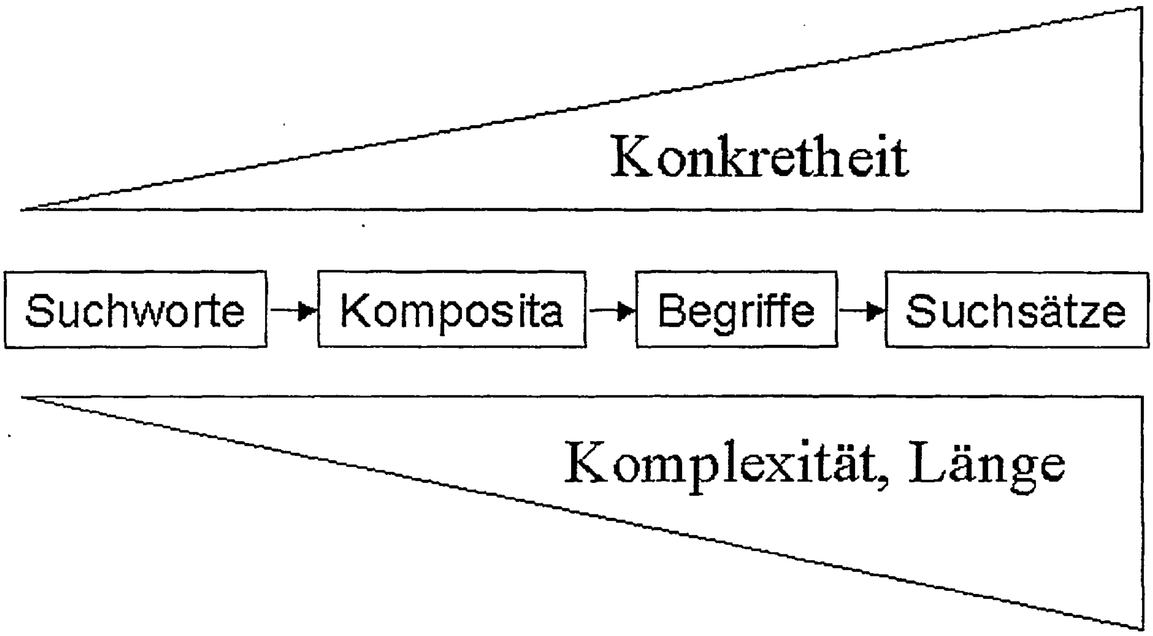
Konkretheit
Suchworte
Komposita
Begriffe
Suchsätze
Komplexität, Länge

Fig. 4

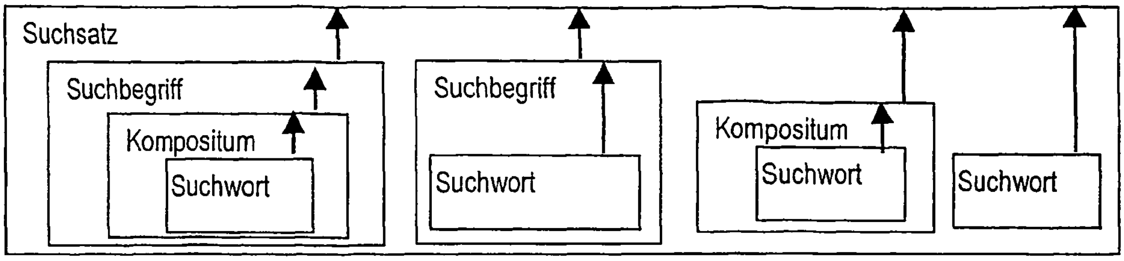


Fig. 5

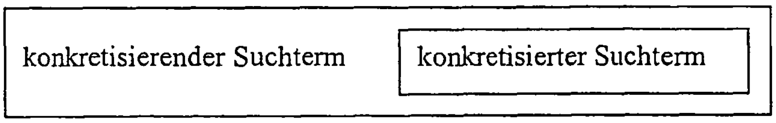


Fig. 6

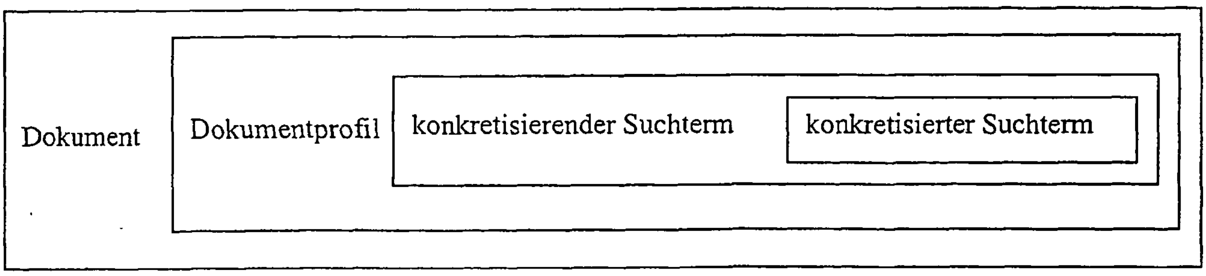

Fig. 7

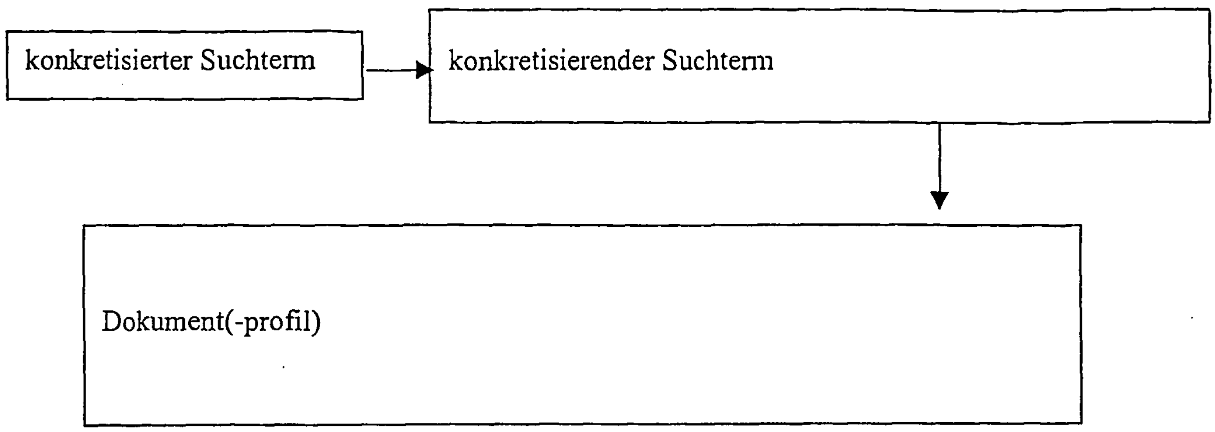
konkretisierter Suchterm
konkretisierender Suchterm
Dokument(-profil)

Fig. 8

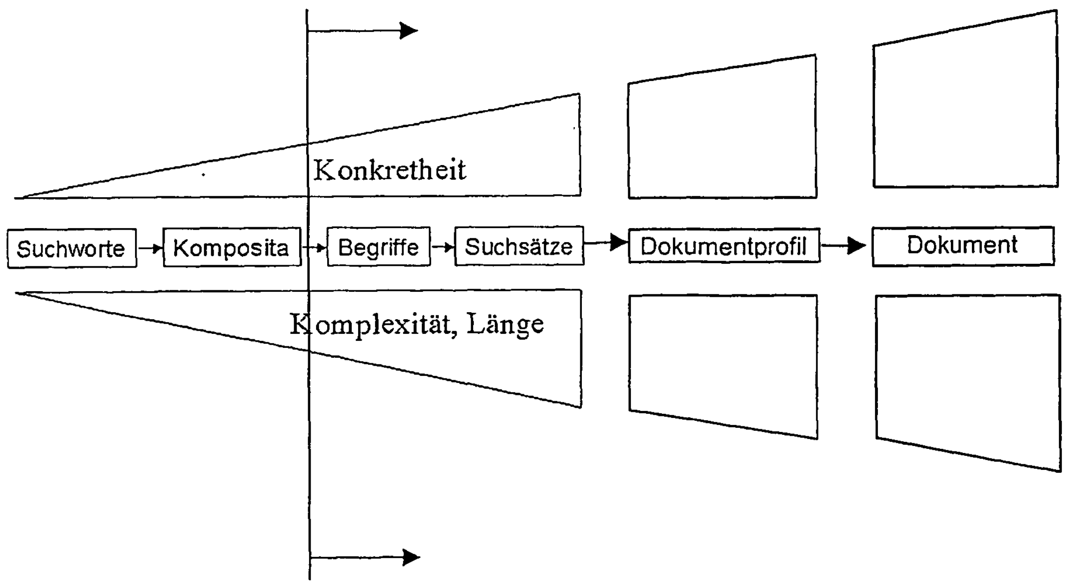
Konkretheit
Suchworte
Komposita
Begriffe
Suchsätze
Dokumentprofil
Dokument
Komplexität, Länge

Fig. 9

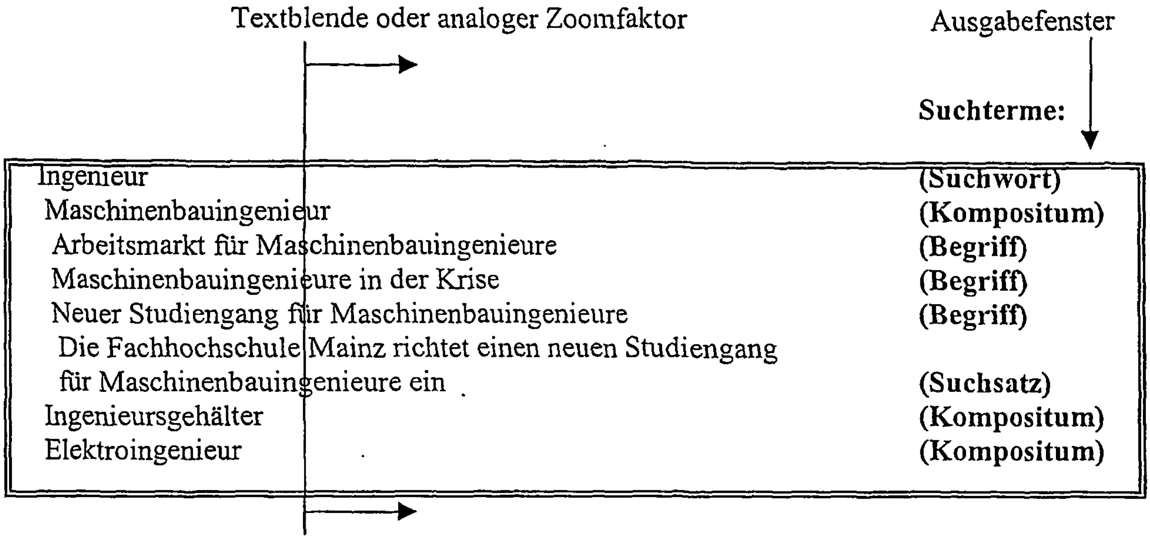
Textblende oder analoger Zoomfaktor
Ausgabefenster
Suchterme:
Ingenieur
(Suchwort)
Maschinenbauingenieur
(Kompositum)
Arbeitsmarkt für Maschinenbauingenieure
(Begriff)
Maschinenbauingenieure in der Krise
(Begriff)
Neuer Studiengang für Maschinenbauingenieure
(Begriff)
Die Fachhochschule Mainz richtet einen neuen Studiengang für Maschinenbauingenieure ein
(Suchsatz)
Ingenieursgehälter
(Kompositum)
Elektroingenieur
(Kompositum)

Fig. 10

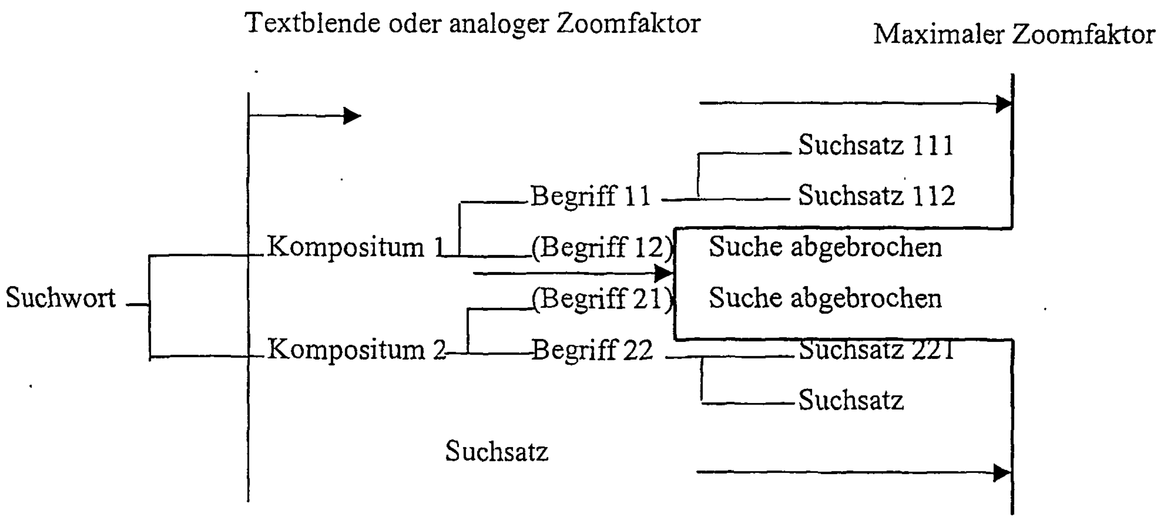
Textblende oder analoger Zoomfaktor
Maximaler Zoomfaktor
Suchsatz 111
Begriff 11
Suchsatz 112
Kompositum 1
(Begriff 12)
Suche abgebrochen
Suchwort
(Begriff 21)
Suche abgebrochen
Kompositum 2
Begriff 22
Suchsatz 221
Suchsatz
Suchsatz

Fig. 11

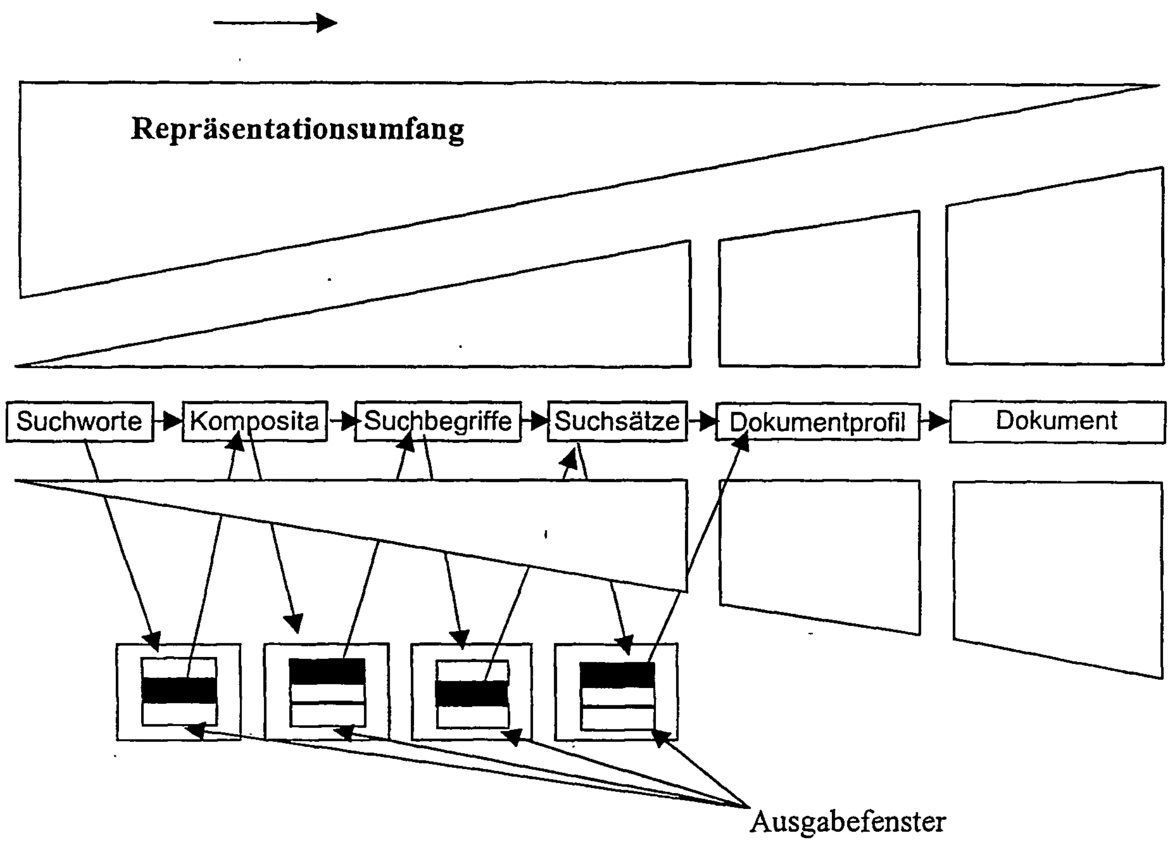
Repräsentationsumfang
Suchworte
Komposita
Suchbegriffe
Suchsätze
Dokumentprofil
Dokument
Ausgabefenster

Fig. 12

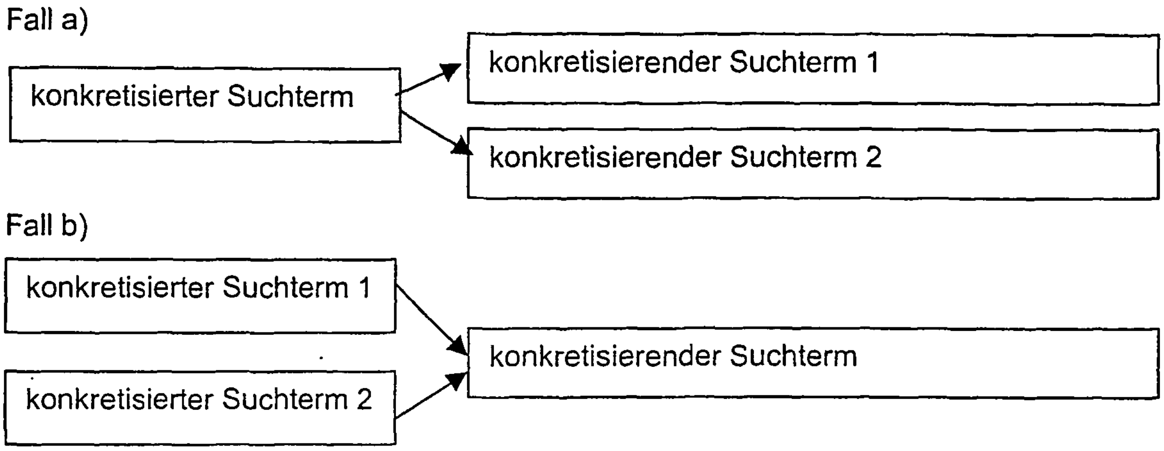
Fall a)
konkretisierter Suchterm
konkretisierender Suchterm 1
konkretisierender Suchterm 2
Fall b)
konkretisierter Suchterm 1
konkretisierter Suchterm 2
konkretisierender Suchterm

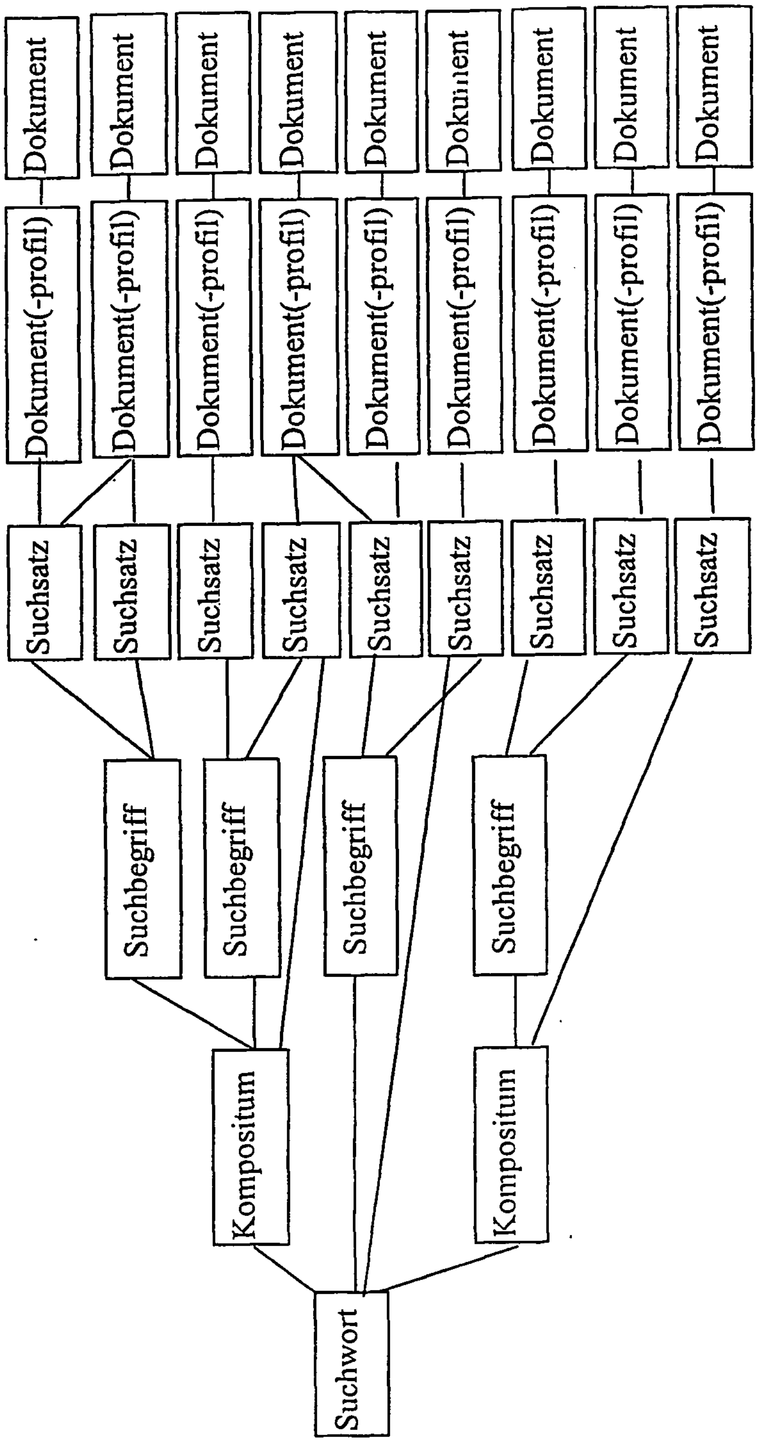
Dokument
Dokument
Dokument
Dokument
Dokument
Dokument
Dokument
Dokument
Dokument
Dokument(-profil)
Dokument(-profil)
Dokument(-profil)
Dokument(-profil)
Dokument(-profil)
Dokument(-profil)
Dokument(-profil)
Dokument(-profil)
Dokument(-profil)
Suchsatz
Suchsatz
Suchsatz
Suchsatz
Suchsatz
Suchsatz
Suchsatz
Suchsatz
Suchsatz
Suchbegriff
Suchbegriff
Suchbegriff
Suchbegriff
Kompositum
Kompositum
Suchwort

Fig. 13

Fig. 14

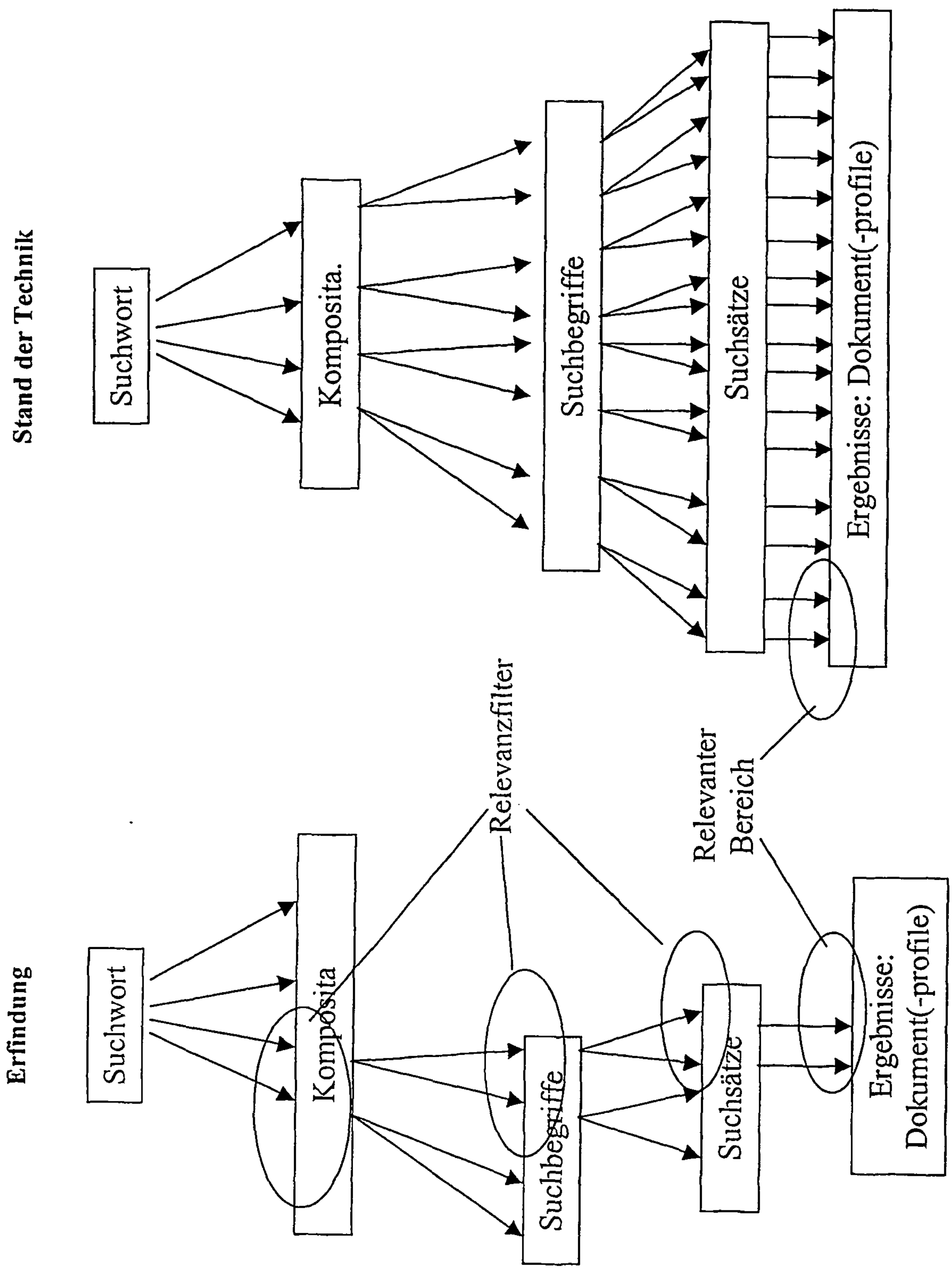

Stand der Technik
Suchwort
Komposita.
Suchbegriffe
Suchsätze
Ergebnisse: Dokument(-profile)
Relevanter Bereich
Relevanzfilter
Erfindung
Suchwort
Komposita
Suchbegriffe
Suchsätze
Ergebnisse: Dokument(-profile)

Fig. 15

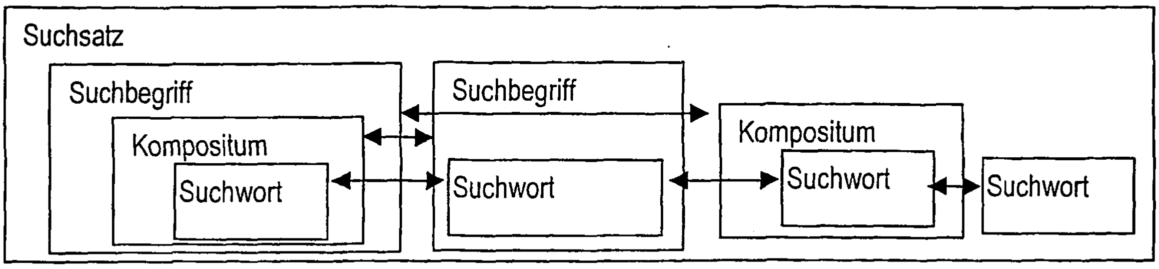
Suchsatz
Suchbegriff
Kompositum
Suchwort
Suchbegriff
Suchwort
Kompositum
Suchwort
Suchwort

Fig. 16

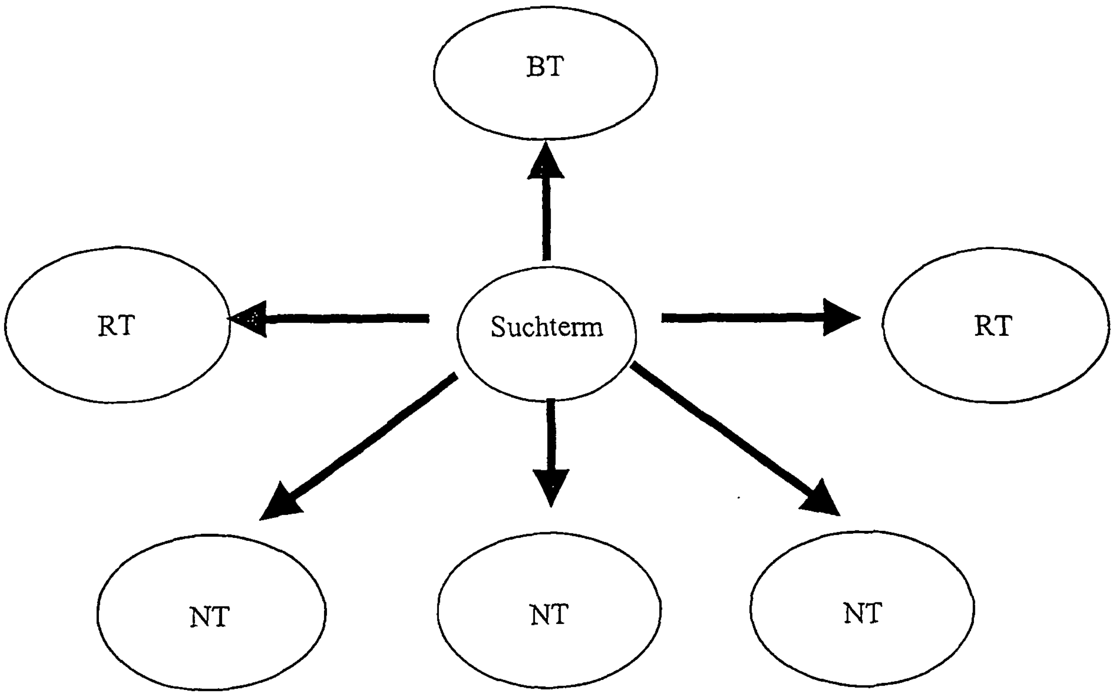
BT
RT
Suchterm
RT
NT
NT
NT

Fig. 17

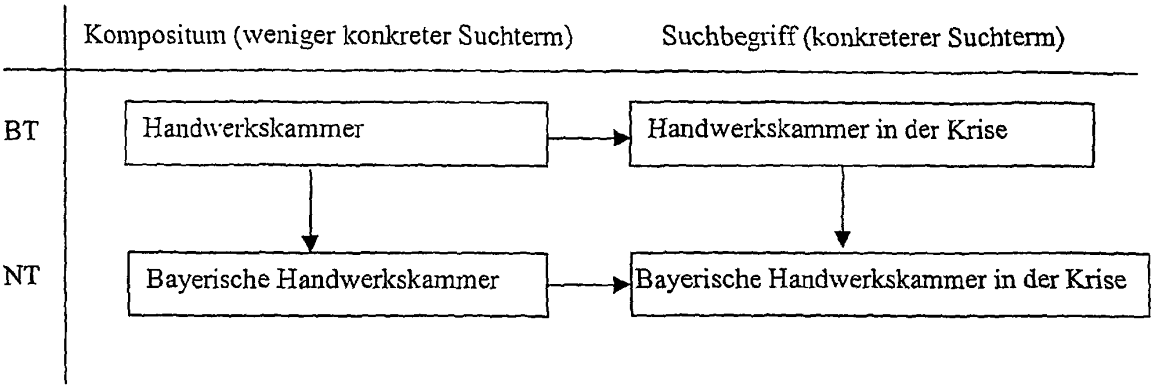


Fig. 18

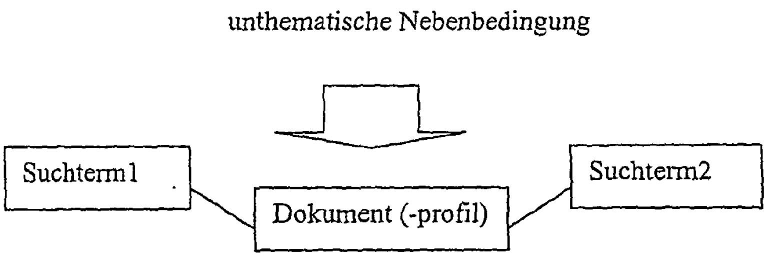


Fig. 19

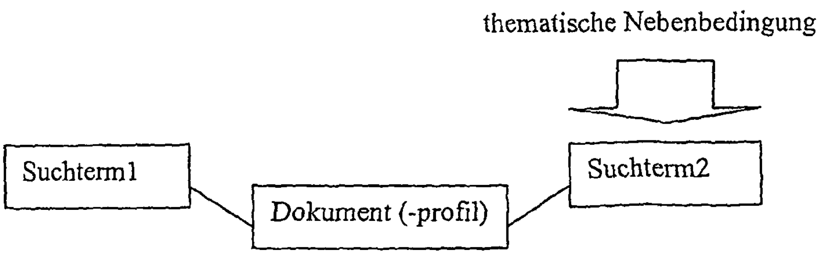

Fig. 20

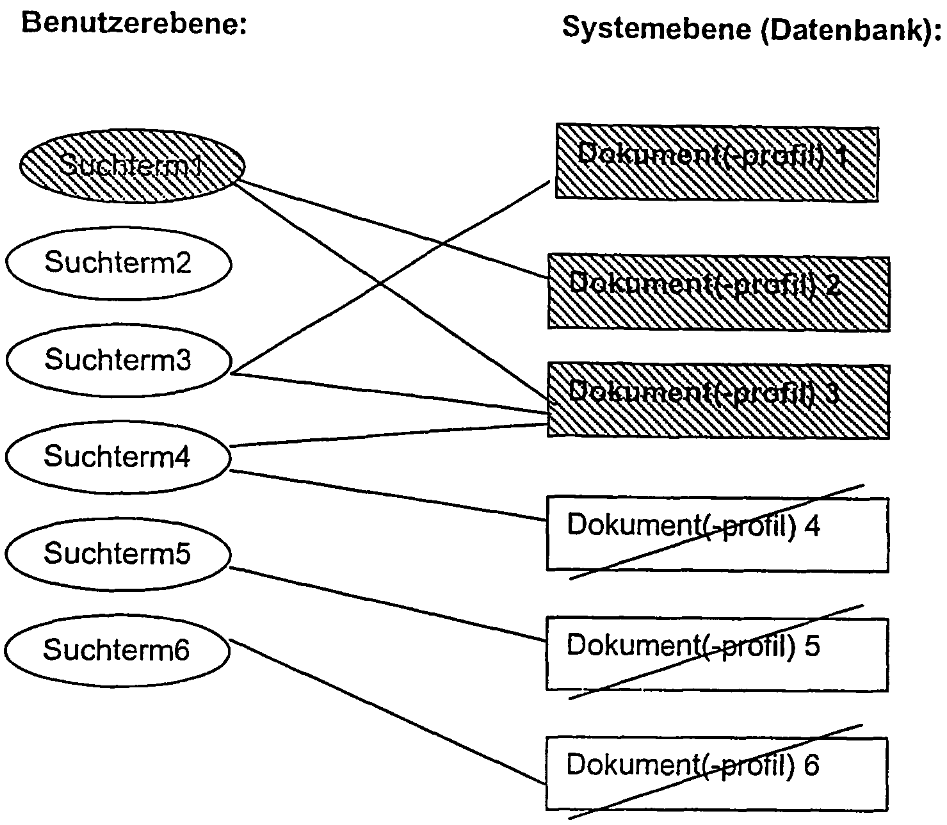
Benutzerebene:
Systemebene (Datenbank):
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 21

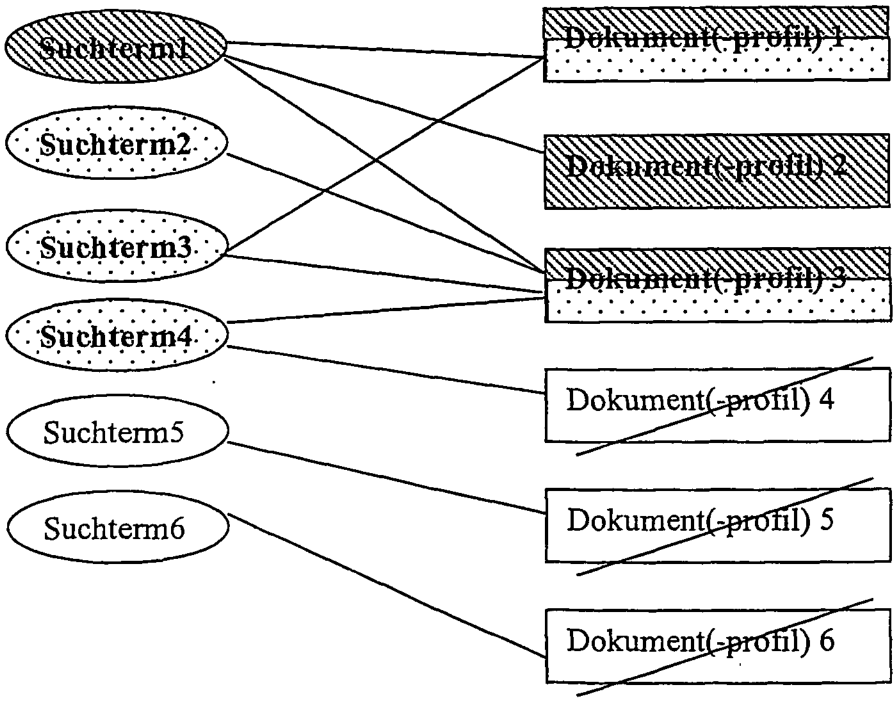
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 22

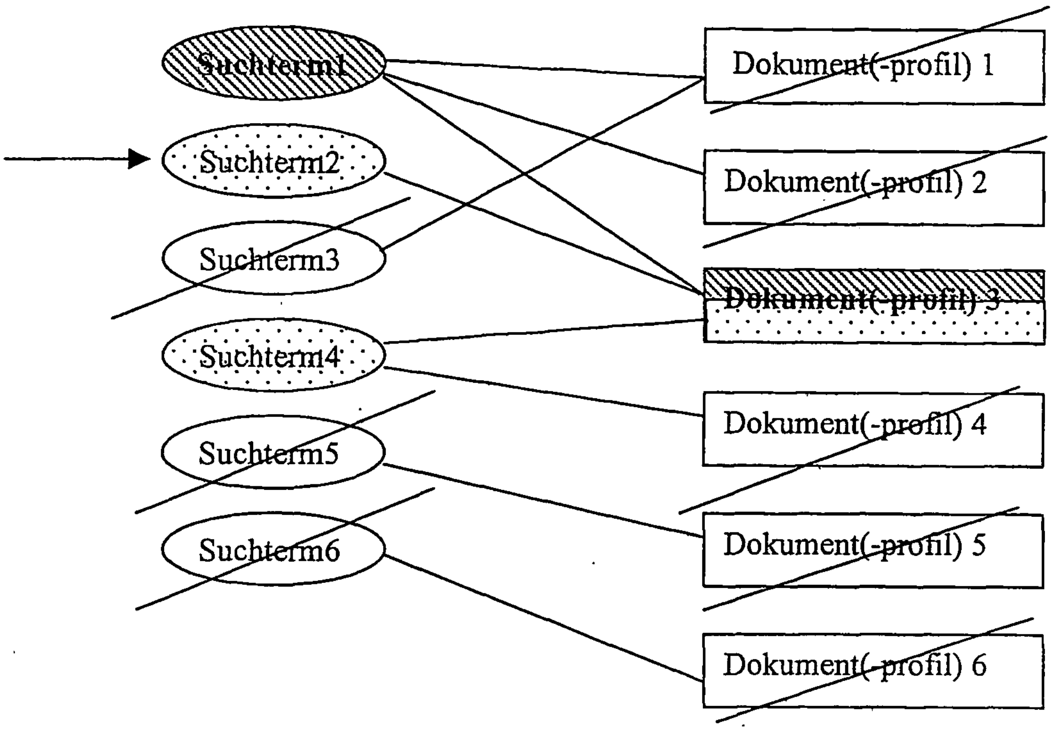
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 23

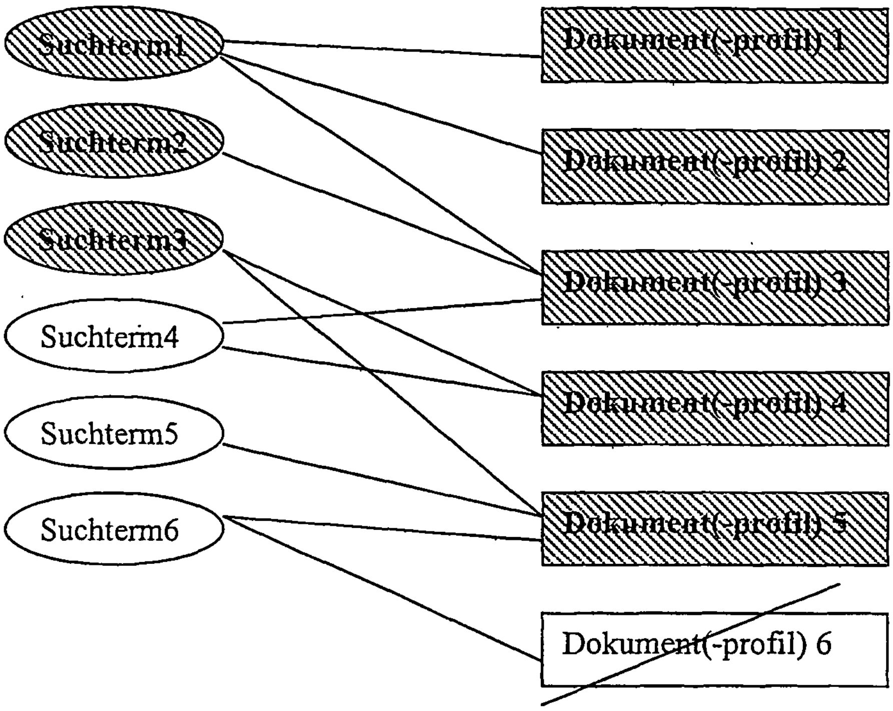
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 24

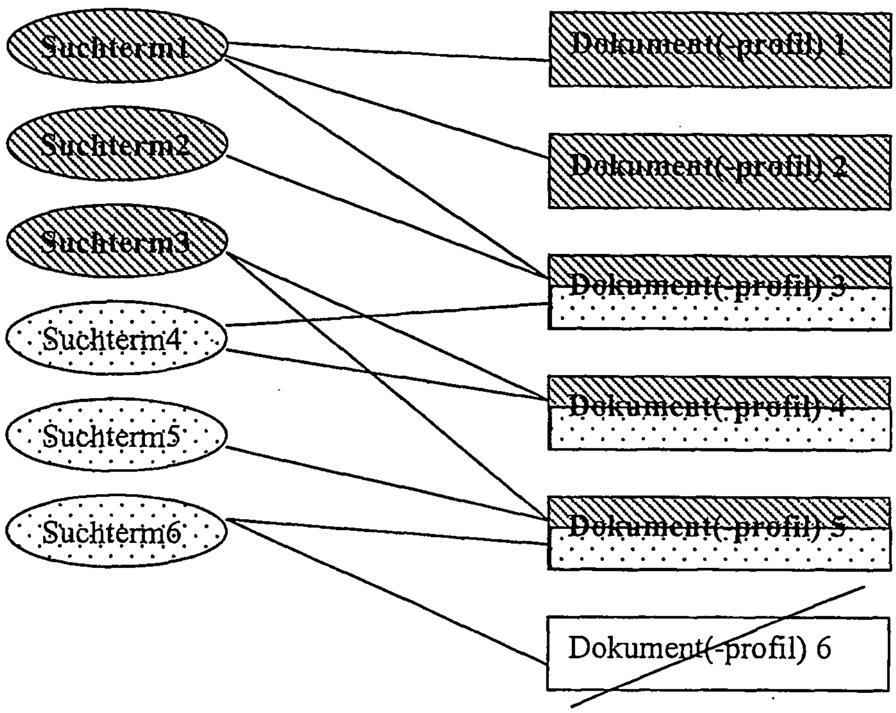
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 25

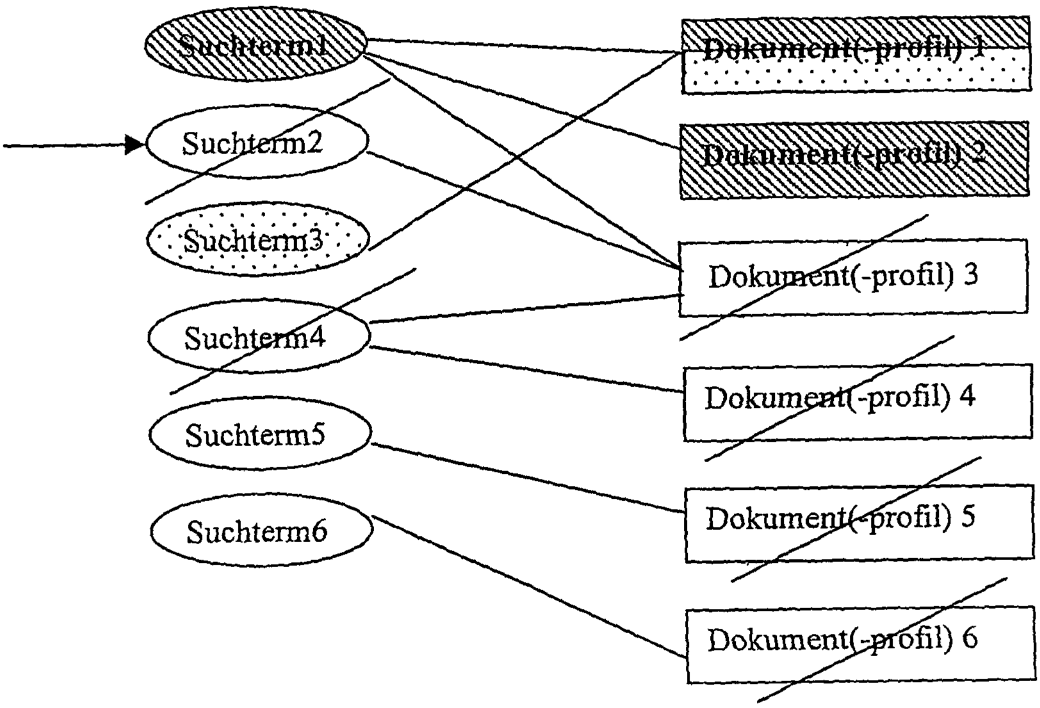
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 26

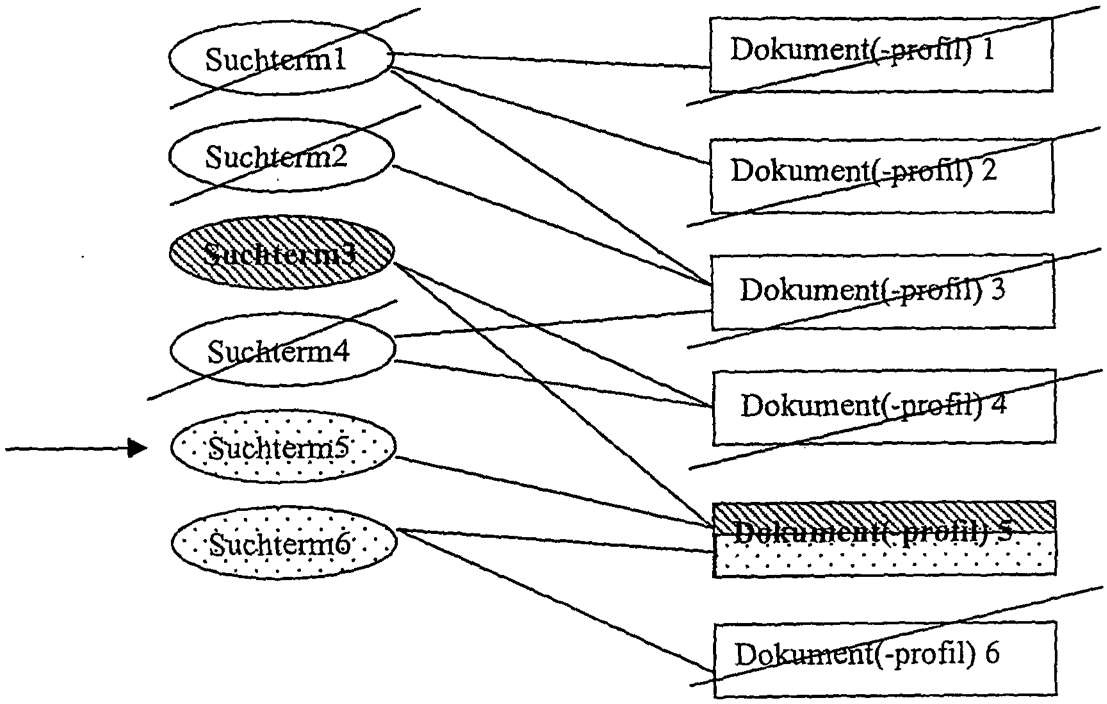
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 27

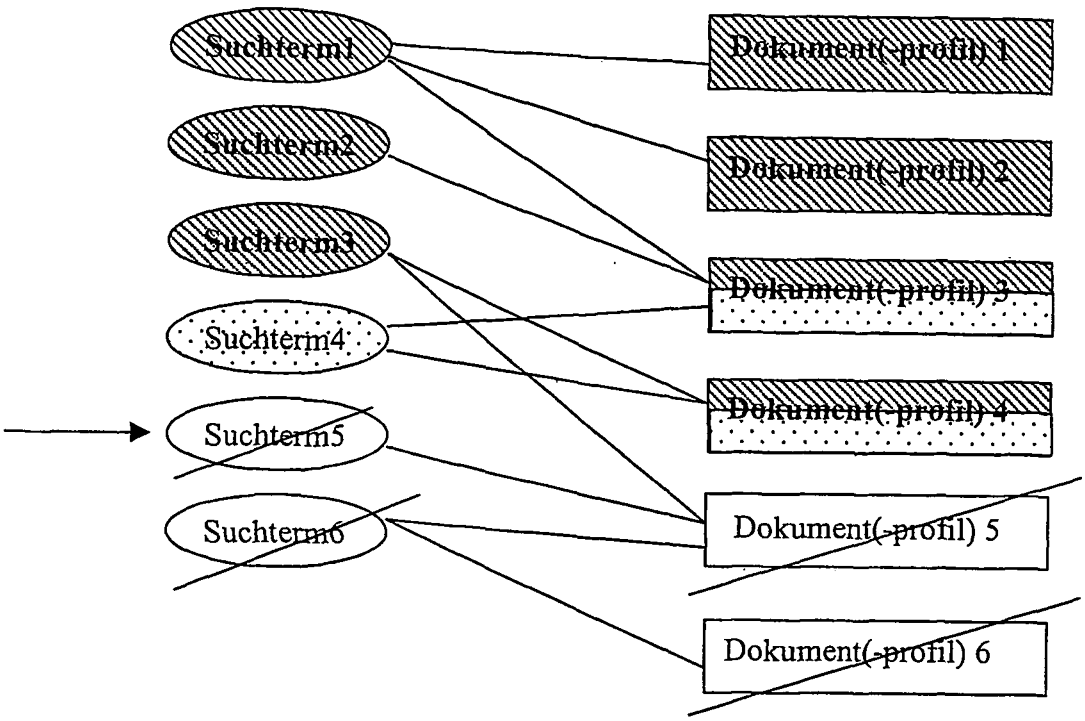
Suchterm1
Suchterm2
Suchterm3
Suchterm4
Suchterm5
Suchterm6
Dokument(-profil) 1
Dokument(-profil) 2
Dokument(-profil) 3
Dokument(-profil) 4
Dokument(-profil) 5
Dokument(-profil) 6

Fig. 28

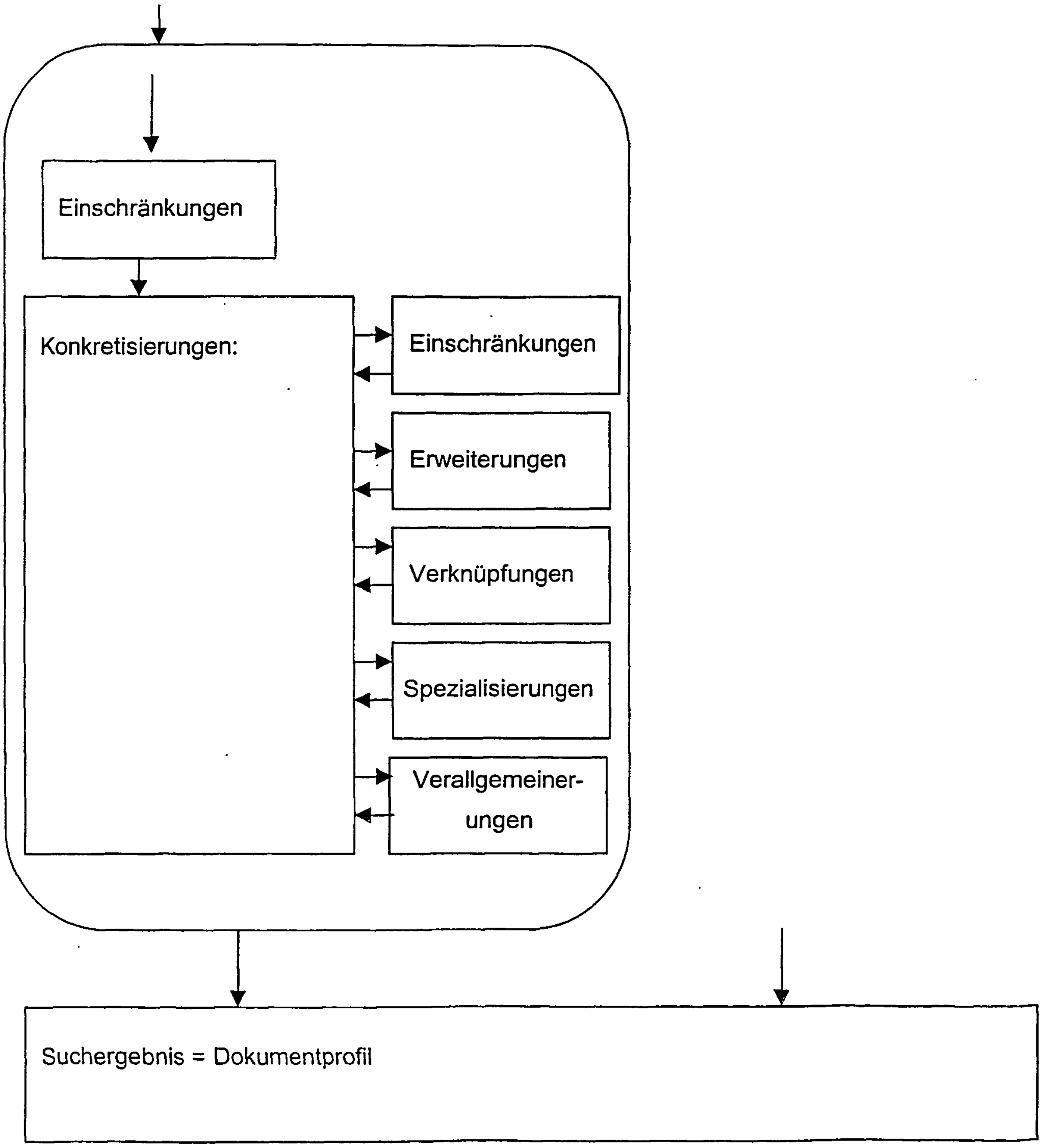
Einschränkungen
Konkretisierungen:
Einschränkungen
Erweiterungen
Verknüpfungen
Spezialisierungen
Verallgemeiner-
ungen
Suchergebnis = Dokumentprofil

Fig. 29

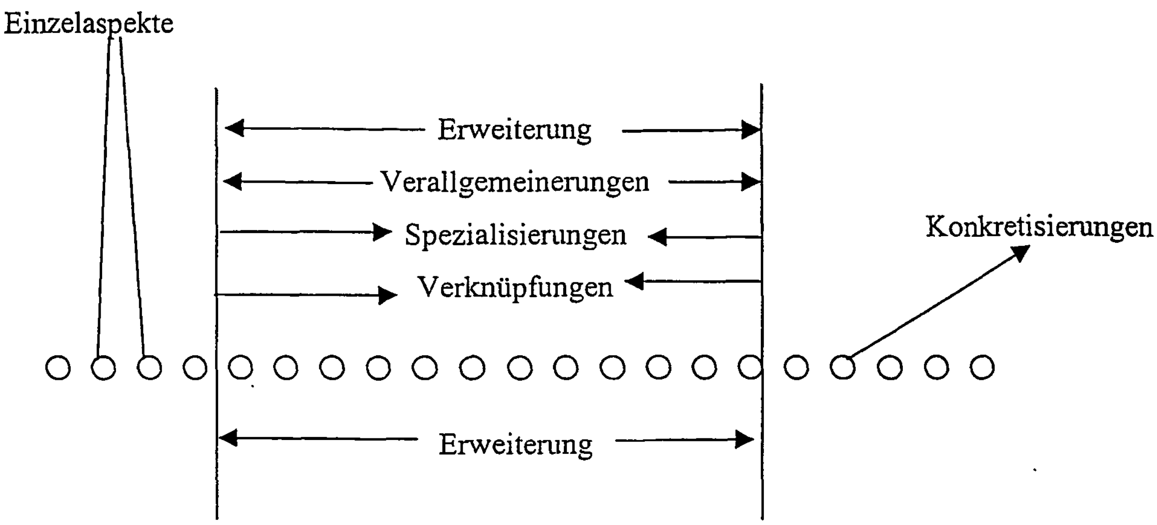
Einzelaspekte
Erweiterung
Verallgemeinerungen
Spezialisierungen
Verknüpfungen
Konkretisierungen
Erweiterung

Fig. 30

| Prozess: / Wirkung | Konkretisieren | Einschränken | Erweitern | Spezialisieren | Verallgemeinren | Verknüpfen | |
|---|---|---|---|---|---|---|---|
| | | | | | | ausschliessen | einschliessen |
| Thematische Breite der Suche/ Anzahl der abgedeckten Einzelaspekte | << | < | >> | << | >> | < / << | << |
| Anzahl der relevanten Dokumente (Treffer) | << | << | >> | << | >> | < / << | << |

<<: stark verkleinern
>>: stark vergrößern
<: wenig verkleinern / Nebenwirkung
< / <<: wenig bis stark verkleinern

Fig. 31

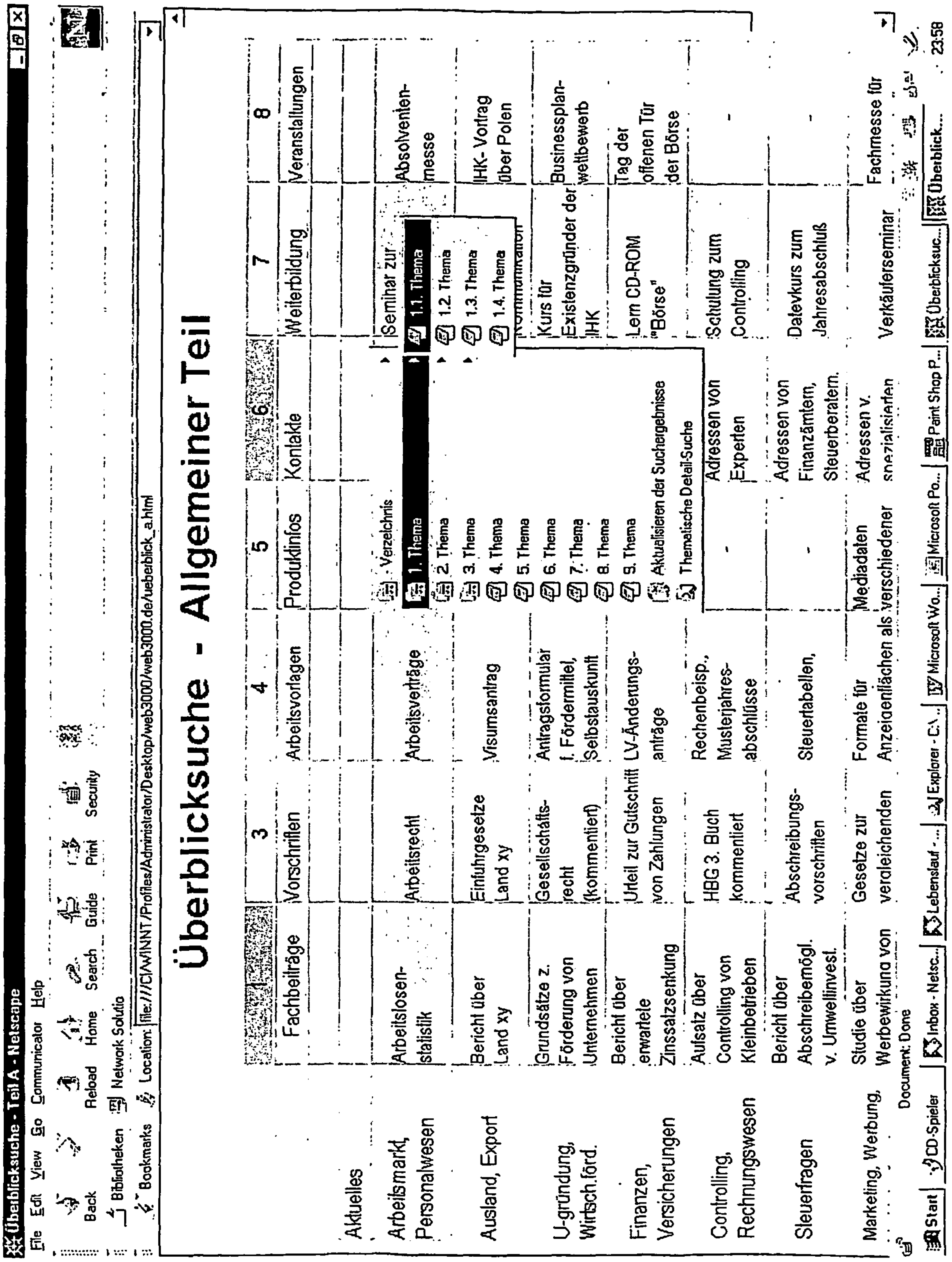
Überblicksuche - Teil A - Netscape
Überblicksuche - Allgemeiner Teil
Fachbeiträge
Vorschriften
Arbeitsvorlagen
Produktinfos
Kontakte
Weiterbildung
Veranstaltungen
Aktuelles
Arbeitsmarkt, Personalwesen
Ausland, Export
U-gründung, Wirtsch.förd.
Finanzen, Versicherungen
Controlling, Rechnungswesen
Steuerfragen
Marketing, Werbung,
Document: Done

Fig. 32

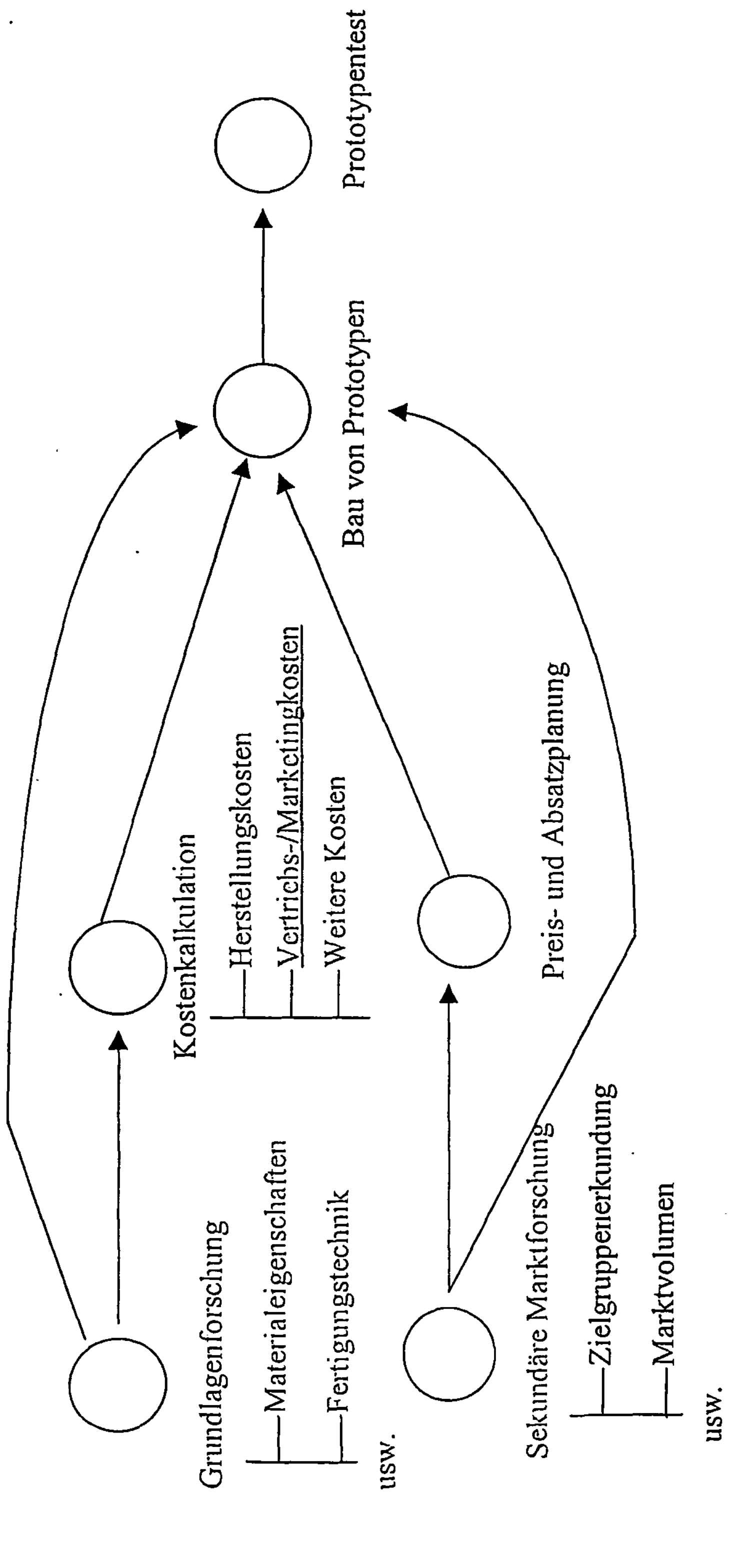
Prototypentest
Bau von Prototypen
Kostenkalkulation
Herstellungskosten
Vertriebs-/Marketingkosten
Weitere Kosten
Preis- und Absatzplanung
Grundlagenforschung
Materialeigenschaften
Fertigungstechnik
usw.
Sekundäre Marktforschung
Zielgruppenerkundung
Marktvolumen
usw.

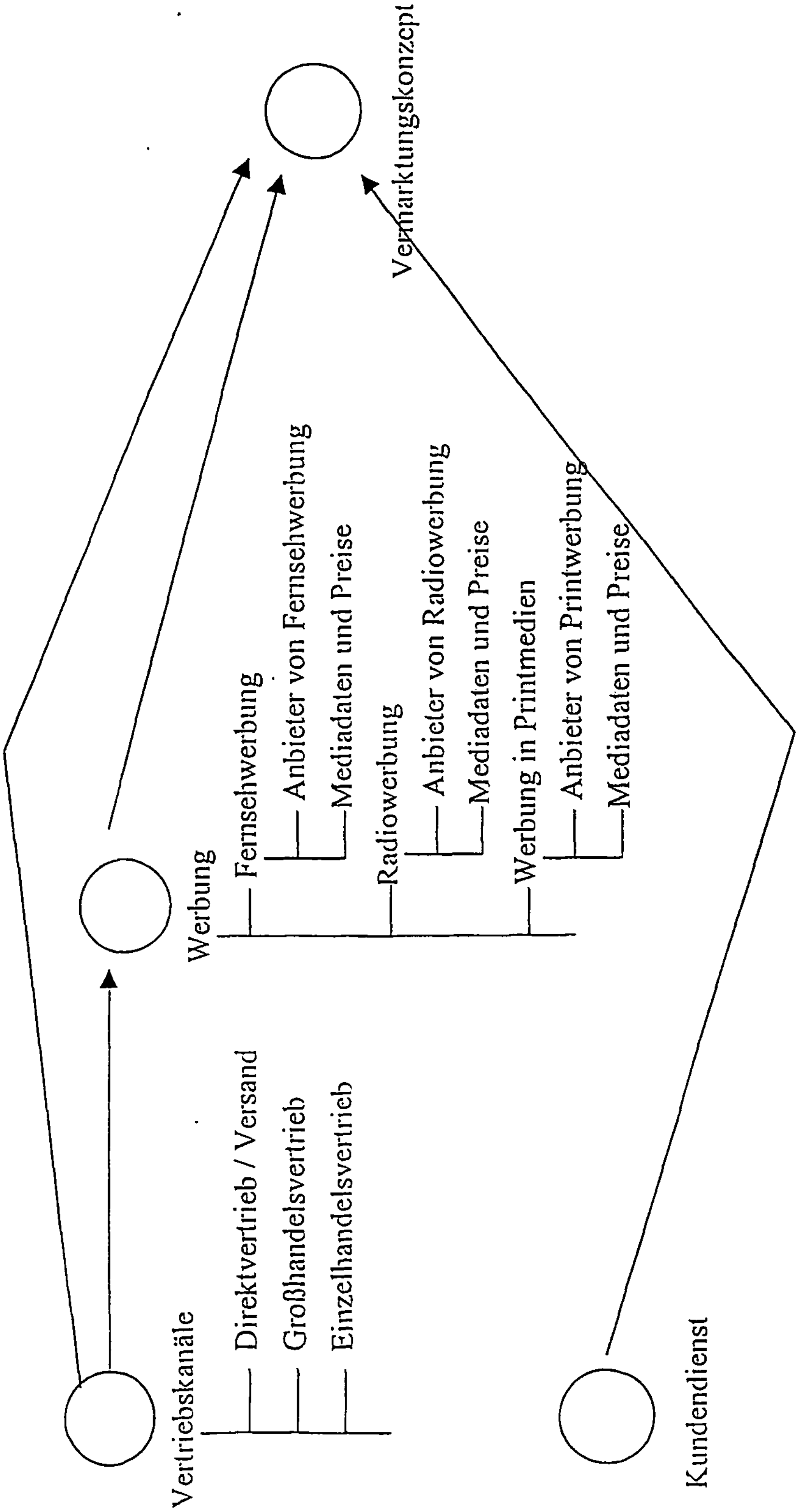

Vermarktungskonzept
Vertriebskanäle
Direktvertrieb / Versand
Großhandelsvertrieb
Einzelhandelsvertrieb
Werbung
Fernsehwerbung
Anbieter von Fernsehwerbung
Mediadaten und Preise
Radiowerbung
Anbieter von Radiowerbung
Mediadaten und Preise
Werbung in Printmedien
Anbieter von Printwerbung
Mediadaten und Preise
Kundendienst


Fig. 33

Fig. 34

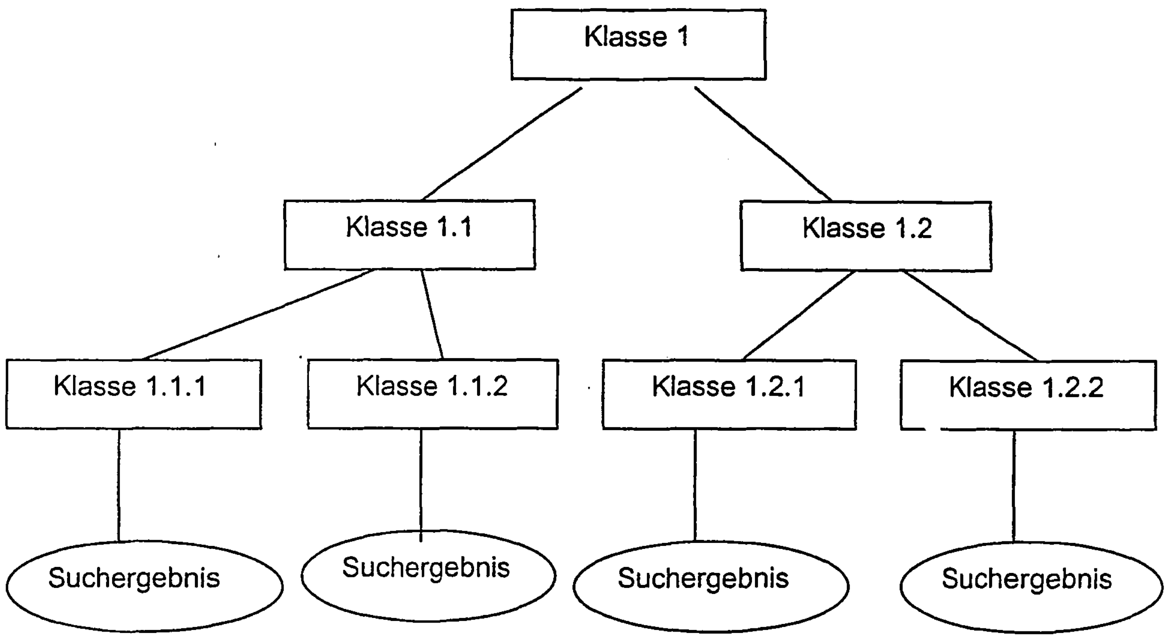
Klasse 1
Klasse 1.1
Klasse 1.2
Klasse 1.1.1
Klasse 1.1.2
Klasse 1.2.1
Klasse 1.2.2
Suchergebnis
Suchergebnis
Suchergebnis
Suchergebnis

Fig. 35

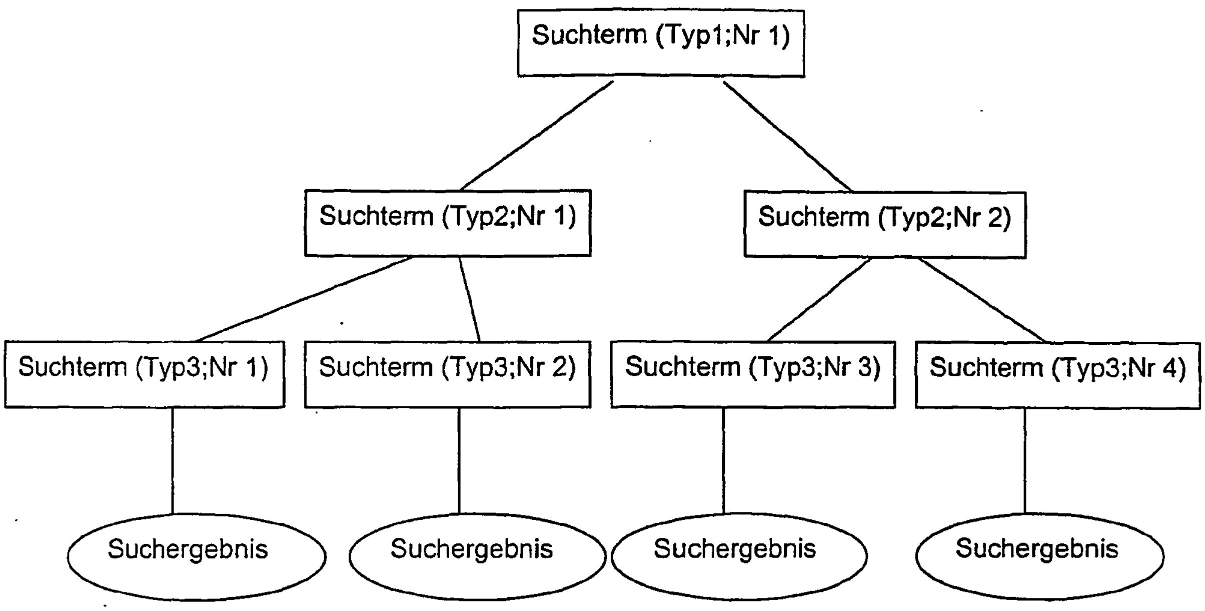
Suchterm (Typ1;Nr 1)
Suchterm (Typ2;Nr 1)
Suchterm (Typ2;Nr 2)
Suchterm (Typ3;Nr 1)
Suchterm (Typ3;Nr 2)
Suchterm (Typ3;Nr 3)
Suchterm (Typ3;Nr 4)
Suchergebnis
Suchergebnis
Suchergebnis
Suchergebnis

Fig. 36

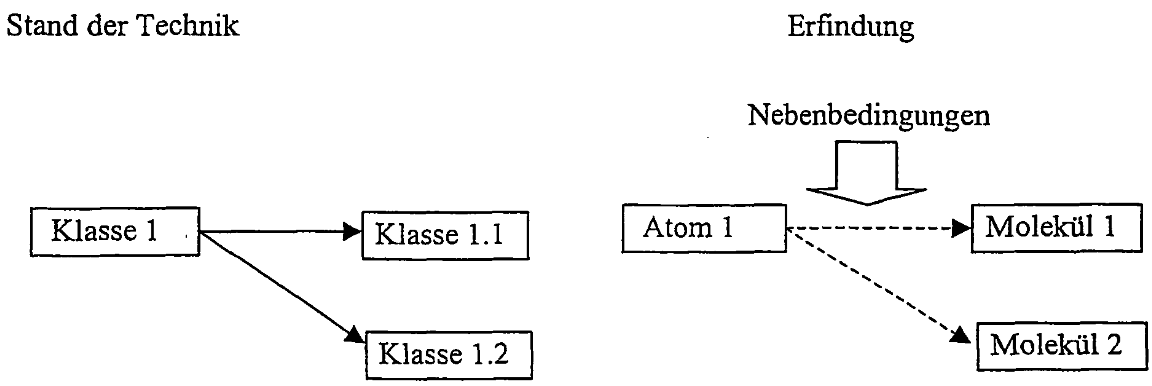
Stand der Technik
Erfindung
Nebenbedingungen
Klasse 1
Klasse 1.1
Klasse 1.2
Atom 1
Molekül 1
Molekül 2

Fig. 37

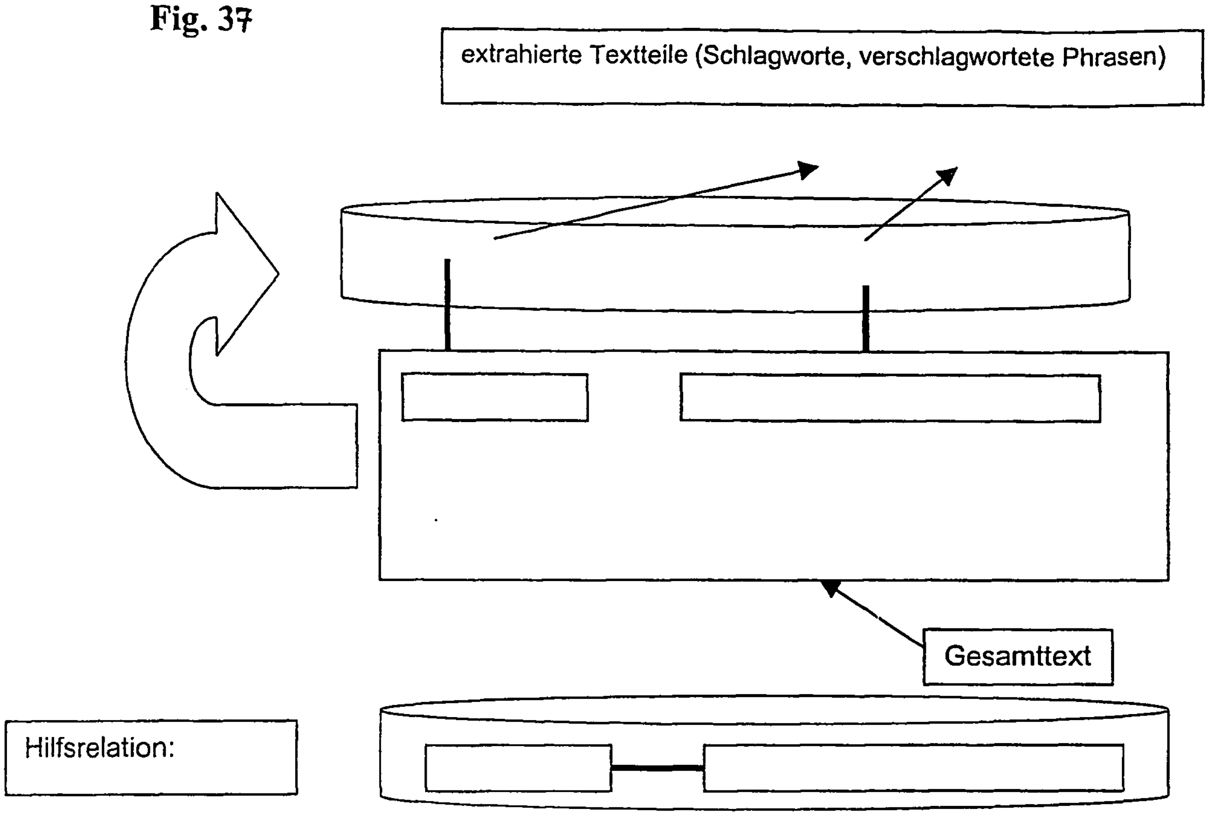
extrahierte Textteile (Schlagworte, verschlagwortete Phrasen)
Gesamttext
Hilfsrelation:

Fig. 38

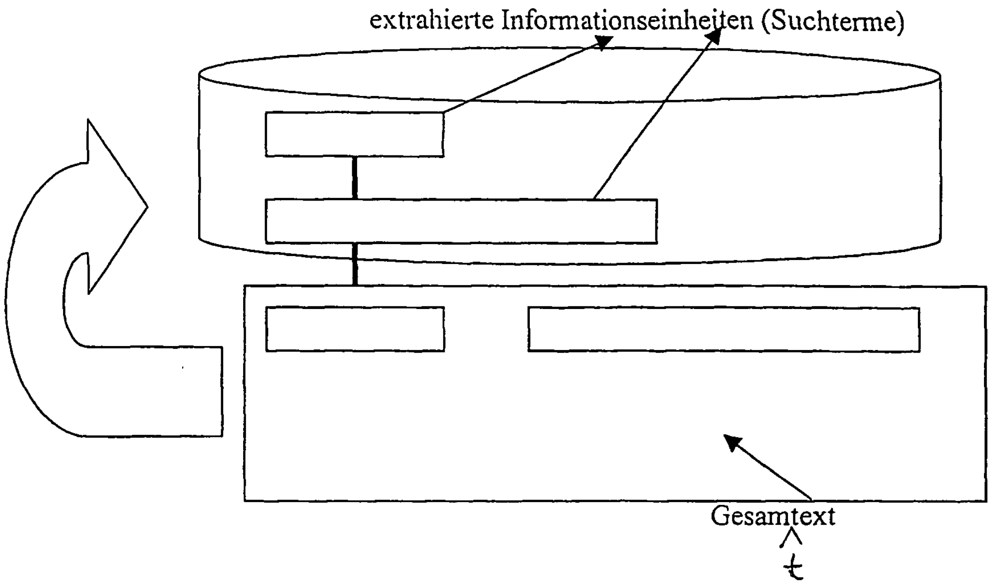
extrahierte Informationseinheiten (Suchterme)
Gesamtext
t

Fig. 39

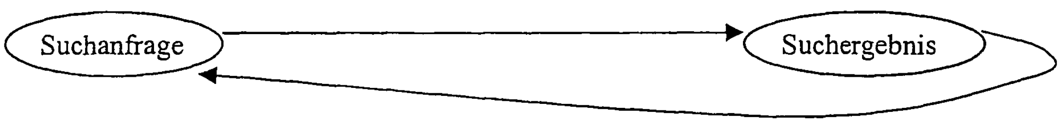
Suchanfrage
Suchergebnis

Fig. 40

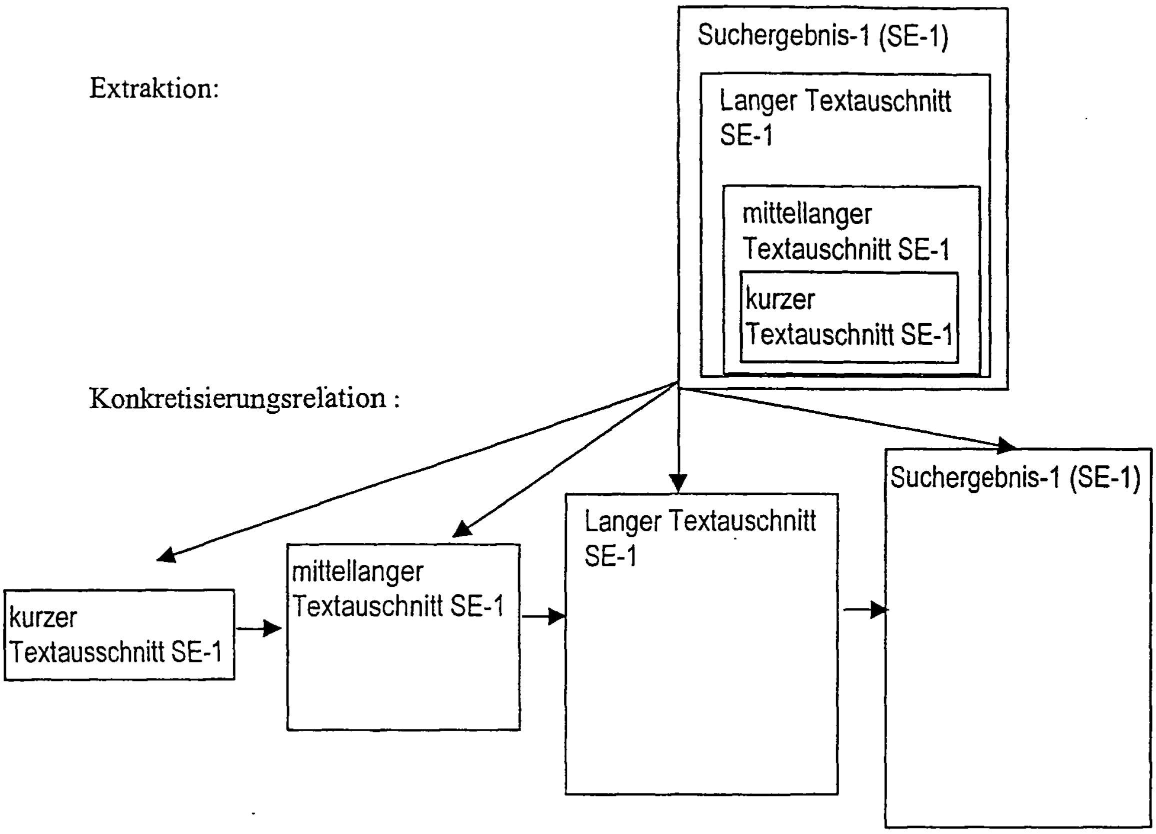
Extraktion:
Suchergebnis-1 (SE-1)
Langer Textauschnitt SE-1
mittellanger Textauschnitt SE-1
kurzer Textauschnitt SE-1
Konkretisierungsrelation :
kurzer Textausschnitt SE-1
mittellanger Textauschnitt SE-1
Langer Textauschnitt SE-1
Suchergebnis-1 (SE-1)

Fig. 41

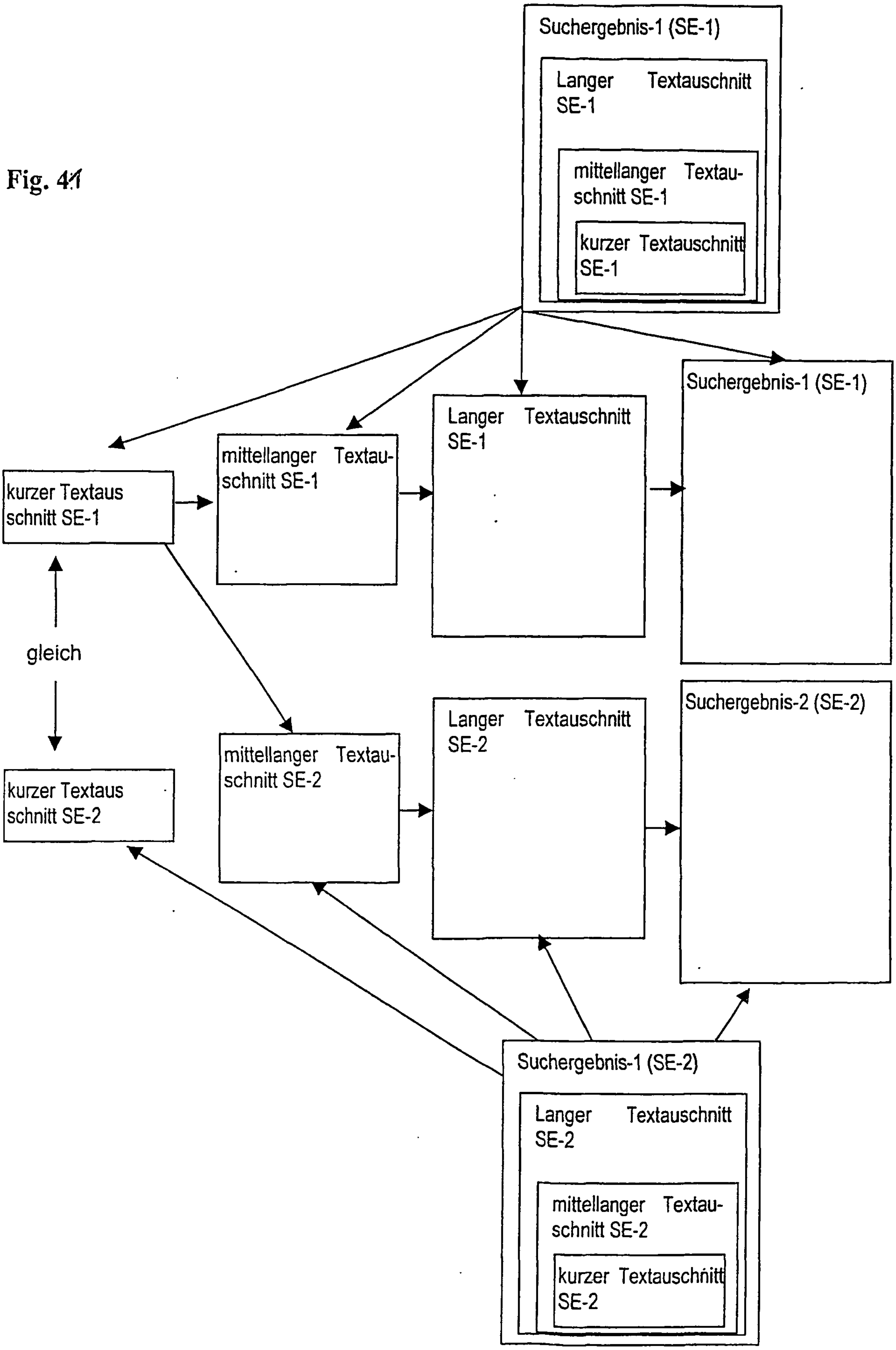
Suchergebnis-1 (SE-1)
Langer Textauschnitt SE-1
mittellanger Textau-schnitt SE-1
kurzer Textauschnitt SE-1
kurzer Textaus schnitt SE-1
mittellanger Textau-schnitt SE-1
Langer Textauschnitt SE-1
Suchergebnis-1 (SE-1)
gleich
kurzer Textaus schnitt SE-2
mittellanger Textau-schnitt SE-2
Langer Textauschnitt SE-2
Suchergebnis-2 (SE-2)
Suchergebnis-1 (SE-2)
Langer Textauschnitt SE-2
mittellanger Textau-schnitt SE-2
kurzer Textauschnitt SE-2

Fig. 42

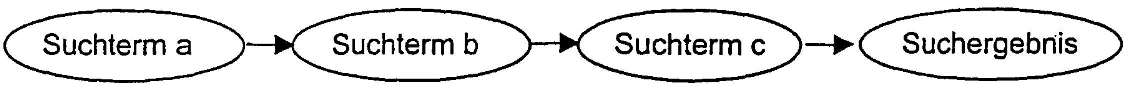

Fig. 43

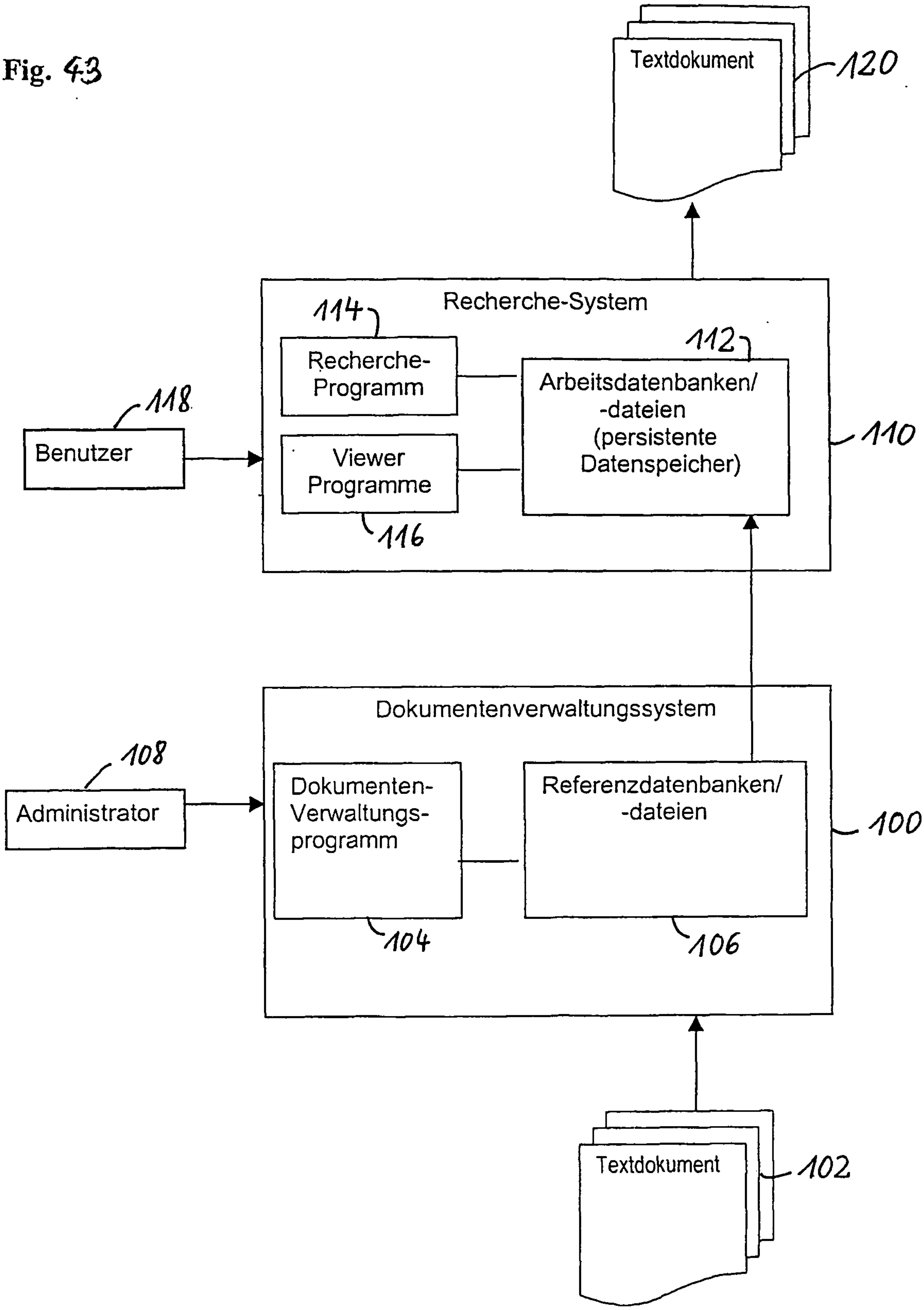

Textdokument
120
Recherche-System
114
Recherche-Programm
112
Arbeitsdatenbanken/ -dateien (persistente Datenspeicher)
118
Benutzer
Viewer Programme
110
116
Dokumentenverwaltungssystem
108
Administrator
Dokumenten-Verwaltungs-programm
Referenzdatenbanken/ -dateien
100
104
106
Textdokument
102

Fig. 4A

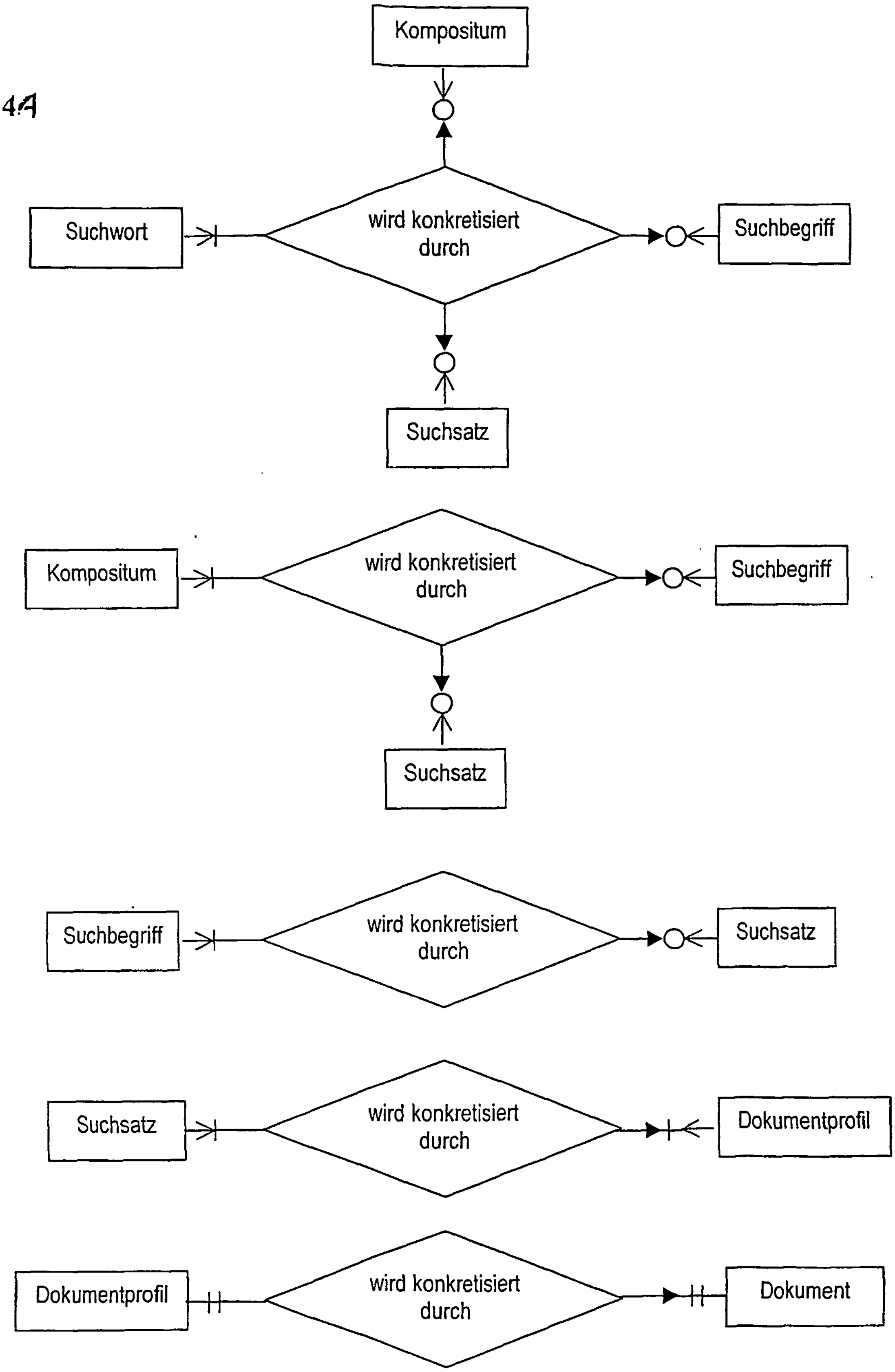
Kompositum
Suchwort
wird konkretisiert durch
Suchbegriff
Suchsatz
Kompositum
wird konkretisiert durch
Suchbegriff
Suchsatz
Suchbegriff
wird konkretisiert durch
Suchsatz
Suchsatz
wird konkretisiert durch
Dokumentprofil
Dokumentprofil
wird konkretisiert durch
Dokument

Fig. 45

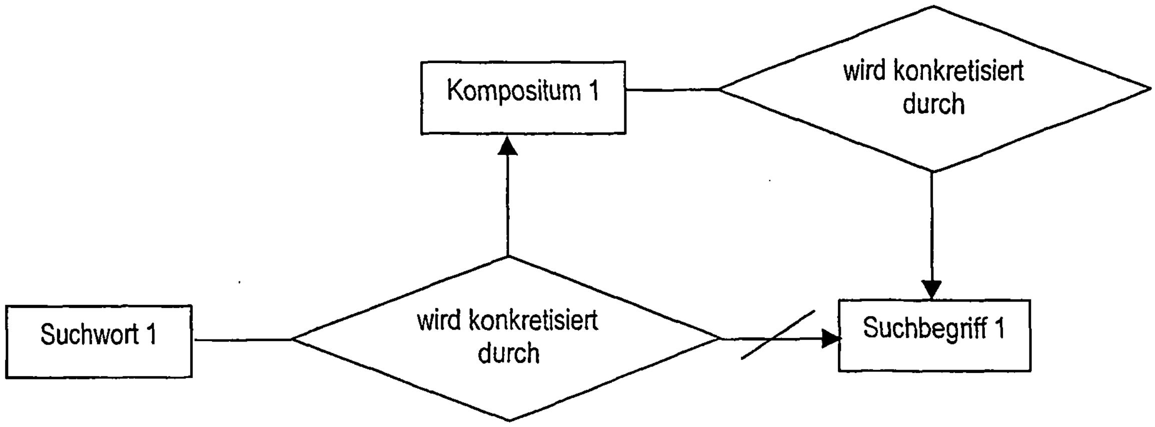
Kompositum 1
wird konkretisiert durch
Suchwort 1
wird konkretisiert durch
Suchbegriff 1

Fig. 46

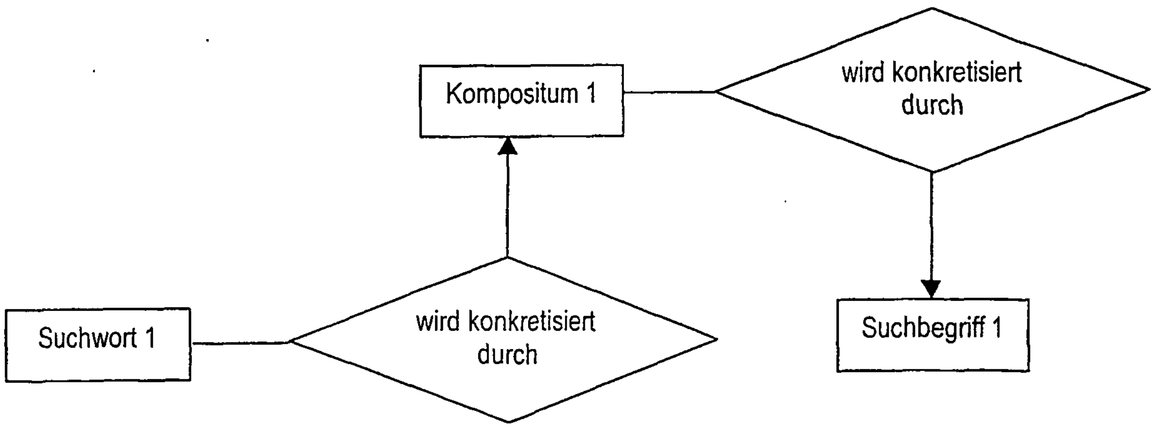
Kompositum 1
wird konkretisiert durch
Suchwort 1
wird konkretisiert durch
Suchbegriff 1

Fig. 47

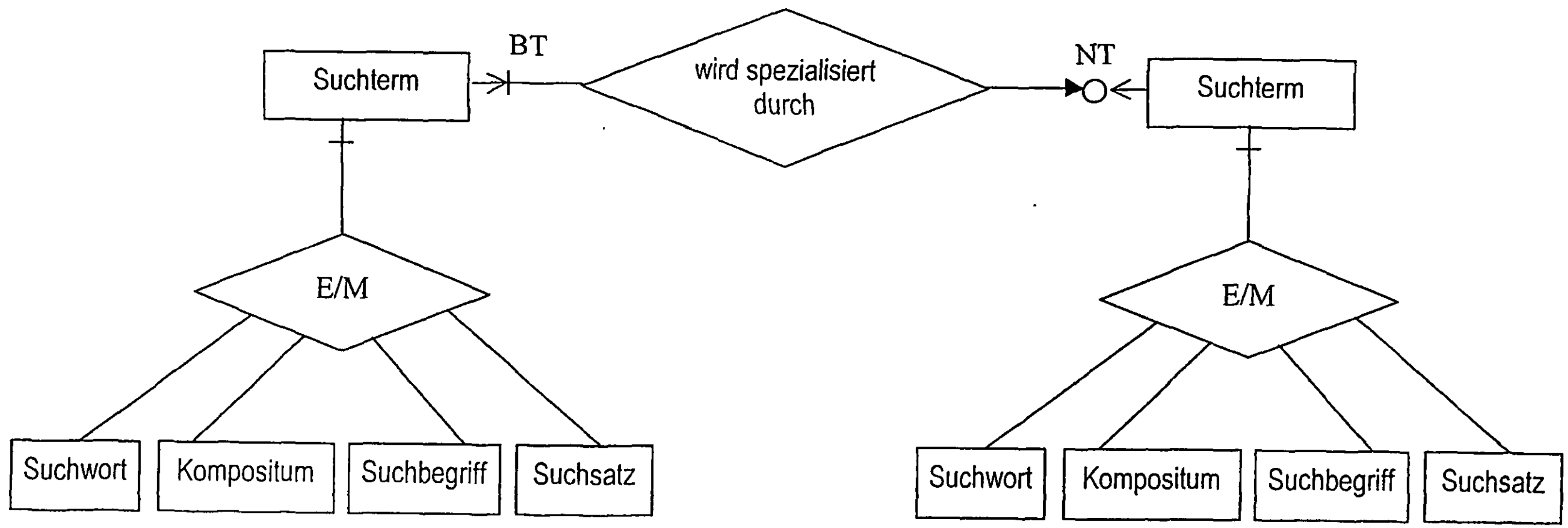


Erläuterungen zu Fig. 48 bis 51

E/M: exclusive/mandatory: auschliesslich/verpflichtend

Eine Einheit muß eine, aber nur eine der Untereinheiten sein

Kardinalitätsangaben:

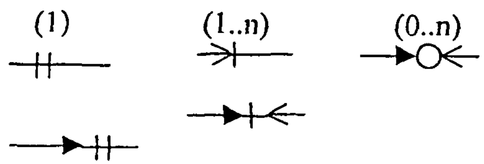

Fig. 48

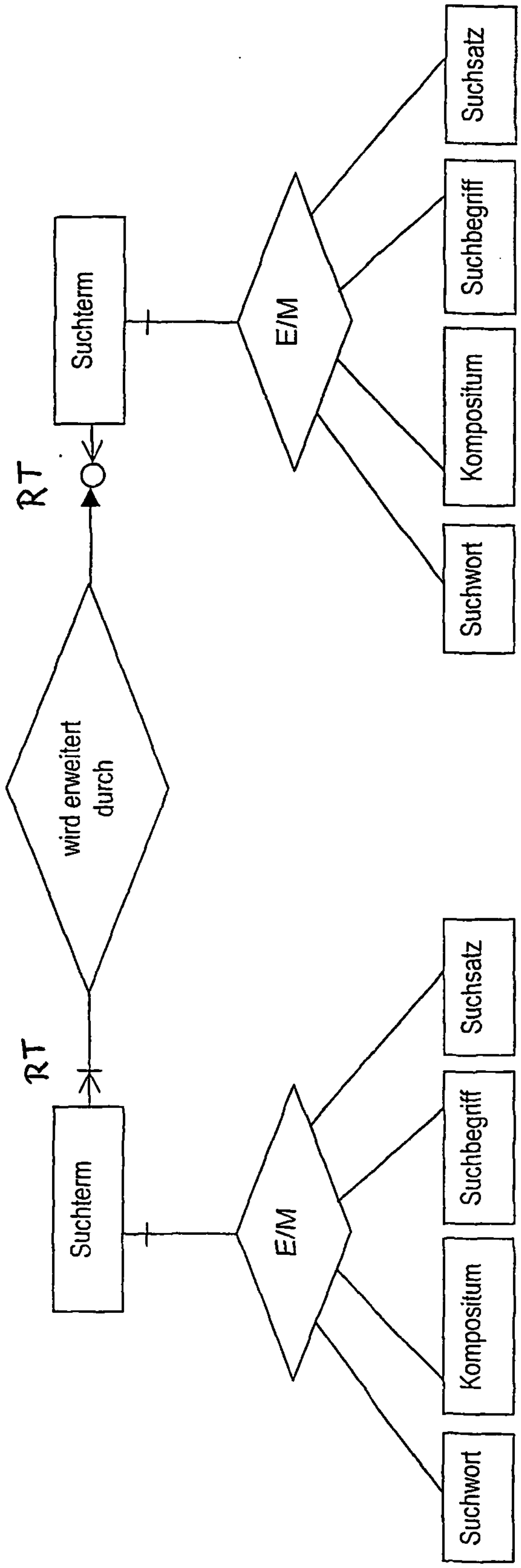
Suchterm
RT
wird erweitert durch
RT
Suchterm
E/M
Suchwort
Kompositum
Suchbegriff
Suchsatz
E/M
Suchwort
Kompositum
Suchbegriff
Suchsatz

Fig. 49

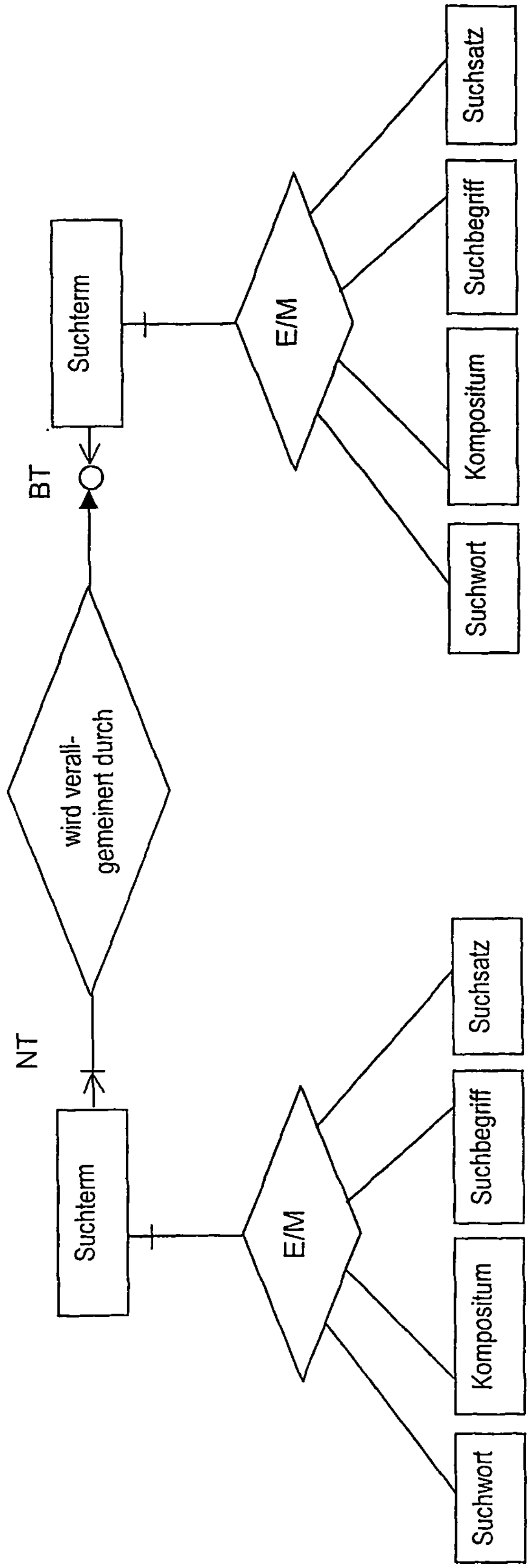
Suchterm
NT
wird verall-
gemeinert durch
BT
Suchterm
E/M
Suchwort
Kompositum
Suchbegriff
Suchsatz
E/M
Suchwort
Kompositum
Suchbegriff
Suchsatz

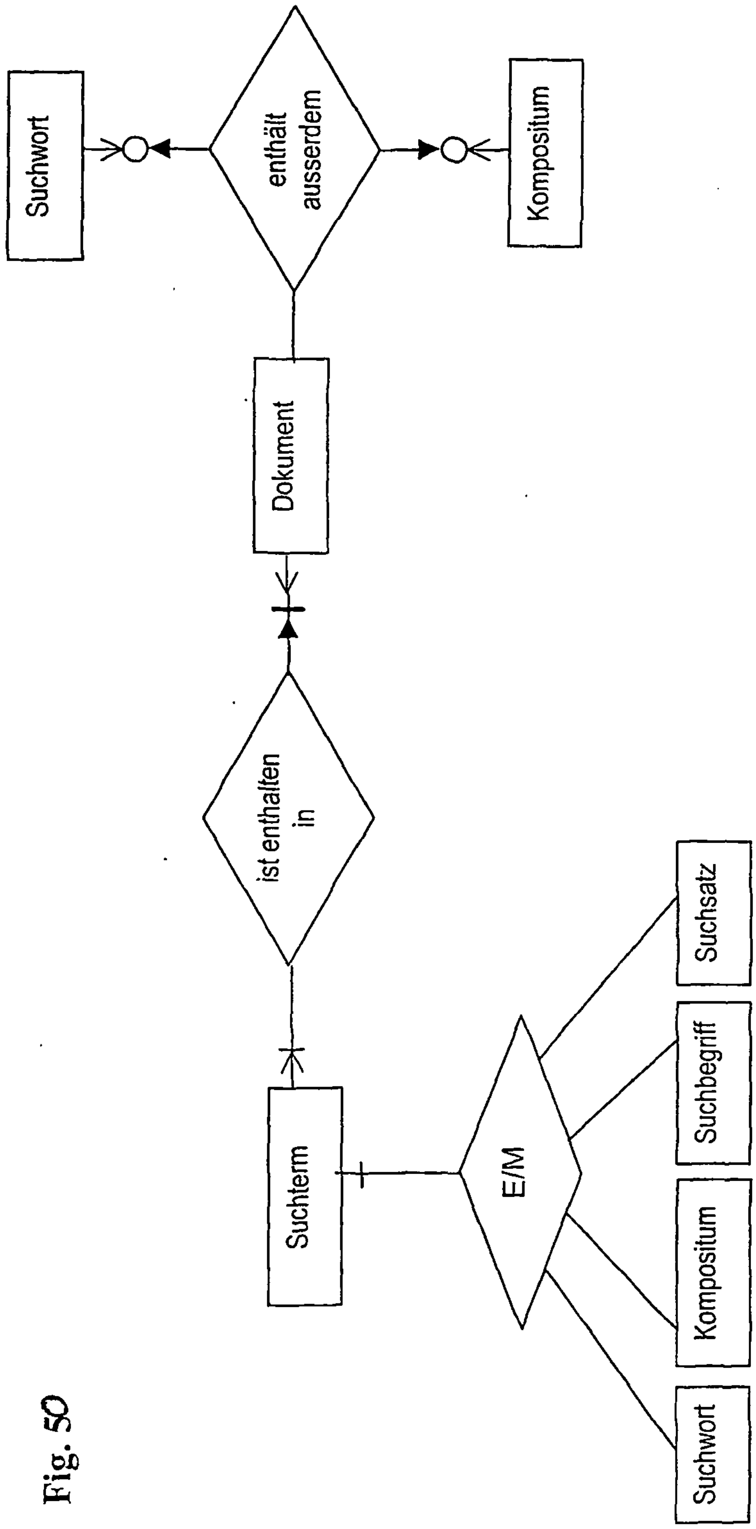
Suchwort
enthält ausserdem
Kompositum
Dokument
ist enthalten in
Suchterm
E/M
Suchwort
Kompositum
Suchbegriff
Suchsatz

Fig. 50

Fig. 51 a

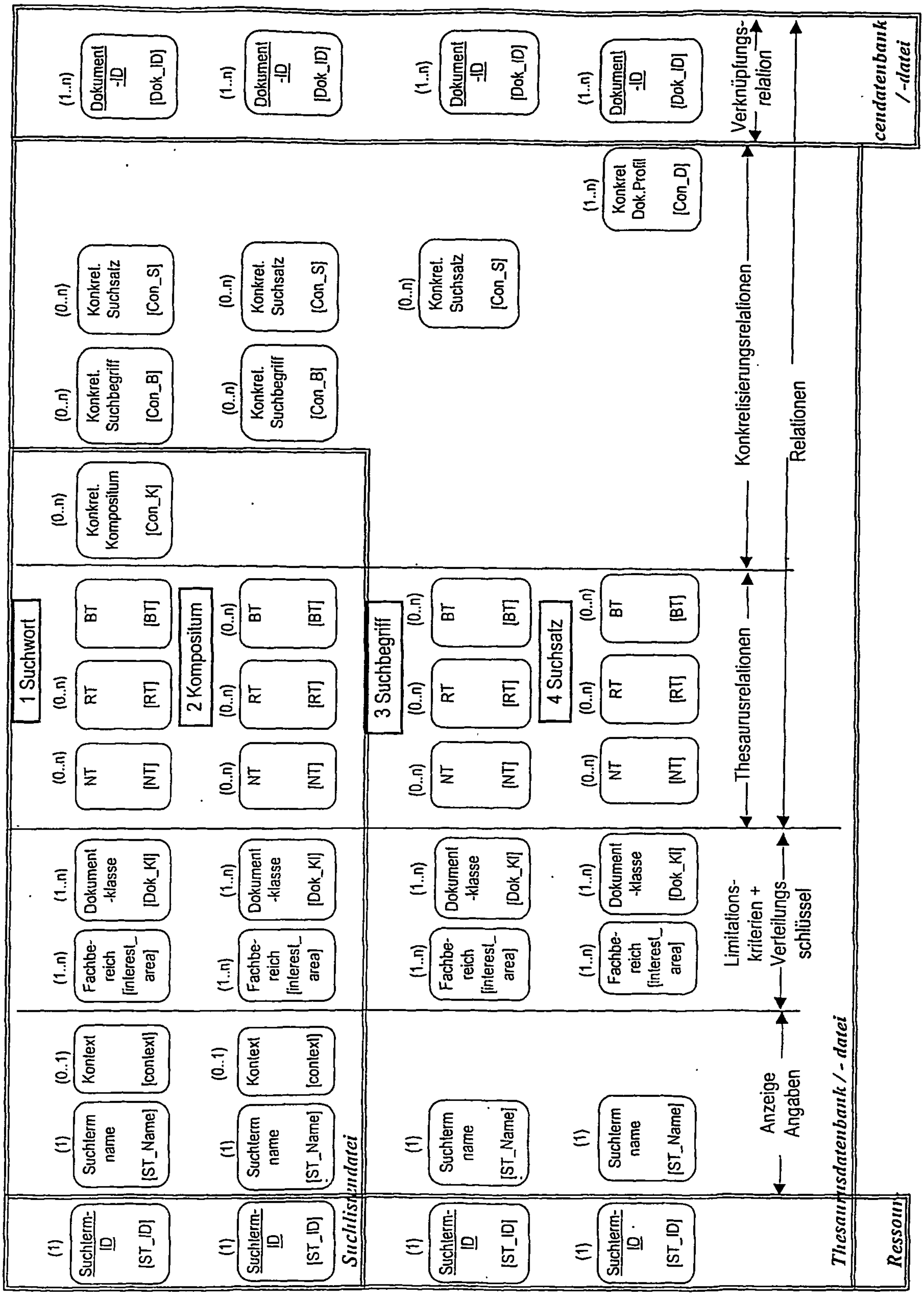
Suchterm-ID
[ST_ID]
Suchterm name
[ST_Name]
Kontext
[context]
Fachbereich [interest_area]
Dokumentklasse
[Dok_Kl]
1 Suchwort
2 Kompositum
3 Suchbegriff
4 Suchsatz
NT
[NT]
RT
[RT]
BT
[BT]
Konkret. Kompositum
[Con_K]
Konkret. Suchbegriff
[Con_B]
Konkret. Suchsatz
[Con_S]
Konkret Dok.Profil
[Con_D]
Dokument-ID
[Dok_ID]
(1)
(0..1)
(1..n)
(0..n)
Anzeige Angaben
Limitations-kriterien + Verteilungs-schlüssel
Thesaurusrelationen
Konkretisierungsrelationen
Relationen
Verknüpfungs-relation
Suchlistendatei
Thesaurusdatenbank / - datei
Ressourcendatenbank / -datei

Fig. 51 b

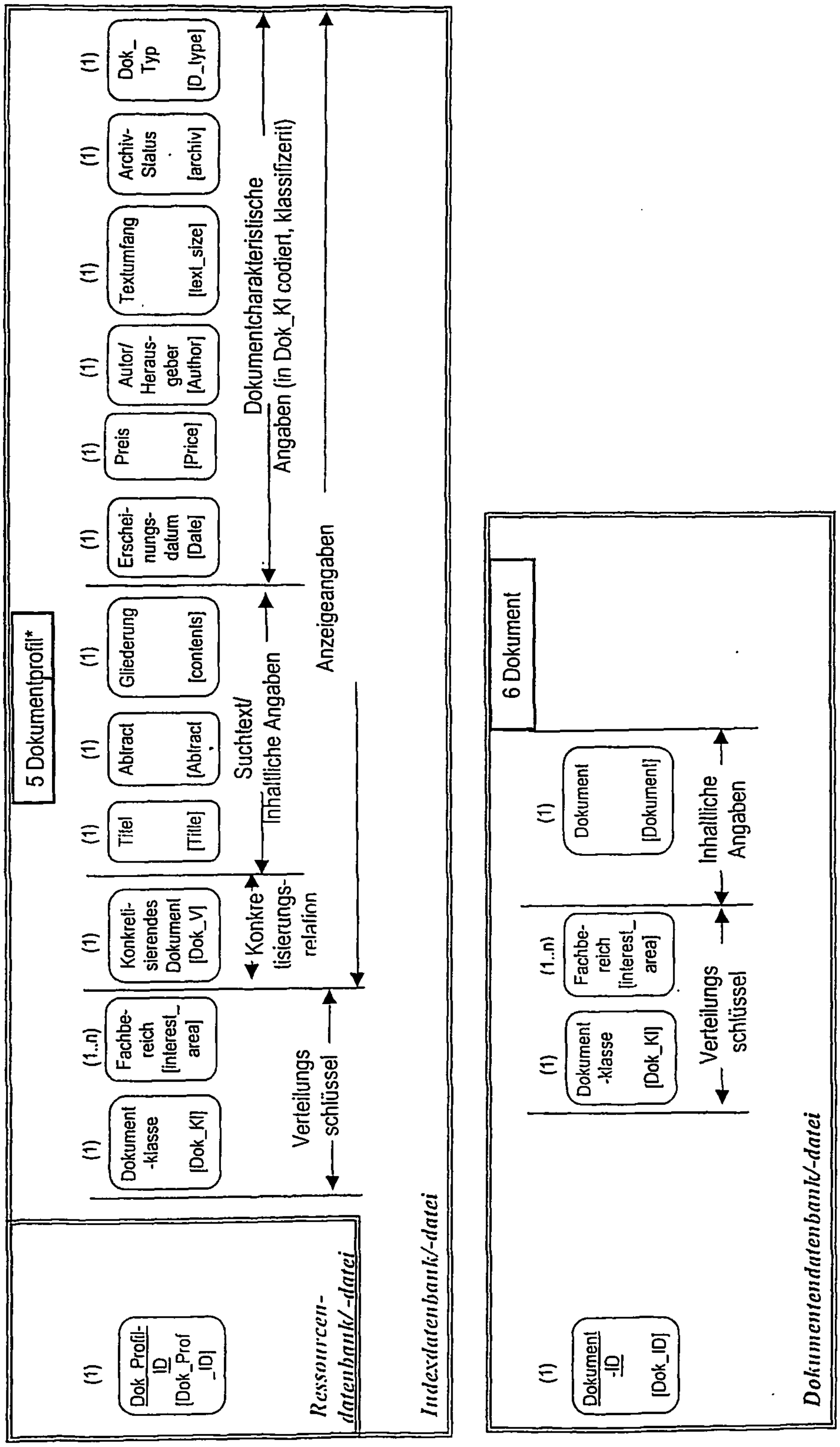


* Beispiel

Fig. 52

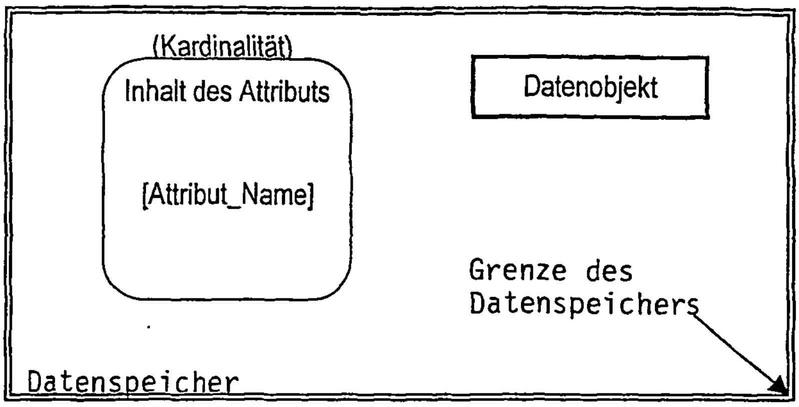
(Kardinalität)
Inhalt des Attributs
[Attribut_Name]
Datenobjekt
Grenze des Datenspeichers
Datenspeicher

Fig. 53

**Attributverzeichnis**

| Attribut typ | Attribut-inhalt | Attribut-name | Daten-Objekt Nr. | Kar-dina -lität | Attributfunktion |
|---|---|---|---|---|---|
| Anzeige angaben | Dokument | [Dokument] | 6 | 1 | Endergebnis der Suche |
| | Suchtermname | [ST_Name] | 1-4 | 1 | Name oder Inhalt des Suchterms |
| | Kontext des Suchterms | [context] | 1,2 | 0,1 | Zeigt Benutzer den Kontext an, in dem der Suchterm verwendet wird. Die Angabe ist notwendig, um zwischen Homonymen zu unterscheiden. |
| | Suchtext z.B.: | | 5 | 1 | Der Suchtext stellt die Konkretisierung eines Suchsatzes dar. Aus dem Suchtext werden sämtliche Suchsätze abgeleitet. |
| | Titel | [title] | | | |
| | Abstract | [abstract] | | | |
| | Gliederung | [contents] | | | |
| | Dokumentcharakteristische Angaben | | | | Dokumentcharakteristische Angaben sind im Gegensatz zum Suchtext unthematisch und geben diejenigen Angaben eines Dokuments (z.B. die biographischen Angaben) exakt und explizit wieder, die klassiert und codiert in der Dokumentklasse [Dok_Kl] erfaßt werden. |
| | Erscheinungsdatum | [date] | | | |
| | Preis | [price] | | | |
| | Autor/Herausgeber | [author] | | | |
| | Textumfang | [text_size] | | | |
| | Info-/Dokumenttyp | [Dok_type] | | | |
| | Dok_ID des konretisierenden Dokuments | [Dok_V] | | | Dok_ID in DokumentenDB (falls DB), sonst Verknüpfung mit Dokumentdatei (Dokument in Verzeichnis) Attribut ist im Profil sichtbar |
| RELATIONEN – Konkretisierung | ST_IDs der konretisierenden Komposita | [Con_K] | 1 | 0..n | konkretisierende Suchterme zu einem gegebenen Suchterm |
| | ST_IDs der konkretisierenden Suchbegriffe | [Con_B] | 1.2 | | |
| | ST_IDs der konkretisierenden Suchsätze | [Con_S] | 1,2,3 | | |
| | Dok_Prof_IDs der konretisierenden Dokumentprofile | [Con_D] | 4 | 1..n | Dok_Prof_ID in IndexDB (falls DB), sonst Name Indexdatei (wenn Dokumentprofil in Datei) |
| RELATIONEN – Thesaurus | ST_IDs der untergeordneten Suchterme | [NT] | 1-4 | 0..n | Suchterme zu einem gegebenen Suchtermen in einer Thesaurusrelation stehen |
| | ST_IDs der verwandten Suchterme | [RT] | | | |
| | ST_IDs der übergeordneten Suchterme | [BT] | | | |
| Verknüpfung / Primär schlüssel | Identnummer eines Dokuments | [Dok_ID] | 1-4 | 1..n | Primärschlüssel in Dokumenten_DB (wenn DB), sonst Name Dokumentdatei (wenn Dokument in Verzeichnis) |
| | | | 5,6 | 1 | zugleich: Primärschlüssel der Ressourcen_DB /-datei |
| | Identnummer eines Suchterms | [ST_ID] | 1-4 | 1 | Das Attribut ist Primärschlüssel für Suchlistendatei und Thesaurus_DB/-datei |
| | Identnummer eines Dokumentprofils | [Dok_Prof_ID] | 5 | | Attribut in Ressourcen_DB /-datei und Primärschlüssel in Index_DB (wenn DB) sonst Name Dokumentprofildatei (wenn Profil in Datei). |
| Limitations-kriterien (1-4) | Dokumentklasse der Dokumente, die mit dem Objekt verknüpft sind (dokumentbezogenes Attribut) | [Dok_Kl] | 1-4 | 1..n | Die Dokumentklasse enthält die dokumentcharakteristischen Angaben eines Dokumentes in codierter und klassifizierter Form. In Suchtermen oder Dok_Profilen zeichnet das Attribut die Angaben derjenigen Dokumente aus, die mit ihnen verknüpft sind. Sie dienen als Suchterm-attribute für die unthematische Einschänkung während der Suche, um bestimmte Suchterme anhand der Dol_Kl zu selektieren (Limitations-variablen), während sie für Dok_Profilen und Dokumenten als Schlüssel dienen, um homogen strukturierte Objekte zu gruppieren und in gemeinsamen Datenbereichen abzulegen (Verzeichnis, (DB-)Dateien). |
| | | | 5,6: fakultativ | 1 | |
| Verteilungs schlüssel (1-6) | Fachbereich des Suchterms (suchterm-bezogenes Attribut) | [interest_area] | 1-4 | 1..n | Der Fachbereich ist der einzige Gruppierungsschlüssel für Suchterme und ein weiterer für Dokumentprofile und Dokumente, wobei (im Gegensatz zur Dok_Kl) durch die Mehrfachzugehörigkeit der Objekte zu den entstehenden Fachbereichsgruppen aufgrund von multidisziplinaären Inhalte Redundanzen zwischen den Gruppen auftreten. |
| | | | 5,6: fakultativ | | |

Fig. 54

| Suchlistendatei | | | | | | | | | |
|---|---|---|---|---|---|---|---|---|---|
| DS_ID | create_date | ST_ Name | context | ST_ID | NT | RT | BT | Con_K | Dok_Kl |
| xxx | xxx | Suchwort | xxx | xxx | xxx | xxx | xxx | xxx | xxx |
| xxx | xxx | Kompositum | xxx | xxx | xxx | xxx | xxx | xxx | xxx |

Datensatzbezogene Attribute

Datenobjektbezogene Attribute

Fig. 55

| Thesaurusdatenbank /-datei | | | | | | | | | | | | |
|---|---|---|---|---|---|---|---|---|---|---|---|---|
| DS_ID | ST_ Name | context | ST_ID | NT | RT | BT | Con_K | Con_B | Con_S | Con_D | (Interest _area) | Dok_Kl |
| xxxx | Suchwort | xxx | xxx | xxx | xxx | xxx | xxx | xxx | xxx | | xxx | xxx |
| xxxx | Kompositum | xxx | xxx | xxx | xxx | xxx | | xxx | xxx | | xxx | xxx |
| xxxx | Suchbegriff | | xxx | xxx | xxx | xxx | | | xxx | | xxx | xxx |
| xxxx | Suchsatz | | xxxx | xxx | xxx | xxx | | | | xxx | xxx | xxx |

Datensatz bezogene Attribute

Datenobjektbezogene Attribute

Fig. 56

| Ressourcen_DB/-datei | | | |
|---|---|---|---|
| DS_ID | ST_ID/ Dok_Prof_ID | Dok_ID | (Dok_KI) |
| xxx | xxx | xxx | xxx |
| xxx | xxx | xxx | xxx |

Datensatz bezogene Attribute

Datenobjektbezogene Attribute

Fig. 57

| Indexdatenbank/-datei | | | | | | | | | | | |
|---|---|---|---|---|---|---|---|---|---|---|---|
| DS_ID | Dok_Prof_ID | title | abstract | contents | date | price | author | text_ size | Dok_ type | Dok_V | (Dok_KI) |
| xxxx | xxx | xxx | xxx | xxx | xxx | xxx | xxx | xxx | xxx | xxx | xxx |

Datensatz bezogenes Attribut

Datenobjektbezogene Attribute

Fig. 58

| | | |
|---|---|---|
| Quelle:<br>InfoWorld Electric/ Zeitschrift<br>Autor:<br>Matthew Nelson<br>Erscheinungsdatum:<br>Mar 21, 1998<br><br>177 Worte<br>Dokumentnr. 123456<br>Preis 2,00 DM<br>Dok_V. | ICE attracts a wider public (34)<br>Compaq to make moves into I-commerce at ICE (65)<br>*"The true question that remains is if the EC [electronic-commerce] market is large enough for Compaq to commit large product volumes to its channel"*<br>the new technical systems for E-Commerce (78) | Abstract:<br>Compaq and several other companies will use the Internet Commerce Exposition (ICE) in Boston next week as a forum to announce Internet-commerce products for both business-to-consumer and business-to-business transactions |

Fig 58

| | | |
|---|---|---|
| **Quelle:**<br>Infozeit/<br>Zeitschrift<br><br>**Autor:**<br>Matthew Nelson<br><br>**Erscheinungsdatum:**<br>Mar 21, 1998<br><br>177 **Worte**<br>**Dokumentnr.** 123456<br>**Preis** 2,00 DM<br>Dok_V. | **E-commerce in Haltestellung**<br><br>▪ Zurückhaltung v.a. bei den Dienstleistern<br>▪ Worin investiert wird und worin nicht<br>▪ Geplante Projekte oftmals verzögert | **Abstract:**<br>Viele Firmen sehen Investitionen Im Bereich e-commerce nur mehr als Ergänzung zu Ihrem Vertriebsprogramm und mobilisieren nur Mittel für notwendige Maßnahmen. |

Fig. 59

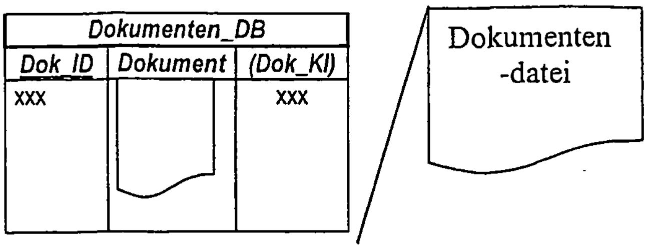
Dokumenten_DB
Dok_ID
Dokument
(Dok_Kl)
xxx
xxx
Dokumenten
-datei

Fig. 60

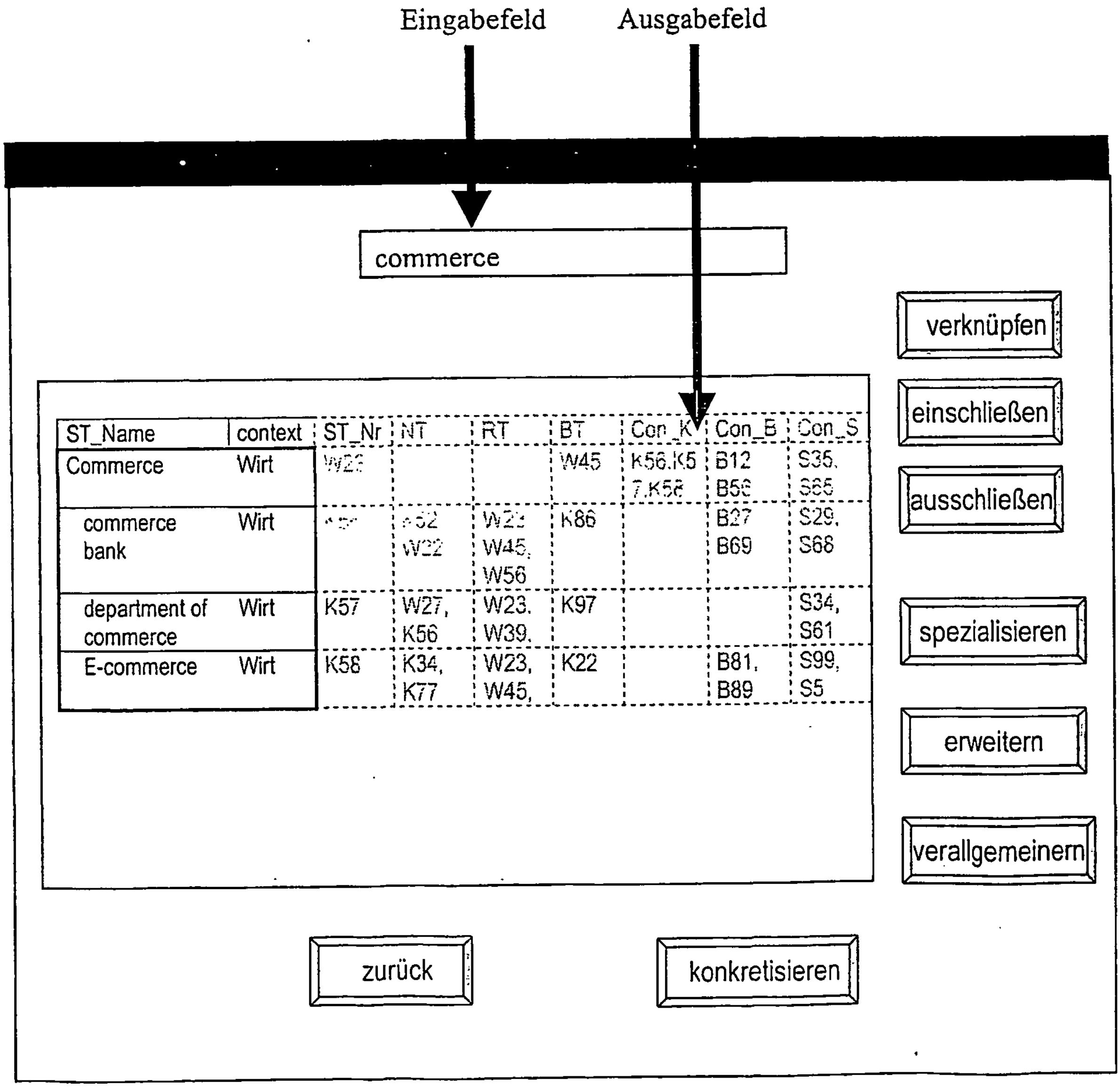
Eingabefeld
Ausgabefeld
commerce
verknüpfen
einschließen
ausschließen
spezialisieren
erweitern
verallgemeinern
ST_Name
context
ST_Nr
NT
RT
BT
Con_K
Con_B
Con_S
Commerce
Wirt
W45
K56,K5
7,K58
B12
S35,
commerce
bank
Wirt
W45,
W56
K86
B27
B69
S29,
S68
department of
commerce
Wirt
K57
W27,
K56
W23,
W39,
K97
S34,
S61
E-commerce
Wirt
K58
K34,
K77
W23,
W45,
K22
B81,
B89
S99,
S5
zurück
konkretisieren

Fig 60

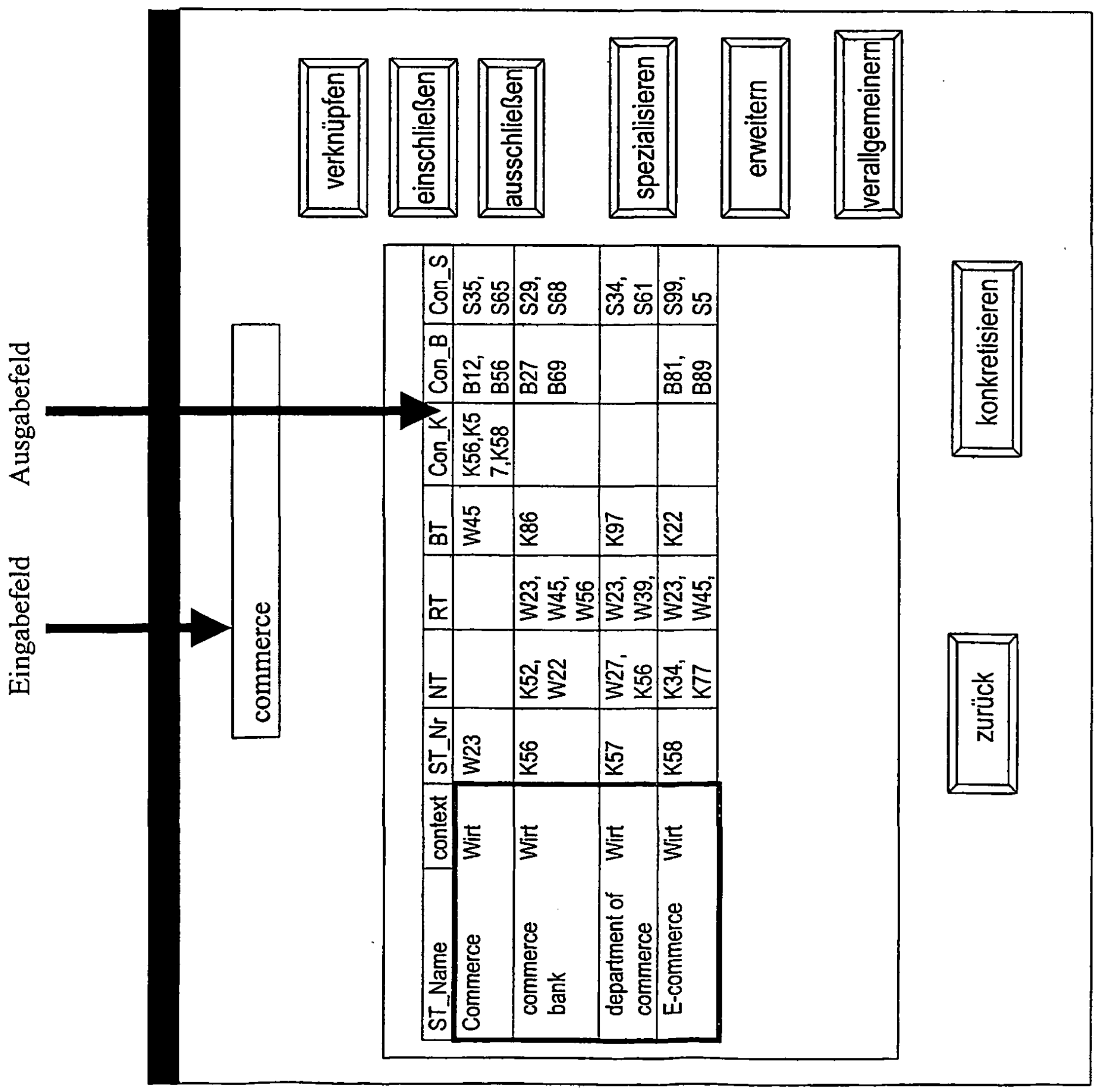
Eingabefeld
Ausgabefeld
commerce
ST_Name | context | ST_Nr | NT | RT | BT | Con_K | Con_B | Con_S
Commerce | Wirt | W23 | | | W45 | K56,K57,K58 | B12, B56 | S35, S65
commerce bank | Wirt | K56 | K52, W22 | W23, W45, W56 | K86 | | B27 B69 | S29, S68
department of commerce | Wirt | K57 | W27, K56 | W23, W39, | K97 | | | S34, S61
E-commerce | Wirt | K58 | K34, K77 | W23, W45, | K22 | | B81, B89 | S99, S5
verknüpfen
einschließen
ausschließen
spezialisieren
erweitern
verallgemeinern
konkretisieren
zurück

Fig. 61

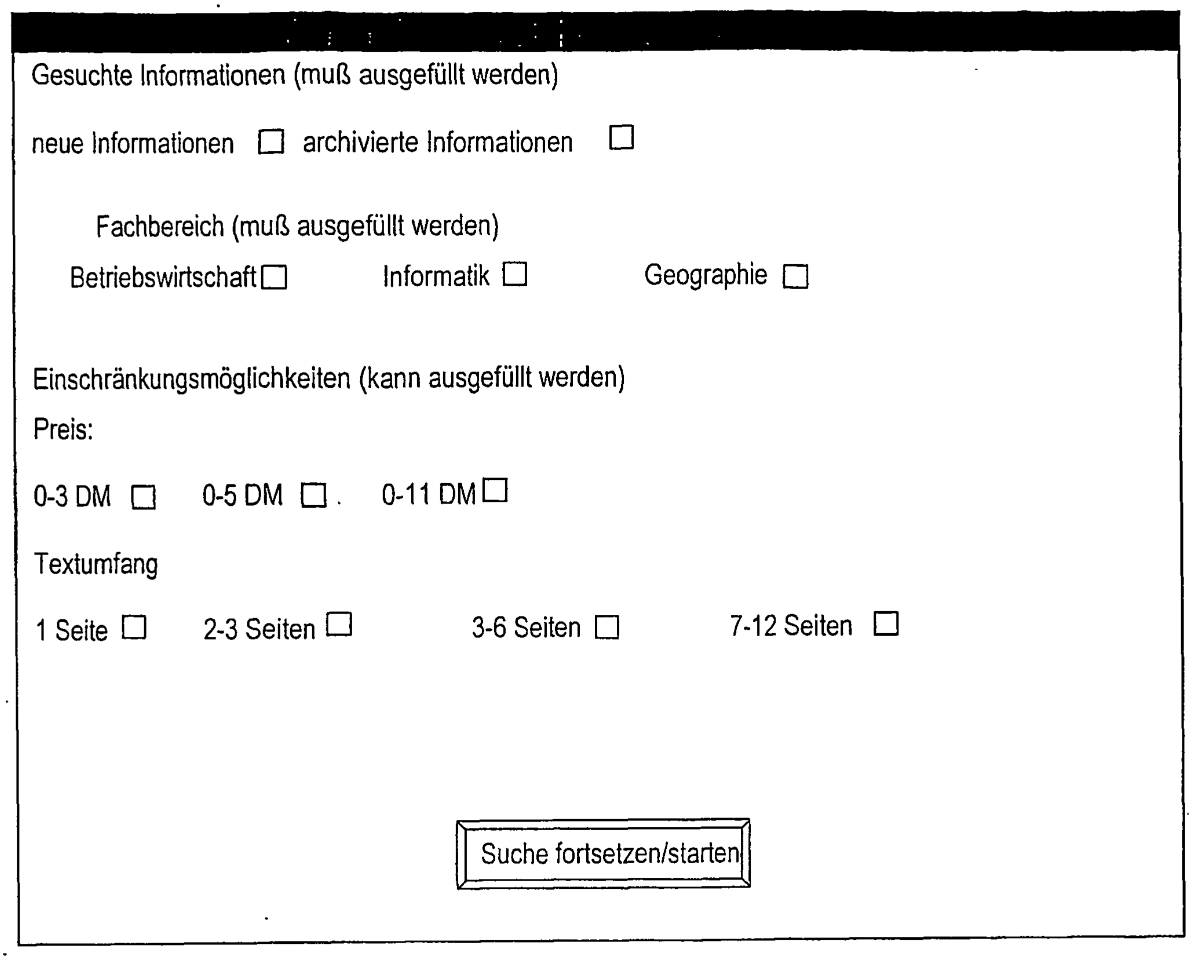
Gesuchte Informationen (muß ausgefüllt werden)
neue Informationen
archivierte Informationen
Fachbereich (muß ausgefüllt werden)
Betriebswirtschaft
Informatik
Geographie
Einschränkungsmöglichkeiten (kann ausgefüllt werden)
Preis:
0-3 DM
0-5 DM
0-11 DM
Textumfang
1 Seite
2-3 Seiten
3-6 Seiten
7-12 Seiten
Suche fortsetzen/starten

Fig. 62

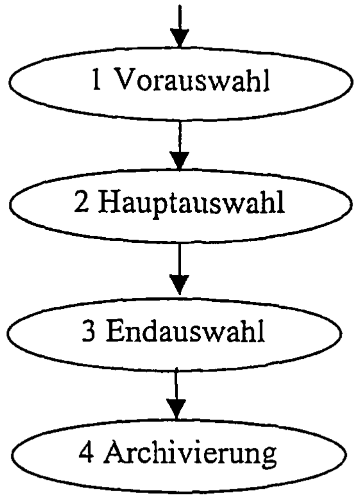


Fig. 63

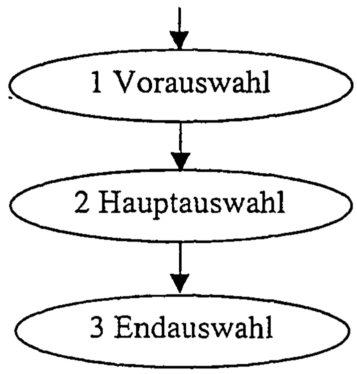


Fig. 64

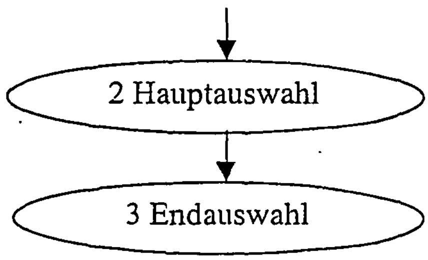

Fig. 66

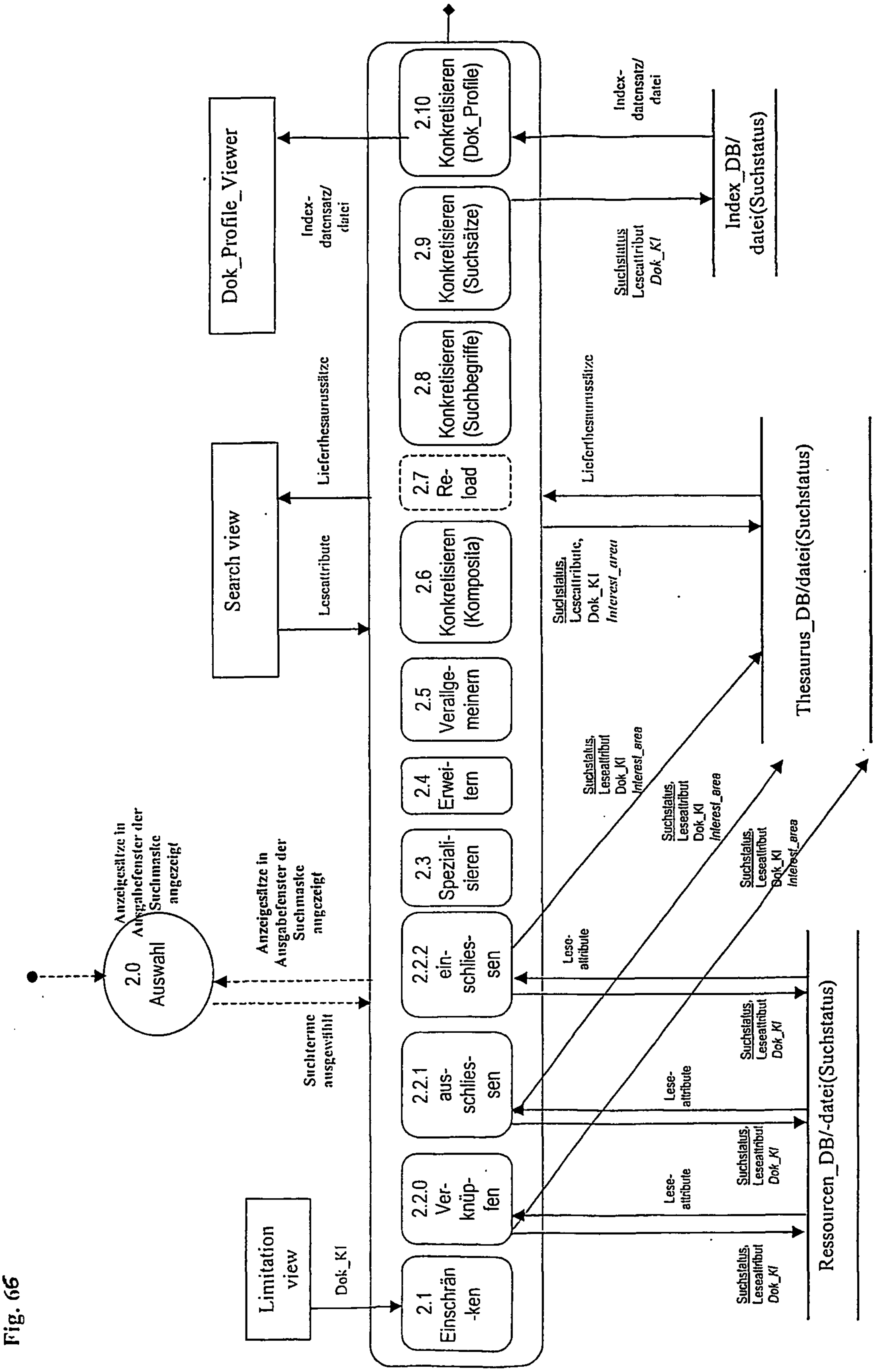
2.0 Auswahl
Anzeigesätze in Ausgabefenster der Suchmaske angezeigt
Suchterme ausgewählt
Limitation view
Dok_KI
Search view
Leseattribute
Liefertheasaurussätze
Dok_Profile_Viewer
Index-datensatz/datei
2.1 Einschrän-ken
2.2.0 Ver-knüp-fen
2.2.1 aus-schlies-sen
2.2.2 ein-schlies-sen
2.3 Speziali-sieren
2.4 Erwei-tern
2.5 Verallge-meinern
2.6 Konkretisieren (Komposita)
2.7 Reload
2.8 Konkretisieren (Suchbegriffe)
2.9 Konkretisieren (Suchsätze)
2.10 Konkretisieren (Dok_Profile)
Lese-attribute
Suchstatus, Leseattribut Dok_KI
Suchstatus, Leseattribut Dok_KI Interest_area
Suchstatus, Leseattribute, Dok_KI Interest_area
Index_DB/ datei(Suchstatus)
Thesaurus_DB/datei(Suchstatus)
Ressourcen_DB/-datei(Suchstatus)

Fig. 6B

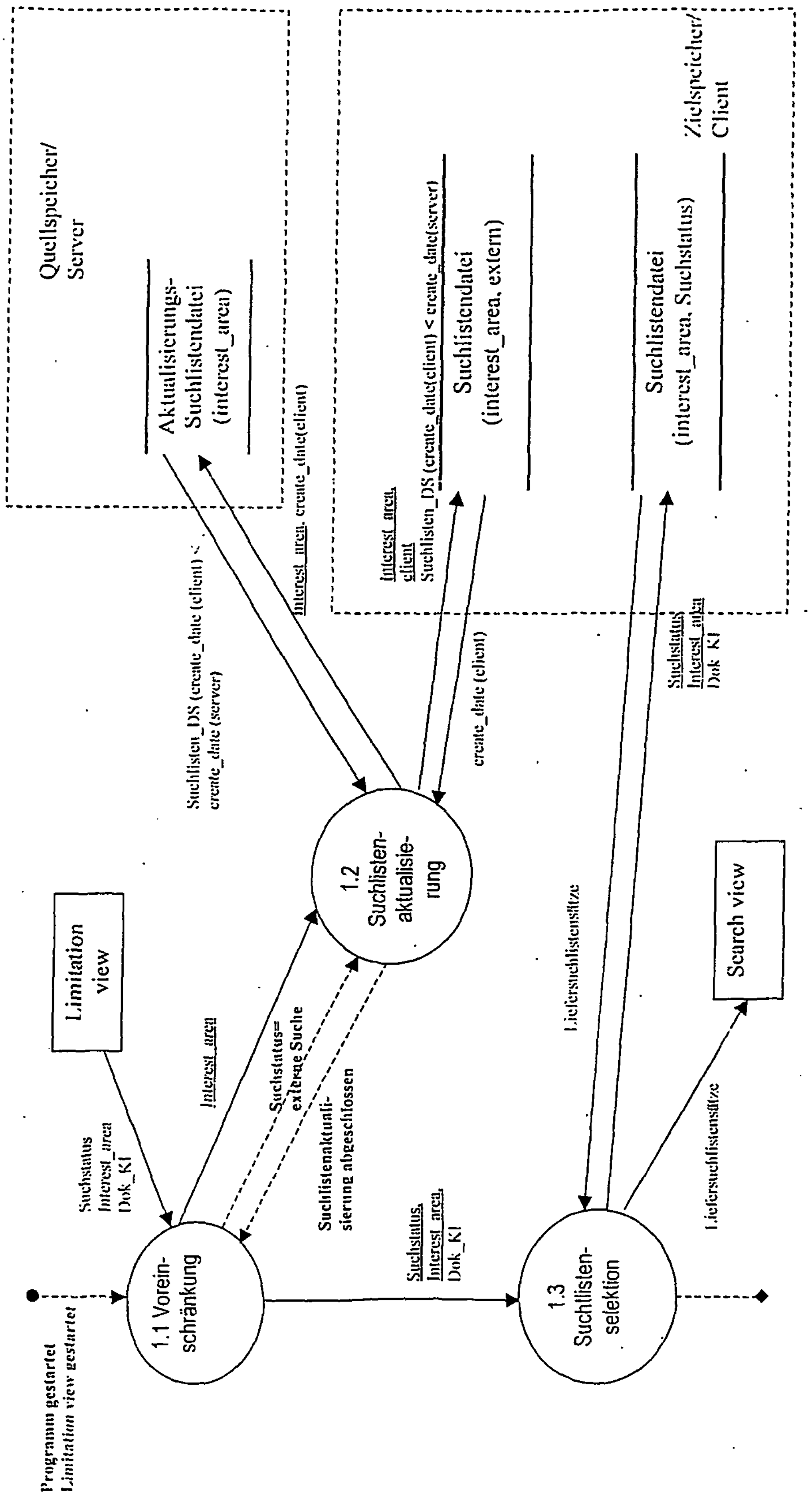
Programm gestartet
Limitation view gestartet
1.1 Vorein-schränkung
Limitation view
Suchstatus
Interest_area
Dok_Kl
Interest_area
Suchstatus= externe Suche
Suchlistenaktuali-sierung abgeschlossen
1.2 Suchlisten-aktualisie-rung
Suchlisten_DS (create_date (client) < create_date (server)
Interest_area, create_date(client)
Quellspeicher/Server
Aktualisierungs-Suchlistendatei (interest_area)
Interest_area, client
Suchlisten_DS (create_date(client) < create_date(server)
create_date (client)
Suchlistendatei (interest_area, extern)
Suchlistendatei (interest_area, Suchstatus)
Zielspeicher/Client
Suchstatus
Interest_area
Dok_Kl
Suchstatus, Interest_area, Dok_Kl
1.3 Suchlisten-selektion
Liefersuchlistensätze
Liefersuchlistensätze
Search view

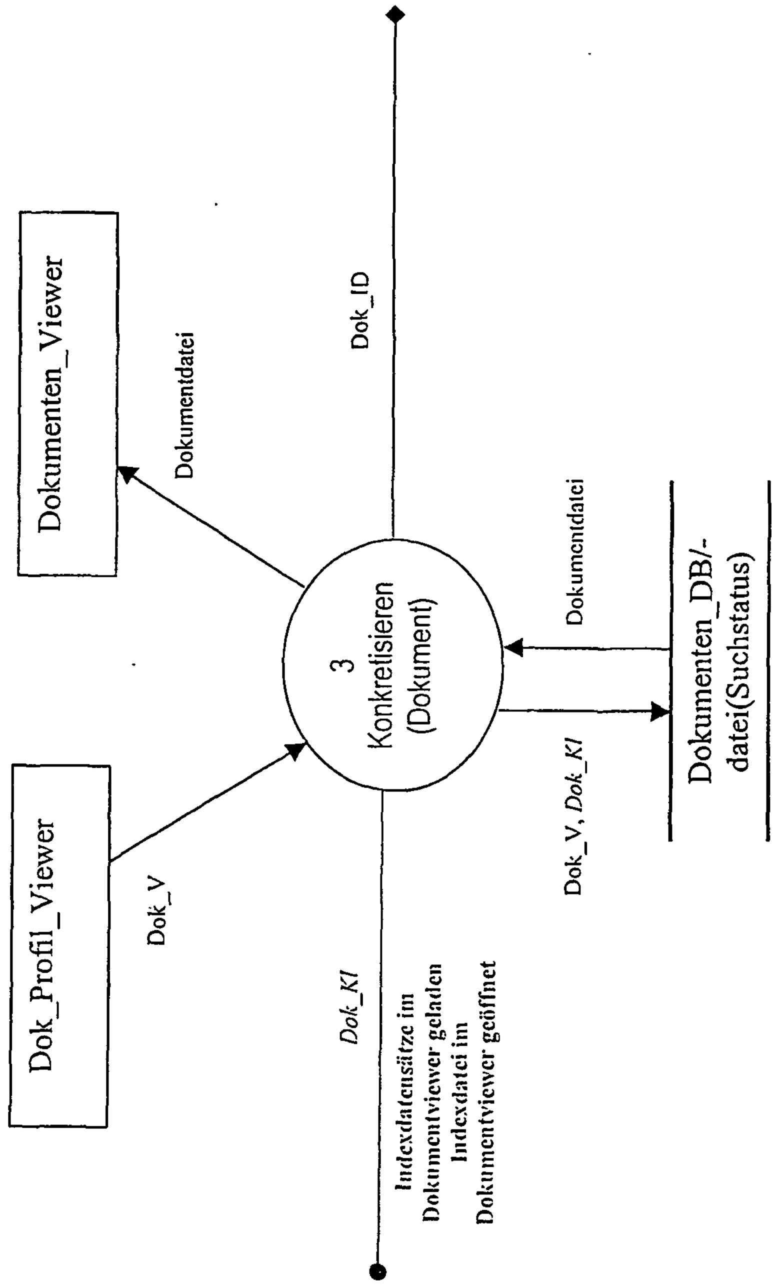
Dokumenten_Viewer
Dokumentdatei
Dok_ID
3
Konkretisieren
(Dokument)
Dokumentdatei
Dokumenten_DB/-
datei(Suchstatus)
Dok_V, Dok_KI
Dok_Profil_Viewer
Dok_V
Dok_KI
Indexdatensätze im
Dokumentviewer geladen
Indexdatei im
Dokumentviewer geöffnet

Fig. 67

Fig. 69

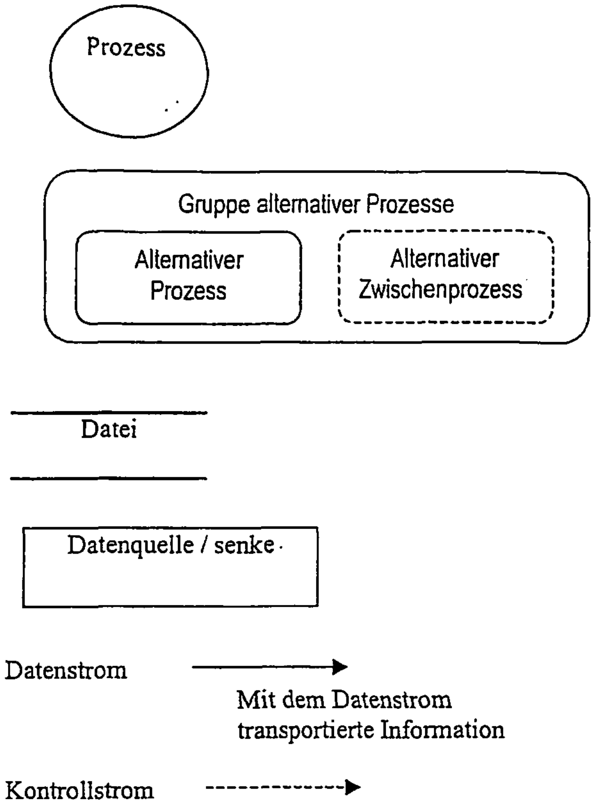
Prozess
Gruppe alternativer Prozesse
Alternativer Prozess
Alternativer Zwischenprozess
Datei
Datenquelle / senke
Datenstrom
Mit dem Datenstrom transportierte Information
Kontrollstrom

Fig. 70

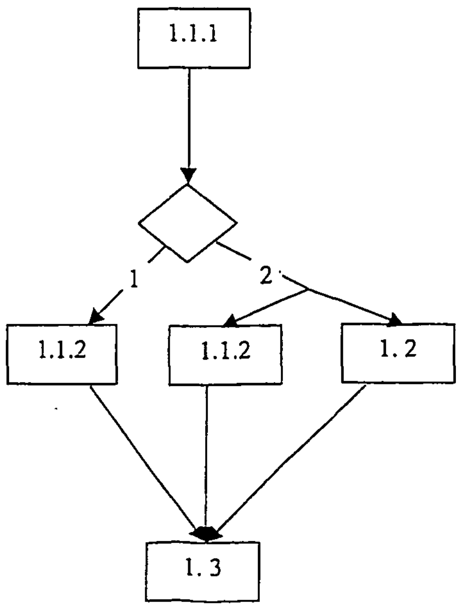
1.1.1
1
2
1.1.2
1.1.2
1. 2
1. 3

Fig. 68

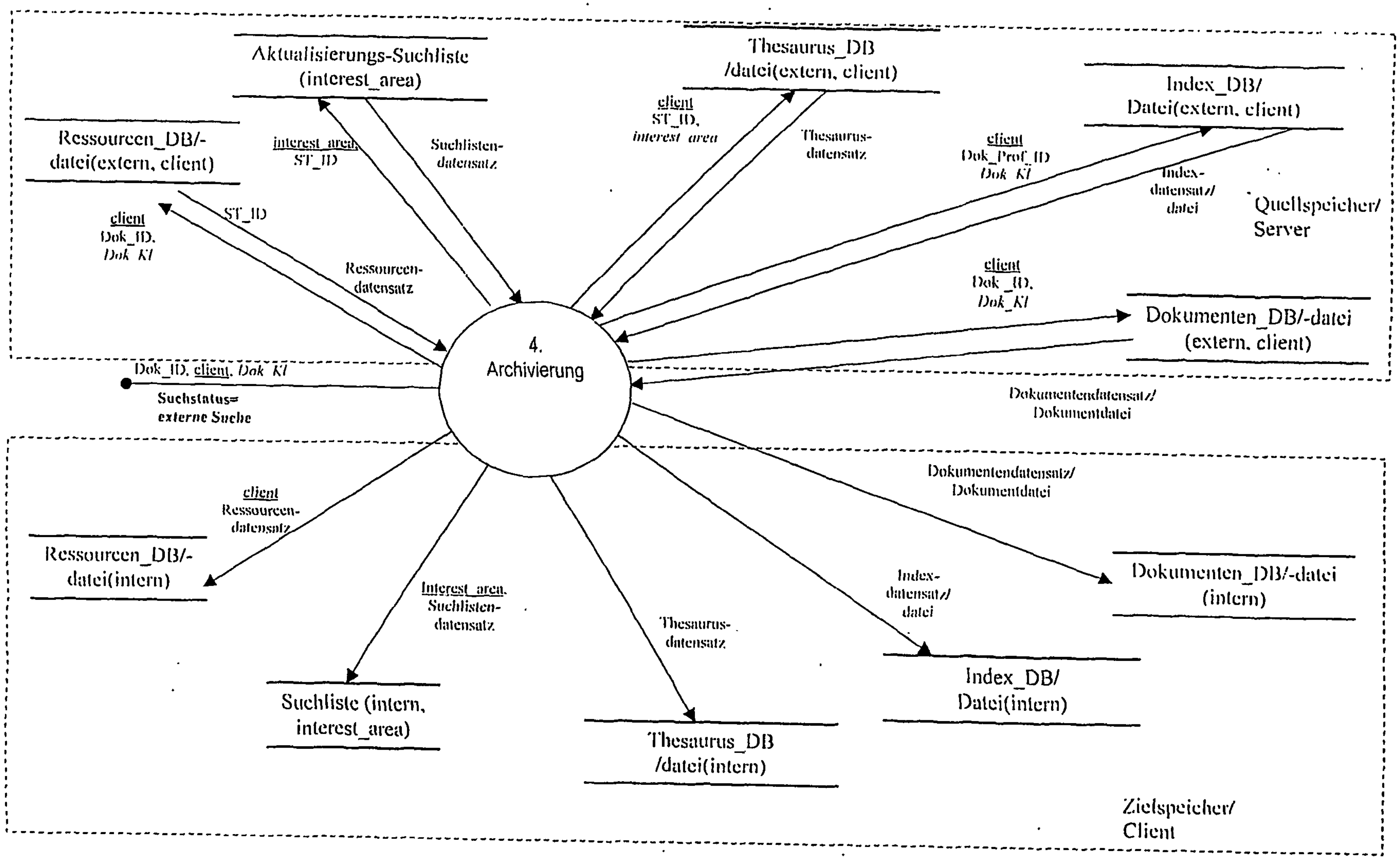
Aktualisierungs-Suchliste (interest_area)
Thesaurus_DB /datei(extern, client)
Index_DB/ Datei(extern, client)
Ressourcen_DB/- datei(extern, client)
interest_area, ST_ID
Suchlisten-datensatz
client ST_ID, interest_area
Thesaurus-datensatz
client Dok_Prof_ID Dok_Kl
Index-datensatz/ datei
Quellspeicher/ Server
client Dok_ID, Dok_Kl
ST_ID
Ressourcen-datensatz
client Dok_ID, Dok_Kl
Dokumenten_DB/-datei (extern, client)
4. Archivierung
Dok_ID, client, Dok_Kl
Suchstatus= externe Suche
Dokumentendatensatz/ Dokumentdatei
Dokumentendatensatz/ Dokumentdatei
client Ressourcen-datensatz
Ressourcen_DB/- datei(intern)
Interest_area, Suchlisten-datensatz
Thesaurus-datensatz
Index-datensatz/ datei
Dokumenten_DB/-datei (intern)
Suchliste (intern, interest_area)
Thesaurus_DB /datei(intern)
Index_DB/ Datei(intern)
Zielspeicher/ Client

Fig. 71

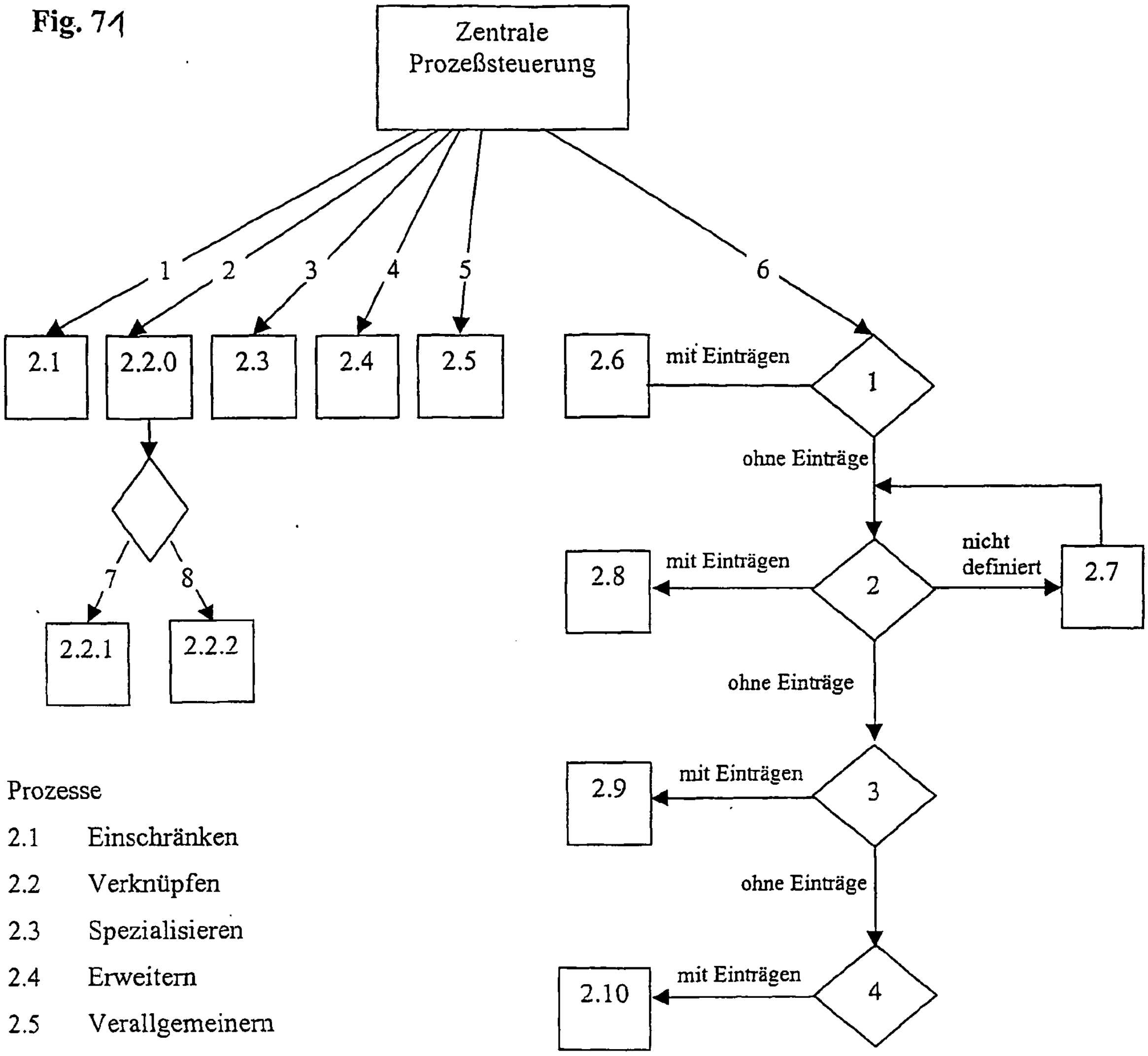


Prozesse

2.1 Einschränken

2.2 Verknüpfen

2.3 Spezialisieren

2.4 Erweitern

2.5 Verallgemeinern

2.6 Konkretisieren(Komposita)

2.7 Reload

2.8 Konkretisieren(Suchbegriffe)

2.9 Konkretisieren(Suchsätze)

2.10 Konkretisieren(Dok_Profile)

Bedingungen

1: Leseattribut [Con_K]

2: Leseattribut [Con_B]

3: Leseattribut [Con_S]

4: Leseattribut [Con_D]

Prozesswahloptionen:

1 Einschränken

2 Verknüpfen

3 Spezialisieren

4 Erweitern

5 Verallgemeinern

6 Konkretisieren

7 Einschliessen

8 Ausschliessen

Fig. 72

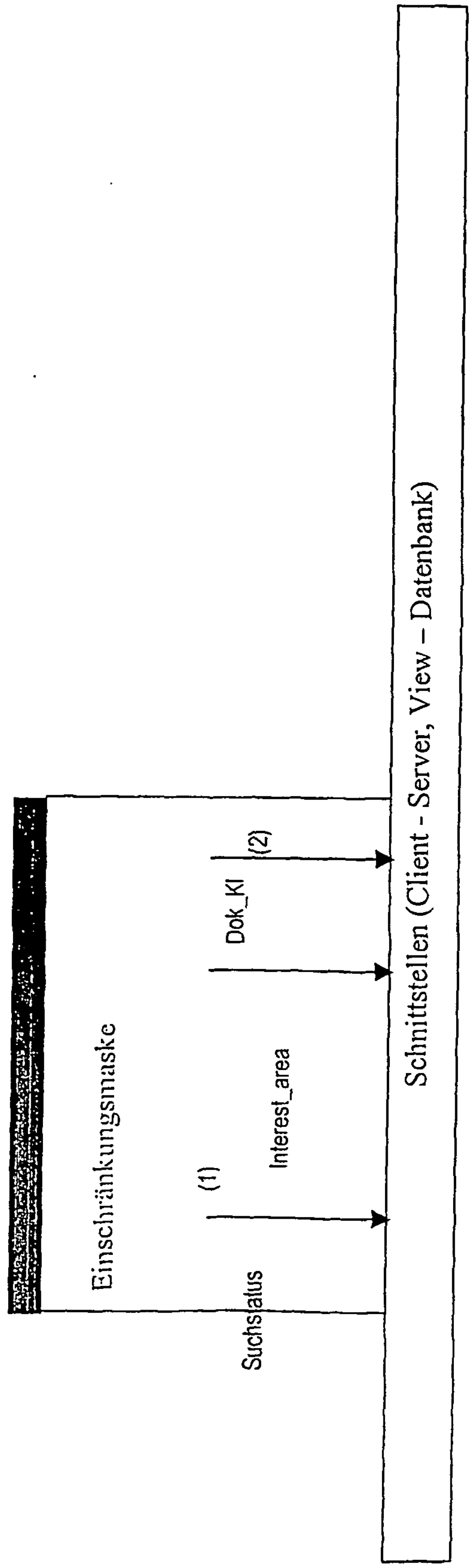
Einschränkungsmaske
Suchstatus
(1)
Interest_area
Dok_Kl
(2)
Schnittstellen (Client - Server, View – Datenbank)

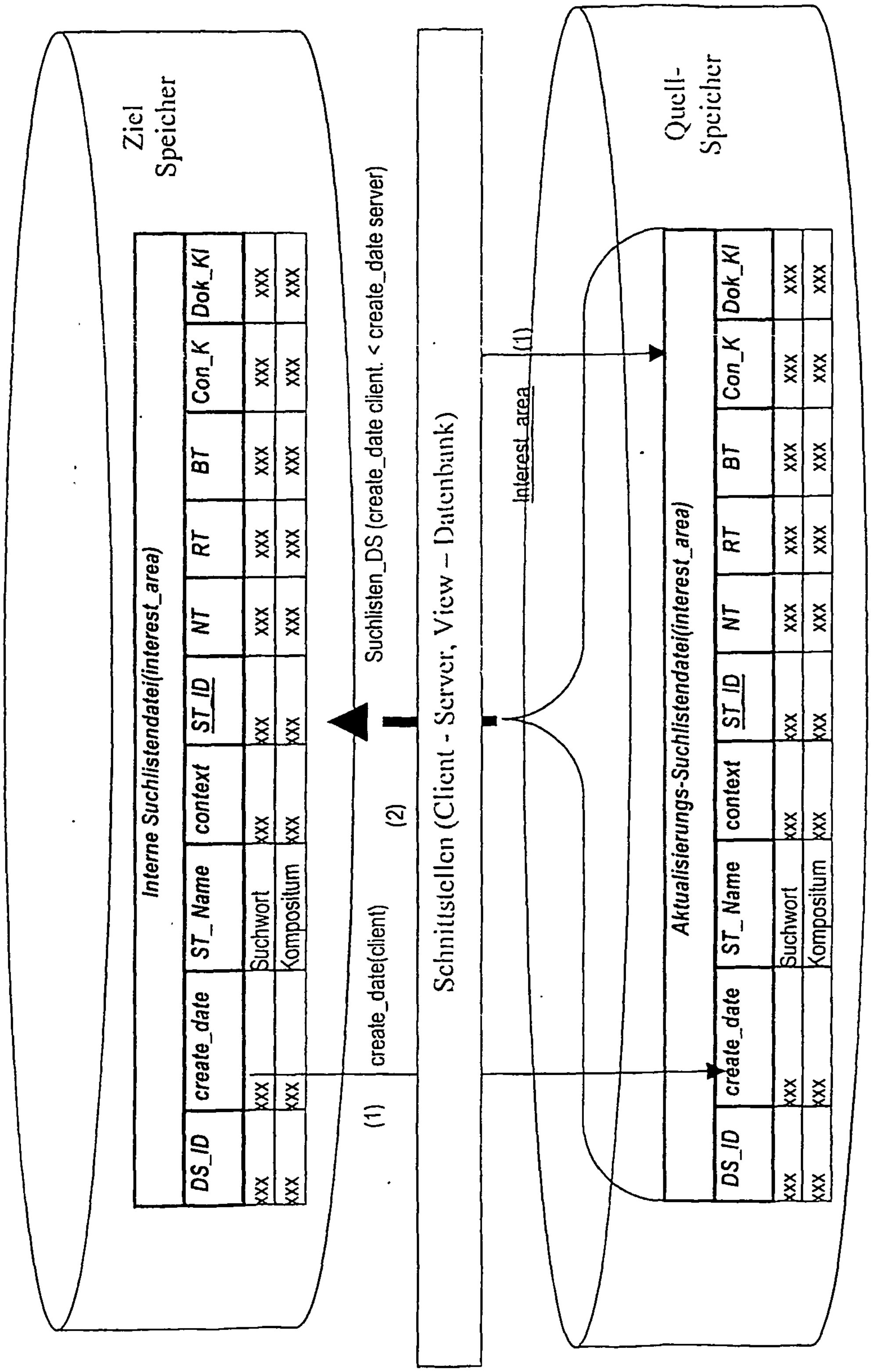
Ziel Speicher
Interne Suchlistendatei(interest_area)
DS_ID
create_date
ST_Name
context
ST_ID
NT
RT
BT
Con_K
Dok_KI
xxx
Suchwort
Kompositum
(1)
create_date(client)
(2)
Suchlisten_DS (create_date client. < create_date server)
Schnittstellen (Client - Server, View - Datenbank)
Interest_area
(1)
Aktualisierungs-Suchlistendatei(interest_area)
Quell-Speicher

Fig. 13

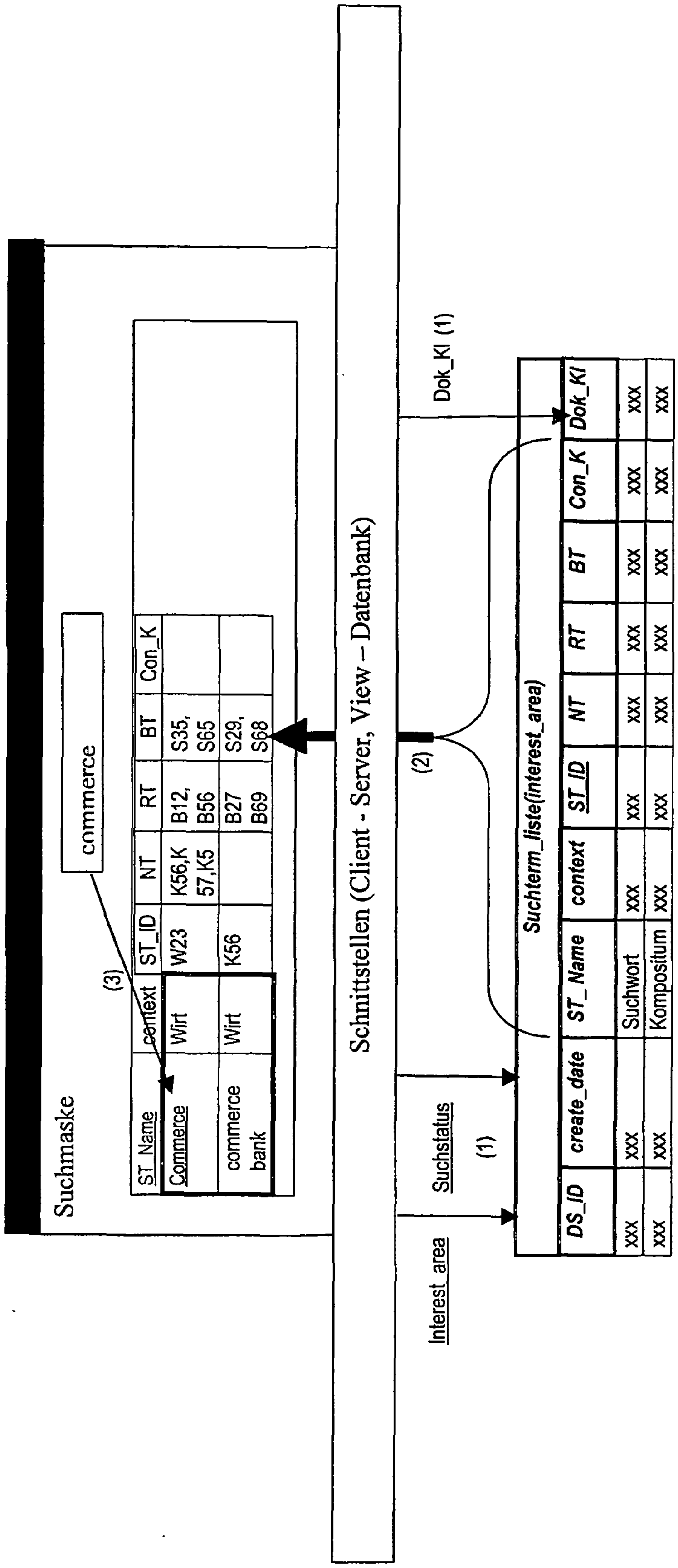
Suchmaske
commerce
(3)
ST_Name
context
ST_ID
NT
RT
BT
Con_K
Commerce
Wirt
W23
K56,K57,K5
B12, B56
S35, S65
commerce bank
Wirt
K56
B27 B69
S29, S68
Schnittstellen (Client - Server, View – Datenbank)
Interest area
Suchstatus
(1)
(2)
Dok_Kl (1)
Suchterm_liste(interest_area)
DS_ID
create_date
ST_ Name
context
ST_ID
NT
RT
BT
Con_K
Dok_Kl
Suchwort
Kompositum
xxx

Fig 74

Fig.75

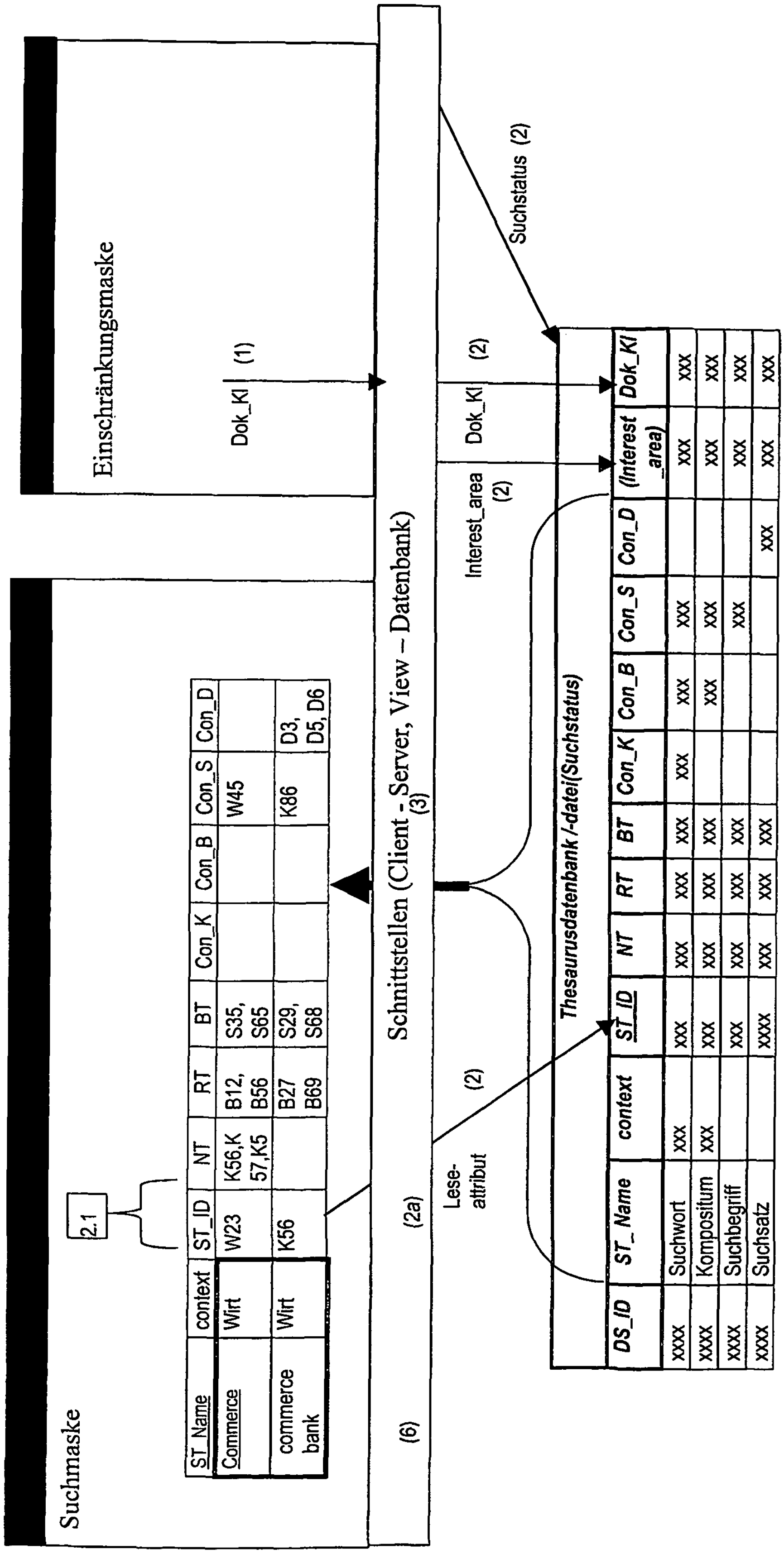
Suchmaske
Einschränkungsmaske
2.1
ST_Name | context | ST_ID | NT | RT | BT | Con_K | Con_B | Con_S | Con_D
Commerce | Wirt | W23 | K56,K57,K5 | B12, B56 | S35, S65 | | | W45 |
commerce bank | Wirt | K56 | | B27 B69 | S29, S68 | | | K86 | D3, D5, D6
Dok_Kl (1)
Schnittstellen (Client - Server, View – Datenbank)
(3)
(6)
(2a)
Lese-attribut
(2)
Interest_area (2)
Dok_Kl (2)
Suchstatus (2)
Thesaurusdatenbank /-datei(Suchstatus)
DS_ID | ST_Name | context | ST_ID | NT | RT | BT | Con_K | Con_B | Con_S | Con_D | (Interest_area) | Dok_Kl
xxxx | Suchwort | xxx | xxx | xxx | xxx | xxx | xxx | xxx | xxx | | xxx | xxx
xxxx | Kompositum | xxx | xxx | xxx | xxx | xxx | | xxx | xxx | | xxx | xxx
xxxx | Suchbegriff | | xxx | xxx | xxx | xxx | | | xxx | | xxx | xxx
xxxx | Suchsatz | | xxxx | xxx | xxx | xxx | | | | xxx | xxx | xxx

Fig 76

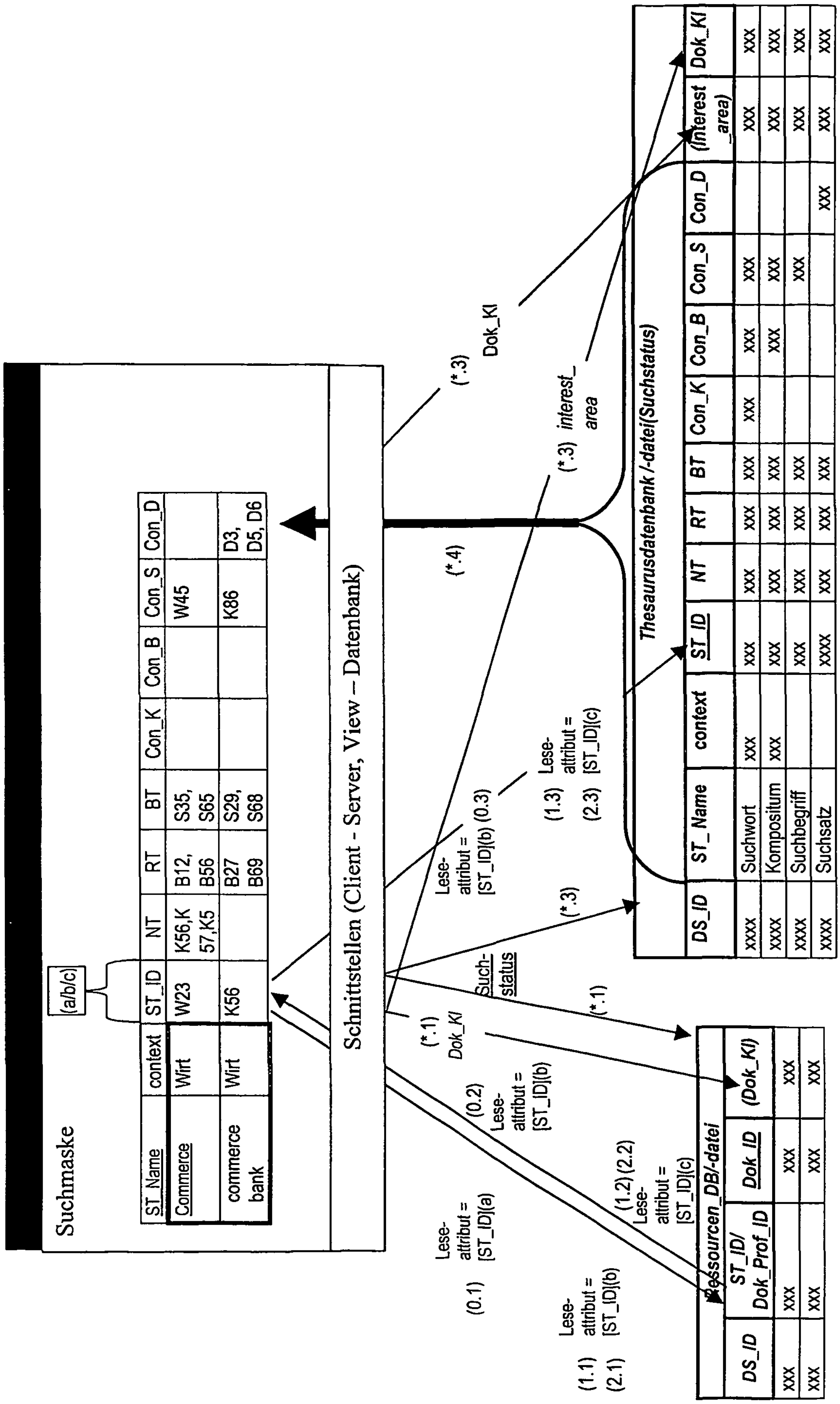
Suchmaske
[a/b/c]
ST_Name
context
ST_ID
NT
RT
BT
Con_K
Con_B
Con_S
Con_D
Commerce
Wirt
W23
K56,K 57,K5
B12, B56
S35, S65
W45
commerce bank
Wirt
K56
B27 B69
S29, S68
K86
D3, D5, D6
Schnittstellen (Client - Server, View – Datenbank)
(0.1) Lese-attribut = [ST_ID](a)
(1.1) (2.1) Lese-attribut = [ST_ID](b)
(0.2) Lese-attribut = [ST_ID](b)
(1.2) (2.2) Lese-attribut = [ST_ID](c)
(*.1) Dok_Kl
(*.1)
Such-status
Lese-attribut = [ST_ID](b) (0.3)
(1.3) (2.3) Lese-attribut = [ST_ID](c)
(*.3)
(*.4)
(*.3) interest_area
(*.3) Dok_Kl
Ressourcen_DB/-datei
DS_ID
ST_ID/ Dok_Prof_ID
Dok_ID
(Dok_Kl)
xxx
Thesaurusdatenbank /-datei(Suchstatus)
DS_ID
ST_Name
context
ST_ID
NT
RT
BT
Con_K
Con_B
Con_S
Con_D
(interest_area)
Dok_Kl
xxxx
Suchwort
Kompositum
Suchbegriff
Suchsatz

Fig.77

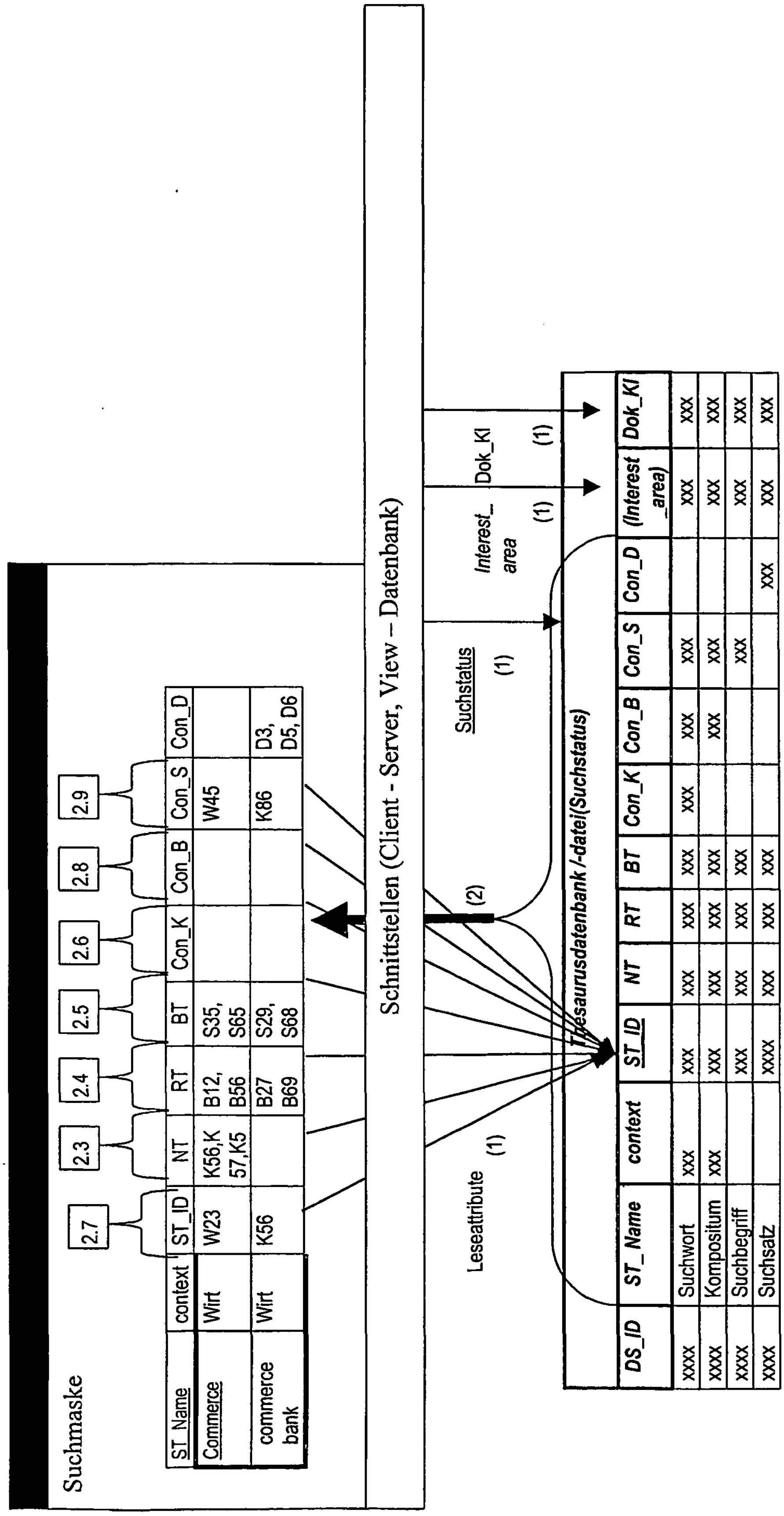
Suchmaske
ST_Name
context
ST_ID
NT
RT
BT
Con_K
Con_B
Con_S
Con_D
Commerce
Wirt
W23
K56,K 57,K5
B12, B56
S35, S65
W45
commerce bank
Wirt
K56
B27 B69
S29, S68
K86
D3, D5, D6
2.7
2.3
2.4
2.5
2.6
2.8
2.9
Schnittstellen (Client - Server, View – Datenbank)
Leseattribute
(1)
(2)
Suchstatus
(1)
Interest_ area
(1)
Dok_Kl
(1)
Thesaurusdatenbank I-datei(Suchstatus)
DS_ID
ST_Name
context
ST_ID
NT
RT
BT
Con_K
Con_B
Con_S
Con_D
(Interest _area)
Dok_Kl
xxxx
Suchwort
xxx
xxx
xxx
xxx
xxx
xxx
xxx
xxx
xxx
xxx
xxx
xxxx
Kompositum
xxx
xxx
xxx
xxx
xxx
xxx
xxx
xxx
xxx
xxxx
Suchbegriff
xxx
xxx
xxx
xxx
xxx
xxx
xxx
xxxx
Suchsatz
xxxx
xxx
xxx
xxx
xxx
xxx
xxx

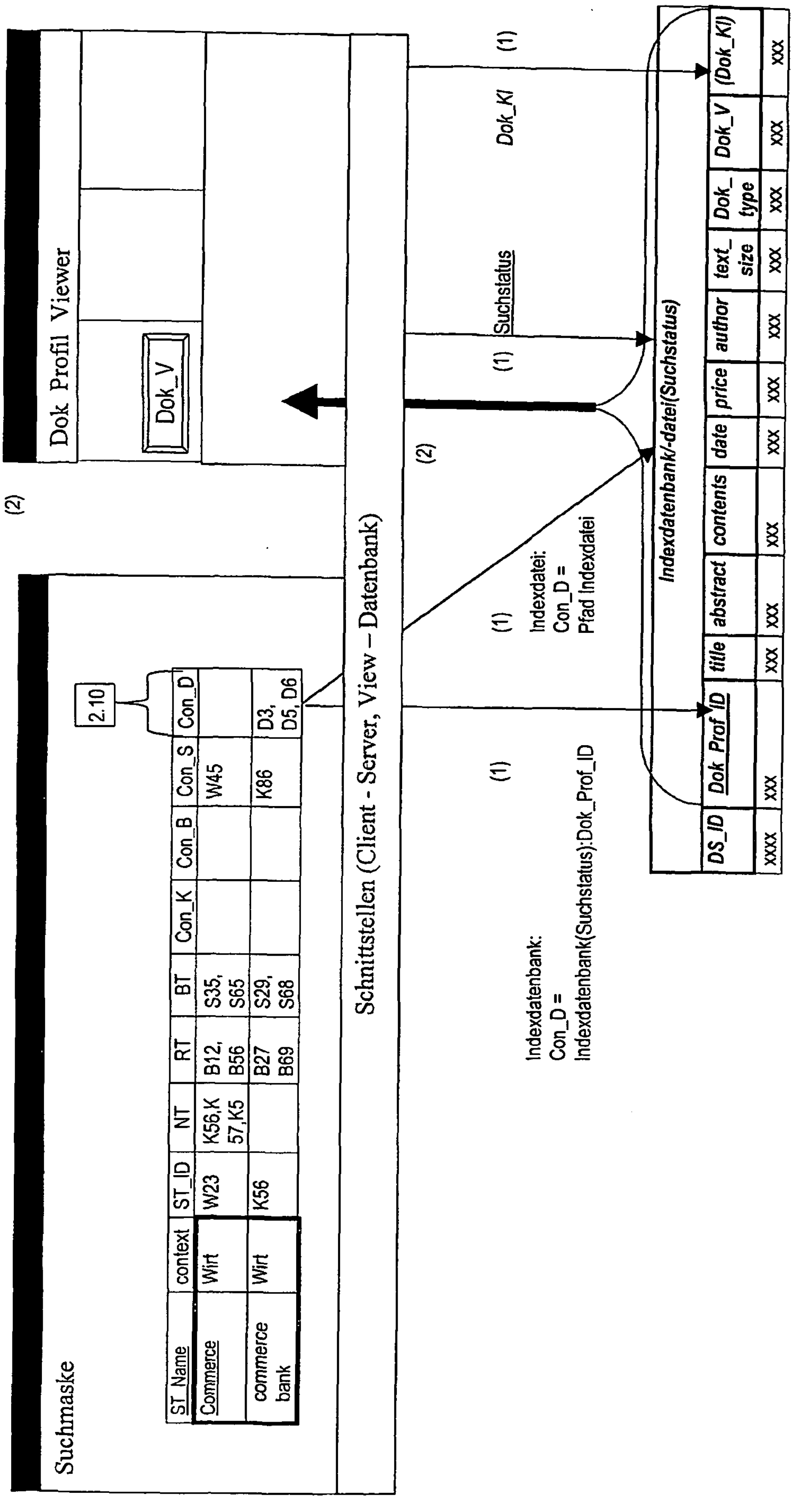
Suchmaske
Dok Profil Viewer
Dok_V
Schnittstellen (Client - Server, View – Datenbank)
2.10
ST_Name | context | ST_ID | NT | RT | BT | Con_K | Con_B | Con_S | Con_D
Commerce | Wirt | W23 | K56,K 57,K5 | B12, B56 | S35, S65 | | | W45 |
commerce bank | Wirt | K56 | | B27 B69 | S29, S68 | | | K86 | D3, D5, D6
(1)
(2)
Suchstatus
Dok_Kl
Indexdatenbank:
Con_D =
Indexdatenbank(Suchstatus):Dok_Prof_ID
Indexdatei:
Con_D =
Pfad Indexdatei
Indexdatenbank/-datei(Suchstatus)
DS_ID | Dok_Prof_ID | title | abstract | contents | date | price | author | text_size | Dok_type | Dok_V | (Dok_Kl)
xxxx | xxx | xxx | xxx | xxx | xxx | xxx | xxx | xxx | xxx | xxx | xxx

Fig.78

Fig.79

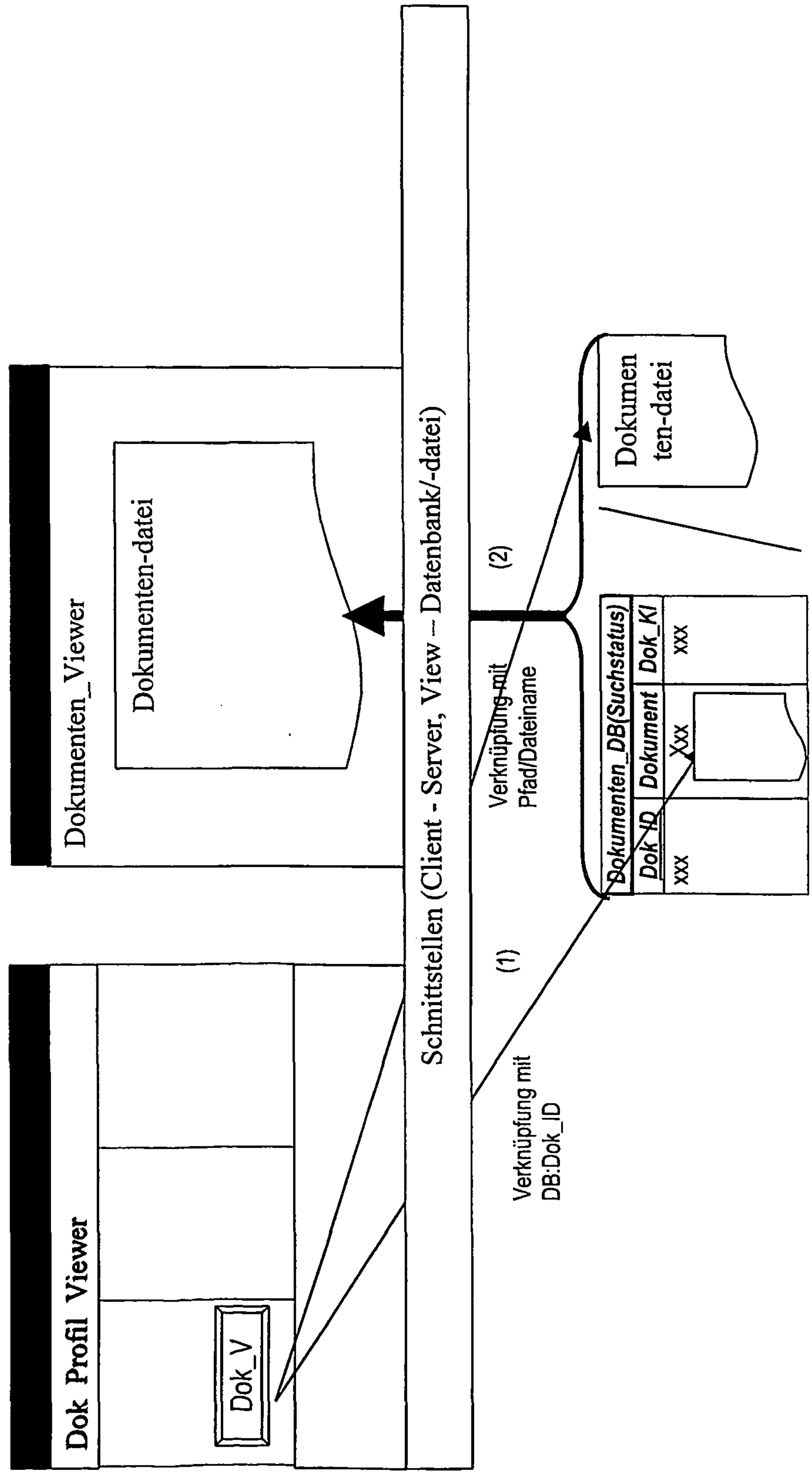

Dok Profil Viewer
Dok_V
Dokumenten_Viewer
Dokumenten-datei
Schnittstellen (Client - Server, View – Datenbank/-datei)
(1)
(2)
Verknüpfung mit DB:Dok_ID
Verknüpfung mit Pfad/Dateiname
Dokumenten_DB(Suchstatus)
Dok_ID
Dokument
Dok_Kl
xxx
Xxx
xxx
Dokumen ten-datei

Fig. 80

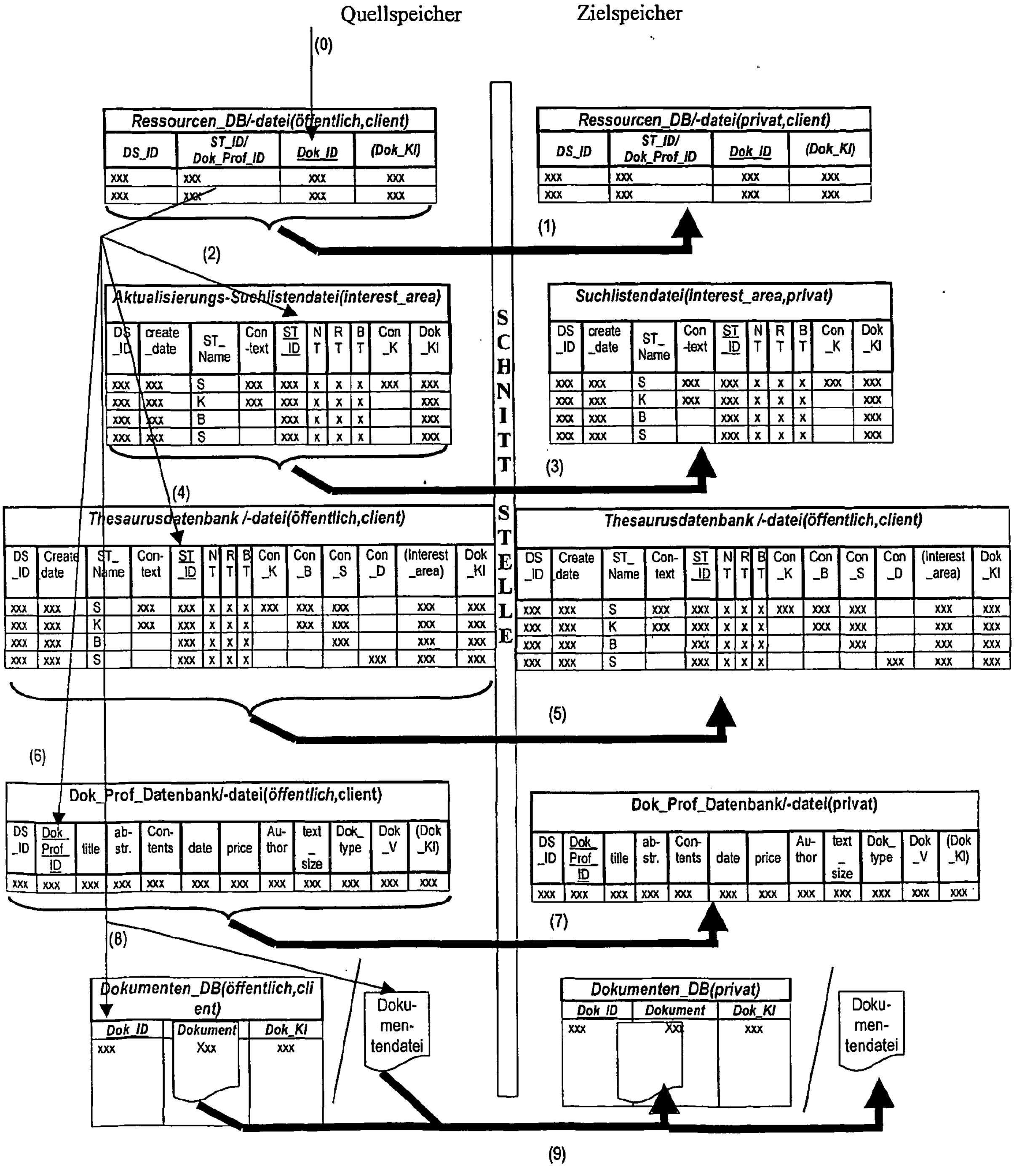

Quellspeicher
Zielspeicher
(0)
Ressourcen_DB/-datei(öffentlich,client)
DS_ID
ST_ID/ Dok_Prof_ID
Dok_ID
(Dok_KI)
Ressourcen_DB/-datei(privat,client)
(1)
(2)
Aktualisierungs-Suchlistendatei(interest_area)
Suchlistendatei(interest_area,privat)
DS_ID
create_date
ST_Name
Con-text
ST_ID
NT
RT
BT
Con_K
Dok_KI
(3)
(4)
SCHNITTSTELLE
Thesaurusdatenbank /-datei(öffentlich,client)
Thesaurusdatenbank /-datei(öffentlich,client)
Create date
Con_B
Con_S
Con_D
(Interest_area)
(5)
(6)
Dok_Prof_Datenbank/-datei(öffentlich,client)
Dok_Prof_Datenbank/-datei(privat)
Dok_Prof_ID
title
ab-str.
Con-tents
date
price
Au-thor
text_size
Dok_type
Dok_V
(Dok_KI)
(7)
(8)
Dokumenten_DB(öffentlich,client)
Dokumenten_DB(privat)
Dok_ID
Dokument
Dok_KI
Doku-men-tendatei
(9)

Fig. 81

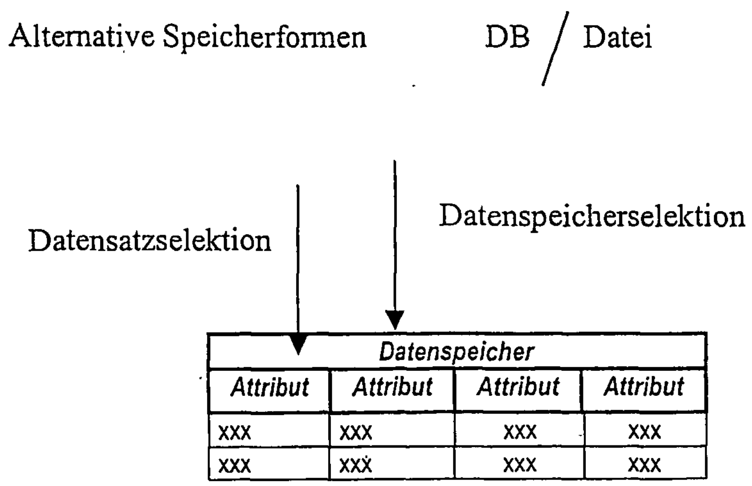


| Datenspeicher | | | |
|---|---|---|---|
| *Attribut* | *Attribut* | *Attribut* | *Attribut* |
| xxx | xxx | xxx | xxx |
| xxx | xxx | xxx | xxx |

Fig. 82

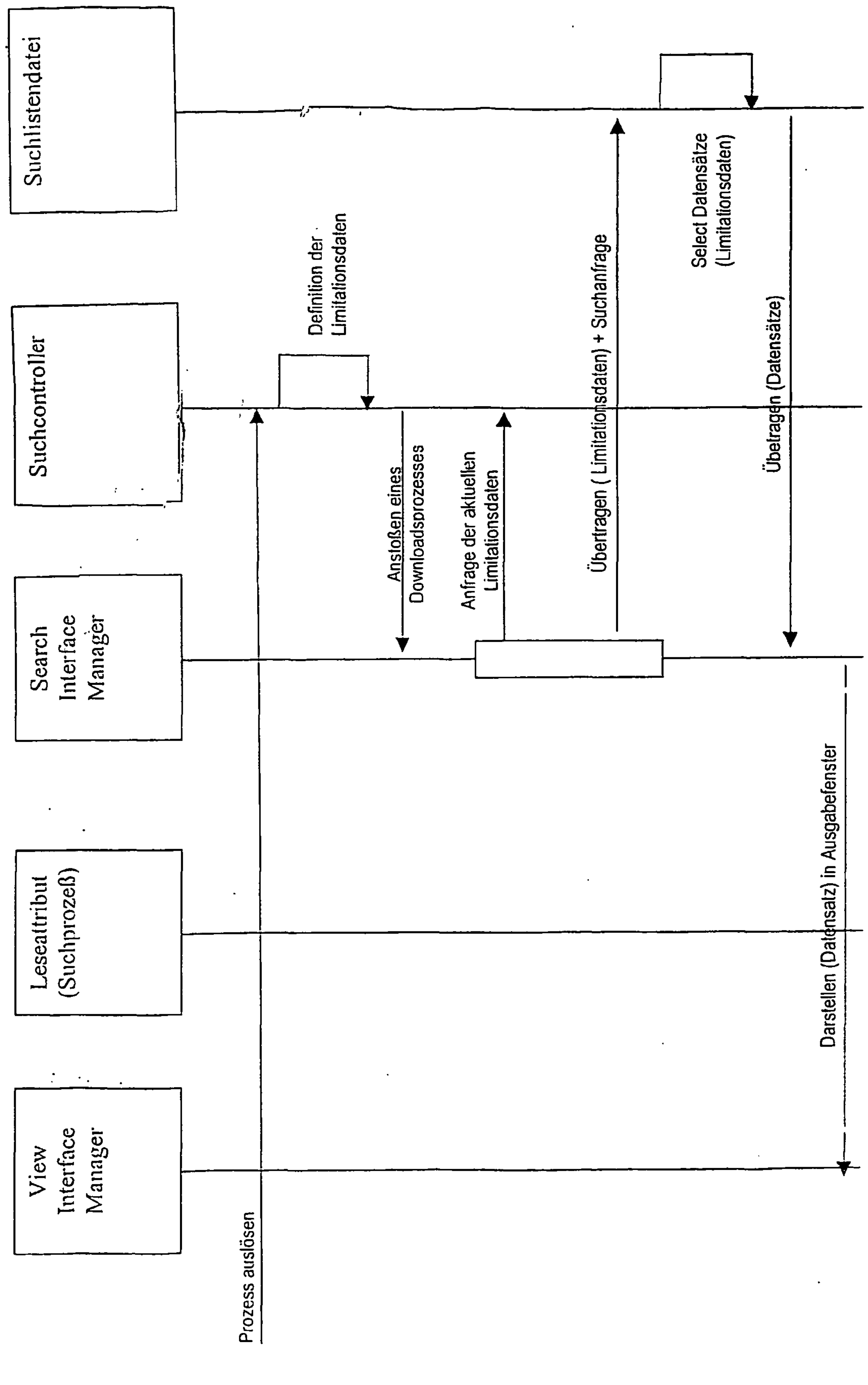
Suchlistendatei
Suchcontroller
Search Interface Manager
Leseattribut (Suchprozeß)
View Interface Manager
Prozess auslösen
Definition der Limitationsdaten
Anstoßen eines Downloadsprozesses
Anfrage der aktuellen Limitationsdaten
Übertragen ( Limitationsdaten) + Suchanfrage
Select Datensätze (Limitationsdaten)
Übertragen (Datensätze)
Darstellen (Datensatz) in Ausgabefenster

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5297039 A
- EP 0601759 A